# EUROPÄISCHE PATENTSCHRIFT

(11) **EP 3 736 219 B1**
(45) Veröffentlichungstag und Bekanntmachung des Hinweises auf die Patenterteilung: **06.12.2023**
(21) Anmeldenummer: 20177476.7
(22) Anmeldetag: 05.10.2018
(51) Int. Cl.: B65B 69/00

(54) **AUSKLAPPVORRICHTUNG, ENTSPRECHENDES VERFAHREN UND SYSTEM**
APPARATUS FOR FOLDING OUT, CORRESPONDING METHOD AND SYSTEM
DISPOSITIF DE DÉPLIAGE, MÉTHODE ET SYSTÈME CORRESPONDANTE

(30) Priorität: 06.10.2017 DE 102017123298; 09.10.2017 DE 102017123387
(43) Veröffentlichungstag der Anmeldung: 11.11.2020
(62) Teilanmeldung aus: 18198880.9
(73) Patentinhaber: GRONINGER & CO. GMBH, D-74564 Crailsheim (DE)
(72) Erfinder: Franke, Bernd, 74599 Wallhausen (DE); Veile, Josef, 73463 Westhausen (DE)
(74) Vertreter: Witte, Weller & Partner Patentanwälte mbB

(56) Entgegenhaltungen:
- WO-A1-97/29956
- DE-A1-102007 027 878
- DE-A1-102009 002 441
- DE-A1-102014 201 966
- DE-U1-202009 005 086

## Beschreibung

Die vorliegende Erfindung betrifft eine Ausklappvorrichtung zum Ausklappen eines Verpackungsabschnitts einer Verpackung, insbesondere eines Beutels, für ein Objekt, insbesondere ein pharmazeutisches oder kosmetisches Objekt. Des Weiteren betrifft die vorliegende Erfindung ein Entpackungssystem, das eine Ausklappvorrichtung und eine Streckvorrichtung aufweist. Des Weiteren betrifft die vorliegende Erfindung eine Füllanlage mit einem Entpackungssystem. Des Weiteren betrifft die vorliegende Erfindung ein Verfahren zum Ausklappen eines Verpackungsabschnitts einer Verpackung, insbesondere eines Beutels, für ein Objekt, insbesondere ein pharmazeutisches oder kosmetisches Objekt. Des Weiteren betrifft die vorliegende Erfindung ein Verfahren zum Entpacken eines Objekts aus einer Verpackung.

Füllanlagen mit Entpackungssystemen zum Entpacken von Objekten, insbesondere pharmazeutischen und kosmetischen Objekten, sowie Vorrichtungsanlagen zum Strecken und Abtrennen eines Verpackungsabschnitts sind in dem Stand der Technik bekannt.

Beispielsweise zeigt die Druckschrift WO 2011/012658 A1 eine Öffnungseinrichtung für flexible Verpackungen von Waren, insbesondere Flaschenwaren, wobei die Öffnungseinrichtung eine Positioniereinrichtung für den zu öffnenden Verpackungsbereich, eine Erfassungseinrichtung und eine Trenneinrichtung aufweist. Die Erfassungseinrichtung weist eine Saugeinrichtung und eine Klemmeinrichtung auf. Die Positioniereinrichtung weist einen Schieber und mindestens ein Anschlagelement auf, um das verpackte Stückgut in seiner Position zu fixieren und die Verpackung in eine für den Trennvorgang günstige Position zu bringen. Die Verpackung wird durch die Saugeinrichtung frontseitig erfasst und mit der Klemmeinrichtung fixiert. Die Erfassungseinrichtung wird durch eine Rückwärtsbewegung von dem Anschlag der festgehaltenen Verpackung beabstandet. Dadurch wird der erfasste Verpackungsbereich gegen den Anschlag gezogen und gestrafft, wobei ein Zwickel gebildet wird. Die Trenneinrichtung kann ein Trennwerkzeug, beispielsweise einen Laserkopf, ein Schneidwerkzeug oder ein thermisches Trennverfahren beinhalten. Die Trenneinrichtung trennt den ausgebildeten Zwickel der Verpackung ab, während die Erfassungseinrichtung den Zwickel vorgespannt hält.

Des Weiteren zeigt die Druckschrift DE 10 2007 027 878 A1 eine Vorrichtung und ein Verfahren zum Entnehmen eines sterilen Gegenstands aus einer Sterilverpackung. Die Vorrichtung umfasst dabei eine Transporteinrichtung, eine Klemmeinrichtung, eine Schneideinrichtung, eine Halteeinrichtung und eine Entnahmeeinrichtung. Auf der Transporteinrichtung werden sterile Gegenstände in einer Sterilverpackung transportiert, wobei die Sterilverpackung bezüglich der Transportrichtung an einer Längsseite einen abstehenden Verpackungsabschnitt aufweist. Die Klemmeinrichtung ist seitlich von der Transporteinrichtung angeordnet und ist dazu ausgebildet, den abstehenden Verpackungsabschnitt zu klemmen. Die Klemmeinrichtung weist dazu zwei Klemmrollen auf, die parallel zu der Transporteinrichtung angeordnet sind und die relativ zueinander bewegbar sind. Die Schneideinrichtung ist derart ausgebildet, dass sie den abstehenden und mit der Klemmeinrichtung geklemmten Verpackungsabschnitt parallel zu der Transporteinrichtung teilweise aufschneidet. Dabei wird ein durchgängiger Schlitz in der Sterilverpackung erzeugt. Die Halteeinrichtung hält einen zweiten Teilbereich der Sterilverpackung fest. Die Entnahmeeinrichtung ist dazu ausgebildet, den Gegenstand durch den Schlitz aus der Sterilverpackung zu entnehmen.

Des Weiteren zeigt die Druckschrift DE 20 2009 005086 U1 eine Öffnungseinrichtung für flexible Verpackungen von Waren, insbesondere Flaschenlagen, wobei die Öffnungseinrichtung eine Positioniereinrichtung für den zu öffnenden Verpackungsbereich und eine Trenneinrichtung aufweist, dadurch gekennzeichnet, dass die Erfassungseinrichtung eine Saugeinrichtung und eine Klemmeinrichtung aufweist.

Des Weiteren zeigt die Druckschrift DE 10 2009 002441 A1 eine Vorrichtung und ein Verfahren zum Ausrichten einer Verpackung vorgeschlagen, wobei die Vorrichtung Folgendes umfasst: Eine Vakuumkammer in der ein Vakuum erzeugt wird, so dass sich eine in der Vakuumkammer befindliche Verpackung ausfaltet, sowie zumindest ein Fixiermittel, das die ausgerichtete Verpackung fixiert.

Des Weiteren zeigt die Druckschrift WO 97/29956 A1 Verpackungen für gestapelte Dosendeckel, ein Verfahren zur Herstellung solcher Verpackungen, Vorrichtungen zum Implementieren des Verfahrens, Vorrichtungen zum automatisierten Auspacken von Verpackungen der obigen Art und ein System zum Verpacken und Auspacken von Dosendeckeln. Die Packungen sind mit einem offenen Ende ausgebildet, das dadurch geschlossen ist, dass das Beutelende im entfalteten Zustand zusammengedrückt wird und mit Befestigungsmitteln versehen ist, die den geschlossenen Zustand halten. Zusätzlich schließt die Schließvorrichtung das offene Verpackungsende durch Zusammendrücken des Beutelendes im entfalteten Zustand und in diesem Fall werden Befestigungsmittel angewendet, die den geschlossenen Zustand halten, und die Auspackvorrichtung bewirkt eine Relativbewegung der Verpackungen und der enthaltenen Dosendeckel darin derart, dass die Dosendeckel gegen das mittels der Befestigungsmittel verschlossene Packungsende gedrückt werden.

Abhängig von der Einbausituation des Entpackungssystems kommt es in der Praxis jedoch häufig vor, dass nur ein begrenzter Bauraum für das Entpackungssystem zur Verfügung steht.

Es ist daher eine Aufgabe der vorliegenden Erfindung, ein verbessertes Entpackungssystem zum Entpacken von Objekten, insbesondere pharmazeutischen oder kosmetischen Objekten, insbesondere für eine Füllanlage, und ein verbessertes Verfahren zum Entpacken bereitzustellen. Des Weiteren besteht ein Bedarf an einer Ausklappvorrichtung zum Ausklappen eines Verpackungsabschnitts einer Verpackung, insbesondere eines Beutels, für ein Objekt, insbesondere ein pharmazeutisches oder kosmetisches Objekt, und an einem Verfahren zum Ausklappen.

Gemäß einem ersten Beispiel, das nicht unter den beanspruchten Gegenstand fällt, wird eine Streckvorrichtung zum Strecken einer Verpackung, insbesondere eines Beutels, für ein Objekt, insbesondere ein pharmazeutisches oder kosmetisches Objekt, vorgeschlagen, wobei die Verpackung einen abstehenden Verpackungsabschnitt aufweist. Die Streckvorrichtung weist eine Transporteinrichtung zum Transportieren des Objekts in einer Transportrichtung, eine Halteeinrichtung zum Halten des abstehenden Verpackungsabschnitts, und eine Bewegungseinrichtung zum Bewegen des Objekts auf. Die Halteeinrichtung weist mindestens zwei senkrecht zu der Transportrichtung angeordnete Rollen auf, die dazu ausgebildet sind, den abstehenden Verpackungsabschnitt zwischen sich zu halten. Die Bewegungseinrichtung und/oder die Halteeinrichtung sind parallel zu der Transportrichtung bewegbar ausgebildet, um das Objekt und die Halteeinrichtung voneinander weg zu bewegen.

Gemäß einem zweiten Beispiel, das nicht unter den beanspruchten Gegenstand fällt, wird ein Verfahren zum Strecken einer Verpackung, insbesondere eines Beutels, für ein Objekt, insbesondere ein pharmazeutisches oder kosmetisches Objekt, vorgeschlagen, wobei die Verpackung einen abstehenden Verpackungsabschnitt aufweist, wobei das Objekt auf einer Transporteinrichtung in einer Transportrichtung transportiert wird. Das Verfahren weist dabei die folgenden Verfahrensschritte auf:
- Halten des abstehenden Verpackungsabschnitts durch eine Halteeinrichtung, wobei die Halteeinrichtung mindestens zwei senkrecht zu der Transportrichtung angeordnete Rollen aufweist, wobei der abstehende Verpackungsabschnitt zwischen den mindestens zwei Rollen gehalten wird; und
- Bewegen des Objekts und/oder der Halteeinrichtung parallel zu der Transportrichtung, um das Objekt und die Halteeinrichtung voneinander weg zu bewegen.

Das Objekt wird auf der Transporteinrichtung transportiert. Die Transportrichtung des Objekts entspricht der Bewegungsrichtung des Objekts auf der Transporteinrichtung. Damit sind die Begriffe "stromaufwärtig" und "stromabwärtig" bezüglich der Transportrichtung zu verstehen.

Die Begriffe "Längsseite" und "Stirnseite" sind ebenfalls bezüglich der Transportrichtung zu verstehen. Dabei ist eine "Längsseite" im Wesentlichen parallel zu der Transportrichtung angeordnet. Eine Stirnseite ist hingegen im Wesentlichen senkrecht zu der Transportrichtung angeordnet.

Die räumliche Anordnung von Elementen wird im Folgenden relativ zu der Transporteinrichtung und der auf der Transporteinrichtung transportierten Verpackung bzw. dem auf der Transporteinrichtung transportierten Objekt angegeben. Die Verpackung weist eine der Transporteinrichtung zugewandte Längsseite und eine der Transporteinrichtung abgewandte Längsseite auf. Ebenso weist die Transporteinrichtung eine der Verpackung/dem Objekt zugewandte Seite und eine der Verpackung/dem Objekt abgewandte Seite auf. Demnach können Elemente auf der der Verpackung/dem Objekt zugewandten Seite oder auf der der Verpackung/dem Objekt abgewandten Seite der Transporteinrichtung angeordnet sein.

Dadurch, dass der abstehende Verpackungsabschnitt an einer Stirnseite der Verpackung mittels einer Halteeinrichtung gehalten wird und die Verpackung in eine von der Halteeinrichtung wegweisende Richtung bewegt wird, wird die Verpackung an der Stirnseite gestreckt. Da die Rollen senkrecht zu der Transportrichtung angeordnet sind, erfassen sie einen Teil des Verpackungsabschnittes der an einer Stirnseite der Verpackung angeordnet ist. Dadurch wird die Verpackung parallel zu der Transportrichtung und an der Stirnseite der Verpackung gestreckt.

Durch das Strecken parallel zu der Transportrichtung wird deutlich weniger Platz seitlich von der Transporteinrichtung benötigt, da der Streckvorgang über der Transporteinrichtung erfolgt. Lediglich einzelne Komponenten der Bewegungseinrichtung oder der Halteeinrichtung können seitlich von der Transporteinrichtung angeordnet sein. Vorzugsweise ist ein Großteil dieser Komponenten aber auf der dem Objekt abgewandten oder zugewandten Seite der Transporteinrichtung angeordnet.

Des Weiteren können durch das Strecken parallel zu der Transportrichtung nachfolgende Vorrichtungen eines Entpackungssystems, wie beispielsweise eine Abtrennvorrichtung zum Abtrennen des gestreckten Verpackungsabschnitts und eine Entnahmevorrichtung zum Entnehmen des Objekts aus der Verpackung, ebenfalls in der Transportrichtung angeordnet sein, ohne dass ein zusätzliches Umpositionieren des eingepackten Objekts erforderlich ist.

Gemäß einem ersten Aspekt der Erfindung wird eine Ausklappvorrichtung zum Ausklappen eines eingeklappten Verpackungsabschnitts einer Verpackung, insbesondere eines Beutels, für ein Objekt, insbesondere ein pharmazeutisches oder kosmetisches Objekt, vorgeschlagen. Die Ausklappvorrichtung weist eine Transporteinrichtung zum Transportieren des Objekts in einer Transportrichtung, eine Hebeeinrichtung zum Anheben des Objekts, eine Halteeinrichtung zum Halten eines dem Verpackungsabschnitt benachbarten Bereichs der Verpackung, und eine Halteeinrichtung-Antriebseinrichtung zum Bewegen der Halteeinrichtung in eine von dem Verpackungsabschnitt weg weisende Richtung auf, wobei der eingeklappte Verpackungsabschnitt an einer Stirnseite der Verpackung angeordnet ist und sich auf eine der Transporteinrichtung zugewandte oder abgewandte Längsseite erstreckt, wobei die Halteeinrichtung parallel zu der Transportrichtung bewegbar ist, um den Verpackungsabschnitt auszuklappen, wobei die Halteeinrichtung-Antriebseinrichtung dazu ausgebildet ist, die Halteeinrichtung parallel zu der Transportrichtung zu bewegen.

Gemäß einem zweiten Aspekt der Erfindung wird ein Verfahren zum Ausklappen eines eingeklappten Verpackungsabschnitts einer Verpackung, insbesondere eines Beutels, für ein Objekt, insbesondere ein pharmazeutisches oder kosmetisches Objekt, vorgeschlagen, wobei das Objekt auf einer Transporteinrichtung in einer Transportrichtung transportiert wird. Das Verfahren weist dabei die folgenden Verfahrensschritte auf:
- Anheben des Objekts durch eine Hebeeinrichtung;
- Halten eines dem Verpackungsabschnitt benachbarten Bereichs der Verpackung durch eine Halteeinrichtung, wobei der eingeklappte Verpackungsabschnitt (16) an einer Stirnseite (28', 28") der Verpackung (12) angeordnet ist und sich auf eine der Transporteinrichtung (18) zugewandte oder abgewandte Längsseite (30', 30‴) erstreckt; und
- Bewegen der Halteeinrichtung in eine von dem Verpackungsabschnitt weg weisende Richtung, wobei die Halteeinrichtung (64) parallel zu der Transportrichtung (20) bewegt wird, wodurch der Verpackungsabschnitt (16) ausgeklappt wird.

Der Verpackungsabschnitt ist an einer Seite mit der Verpackung an einer Verbundstelle verbunden und erstreckt sich entlang der Verpackung von der Verbundstelle ausgehend bis zu einem Bereich an der der Transporteinrichtung zugewandten oder abgewandten Längsseite der Verpackung. Der dem Verpackungsabschnitt benachbarte Bereich ist als solcher Bereich der Verpackung zu verstehen, der an die Verbundstelle des Verpackungsabschnittes mit der Verpackung angrenzt und sich von dem Verpackungsabschnitt weg erstreckt.

Beispielsweise kann der Verpackungsabschnitt zunächst teilweise zwischen der der Transporteinrichtung zugewandten Längsseite und der der Verpackung zugewandten Seite der Transporteinrichtung angeordnet sein und ist dadurch zwischen der Transporteinrichtung und der Verpackung eingeklappt. Die Verbundstelle kann dabei an einer Stirnseite der Verpackung angeordnet sein. Der Verpackungsabschnitt kann sich dann von der Verbundstelle zur Transporteinrichtung hin bis zwischen die Transporteinrichtung und die der Transporteinrichtung zugewandte Längsseite der Verpackung erstrecken. In diesem Fall entspricht ein Bereich der Stirnseite, der auf der von der Transporteinrichtung wegweisenden Seite der Verbundstelle gelegen ist, und ein Bereich der der Transporteinrichtung abgewandten Längsseite einem Bereich der Verpackung, der dem Verpackungsabschnitt benachbart ist. Des Weiteren kann die Verbundstelle auch an der Kante zwischen einer Stirnseite und der der Transporteinrichtung zugewandten Längsseite angeordnet sein. In diesem Fall entspricht die Stirnseite einem dem Verpackungsabschnitt benachbarten Bereich. Des Weiteren kann die Verbundstelle auch an der Kante zwischen einer Stirnseite und der der Transporteinrichtung abgewandten Längsseite angeordnet sein. In diesem Fall entspricht die der Transporteinrichtung abgewandte Längsseite einem dem Verpackungsabschnitt benachbarten Bereich. Des Weiteren kann die Verbundstelle auch an der der Transporteinrichtung abgewandten oder der der Transporteinrichtung zugewandten Längsseite angeordnet sein. Der entsprechende benachbarte Bereich entspricht dann dem Bereich der Verpackung, der sich von der Verbundstelle von dem Verpackungsabschnitt weg erstreckt.

Wird nun der dem Verpackungsabschnitt benachbarte Bereich von dem Verpackungsabschnitt, insbesondere von der Verbundstelle zwischen Verpackungsabschnitt und Verpackung, wegbewegt oder weggezogen, so wird auf den Verpackungsabschnitt über die Verbundstelle eine Zugkraft ausgeübt. Durch diese Zugkraft wird der Verpackungsabschnitt aus seiner eingeklappten Lage zwischen der der Transporteinrichtung zugewandten Längsseite der Verpackung und der Transporteinrichtung herausgezogen und somit ausgeklappt. Der benachbarte Bereich kann dabei soweit gezogen werden, bis der Verpackungsabschnitt vollständig ausgeklappt ist und in einer gewünschten Lage angeordnet ist. Der Verpackungsabschnitt erstreckt sich in der gewünschten Lage vorzugsweise parallel zu der Transporteinrichtung, insbesondere parallel zu der Transportrichtung, und weg von der Verpackung, insbesondere von der Verbundstelle.

In einer alternativen Ausführungsform ist der Verpackungsabschnitt zunächst teilweise auf die der Transporteinrichtung abgewandte Längsseite der Verpackung eingeklappt. Dabei . kann die Verbundstelle an einer Stirnseite der Verpackung angeordnet sein. Der Verpackungsabschnitt kann sich dann von der Verbundstelle von der Transporteinrichtung weg bis auf die der Transporteinrichtung abgewandte Längsseite der Verpackung erstrecken. Entsprechend ist der benachbarte Bereich auf der der Transporteinrichtung zugewandten Seite der Verbundstelle angeordnet. Durch ziehen des benachbarten Bereichs weg von der Verbundstelle kann somit der eingeklappte Verpackungsabschnitt ebenfalls ausgeklappt werden.

Durch das Ausklappen des Verpackungsabschnittes werden nachfolgende Schritte in dem Entpackungsverfaren bzw. das Handhaben der Verpackung an nachfolgenden Vorrichtungen zum Strecken und/oder Abtrennen des Verpackungsabschnittes deutlich vereinfacht. Eine Streckvorrichtung kann beispielsweise den Verpackungsabschnitt einfacher fassen und Strecken.

Gemäß einem dritten Aspekt der Erfindung wird eine Ausklappvorrichtung zum Ausklappen eines eingeklappten Verpackungsabschnitts einer Verpackung, insbesondere eines Beutels, für ein Objekt, insbesondere ein pharmazeutisches oder kosmetisches Objekt, vorgeschlagen. Die Ausklappvorrichtung weist eine Transporteinrichtung zum transportieren des Objekts in einer Transportrichtung, eine Hebeeinrichtung zum Anheben des Objekts, und eine Anschlageinrichtung auf. Der eingeklappte Verpackungsabschnitt ist an einer Stirnseite der Verpackung angeordnet und erstreckt sich auf eine der Transporteinrichtung zugewandte oder abgewandte Längsseite. Die Anschlageinrichtung weist mindestens eine senkrecht zu der Transportrichtung angeordnete Rolle auf, die auf der der Transporteinrichtung abgewandten oder zugewandten Längsseite der Verpackung angeordnet ist und einen Anschlag für den eingeklappten Verpackungsabschnitt bildet. Die Hebeeinrichtung und/oder die Anschlageinrichtung sind parallel zu der Transportrichtung bewegbar ausgebildet, um das Objekt und die Anschlageinrichtung relativ zueinander zu bewegen.

Gemäß einem vierten Aspekt der Erfindung wird ein Verfahren zum Ausklappen eines eingeklappten Verpackungsabschnitts einer Verpackung, insbesondere eines Beutels, für ein Objekt, insbesondere ein pharmazeutisches oder kosmetisches Objekt, vorgeschlagen, wobei das Objekt auf einer Transporteinrichtung in einer Transportrichtung transportiert wird. Das Verfahren weist dabei die folgenden Verfahrensschritte auf:
- Anheben des Objekts durch eine Hebeeinrichtung;
- erstes relatives Bewegen der Hebeeinrichtung und einer Anschlageinrichtung parallel zu der Transportrichtung derart zueinander, dass die Verpackung zumindest abschnittsweise an der Anschlageinrichtung angeordnet wird, wobei der eingeklappte Verpackungsabschnitt an einer Stirnseite der Verpackung angeordnet ist und sich auf eine der Transporteinrichtung zugewandte oder abgewandte Längsseite erstreckt, wobei eine Rolle der Anschlageinrichtung an die der Transporteinrichtung abgewandte oder zugewandte Längsseite der Verpackung angeordnet wird, um einen Anschlag für den Verpackungsabschnitts zu bilden; und
- zweites Relatives Bewegen der Hebeeinrichtung und der Anschlageinrichtung parallel zu der Transportrichtung derart zueinander, dass der eingeklappte Verpackungsabschnitt ausgeklappt wird.

Durch das Ausklappen des Verpackungsabschnittes werden nachfolgende Schritte in dem Entpackungsverfaren bzw. das Handhaben der Verpackung an nachfolgenden Vorrichtungen zum Strecken und/oder Abtrennen des Verpackungsabschnittes deutlich vereinfacht. Eine Streckvorrichtung kann beispielsweise den Verpackungsabschnitt einfacher fassen und Strecken.

Gemäß einem fünften Aspekt der Erfindung wird ein Entpackungssystem mit einer Streckvorrichtung gemäß dem ersten Beispiel oder einer seiner Ausgestaltungen und mit einer Ausklappvorrichtung gemäß dem ersten oder dritten Aspekt der Erfindung oder einer seiner Ausgestaltungen vorgeschlagen.

Gemäß einem sechsten Aspekt der Erfindung wird ein Verfahren zum Entpacken eines Objekts, insbesondere eines pharmazeutischen oder kosmetischen Objekts, aus einer Verpackung, insbesondere einem Beutel, vorgeschlagen, wobei das Objekt auf einer Transporteinrichtung in einer Transportrichtung transportiert wird, wobei ein Verpackungsabschnitt der Verpackung zunächst zwischen der Transporteinrichtung und der

Verpackung eingeklappt ist. Das Verfahren weist dabei die folgenden Verfahrensschritte auf:
- Ausklappen des Verpackungsabschnitts mittels des Verfahrens gemäß dem zweiten oder dem vierten Aspekt der Erfindung oder einer seiner Ausgestaltungen;
- Strecken des abstehenden Verpackungsabschnitts mittels des Verfahrens gemäß dem zweiten Beispiel oder einer seiner Ausgestaltungen;
- Vollständiges Abtrennen des abstehenden Verpackungsabschnitts; und
- Entnehmen des Objekts aus der Verpackung.

Bei dem beschriebenen Entpackungssystem und bei dem beschriebenen Verfahren zum Entpacken wird ein Verpackungsabschnitt, der zunächst eingeklappt ist, ausgeklappt und anschließend gestreckt. Die einzelnen Komponenten der Streckvorrichtung und der Ausklappvorrichtung sind dabei kompakt und platzsparend angeordnet. Durch das Strecken des Verpackungsabschnittes parallel zu der Transportrichtung wird eine kompakte Anordnung der nachfolgenden Handhabungsvorrichtungen, wie beispielsweise einer Abtrennvorrichtung und/oder einer Entnahmeeinrichtung ermöglicht.

Gemäß einem dritten Beispiel, das nicht unter den beanspruchten Gegenstand fällt, wird ein Entpackungssystem zum Entpacken einer Verpackung, insbesondere eines Beutels, für ein Objekt, insbesondere ein pharmazeutisches oder kosmetisches Objekt, vorgeschlagen, wobei die Verpackung einen abstehenden, eingeklappten Verpackungsabschnitt aufweist. Das Entpackungssystem weist eine Transporteinrichtung zum Transportieren des Objekts in einer Transportrichtung und eine Halteeinrichtung zum Halten des abstehenden Verpackungsabschnitts auf. Die Halteeinrichtung weist mindestens zwei senkrecht zu der Transportrichtung angeordnete Rollen auf, die parallel zueinander angeordnet sind. Die Rollen sind dazu ausgebildet, den abstehenden Verpackungsabschnitt auszuklappen, wobei der Verpackungsabschnitt an einer stromaufwärtigen Stirnseite der Verpackung angeordnet ist und sich auf eine der Transporteinrichtung zugewandte oder abgewandte Längsseite erstreckt, wobei die Rollen an die der Transporteinrichtung zugewandte Längsseite der Verpackung und an die der Transporteinrichtung abgewandte Längsseite der Verpackung anlegbar sind, um einen Anschlag für den abstehenden Verpackungsabschnitt derart zu bilden, dass der abstehenden Verpackungsabschnitt ausgeklappt wird.

Gemäß einem vierten Beispiel, das nicht unter den beanspruchten Gegenstand fällt, wird Verfahren zum Entpacken eines Objekts, insbesondere eines pharmazeutischen oder kosmetischen Objekts, aus einer Verpackung (12), insbesondere einem Beutel, wobei das Objekt (14) auf einer Transporteinrichtung (18) in einer Transportrichtung (20) transportiert wird, wobei die Verpackung (12) einen abstehenden, eingeklappten Verpackungsabschnitt (16) aufweist, der an einer stromaufwärtigen Stirnseite (28") der Verpackung (12) angeordnet ist und sich auf eine der Transporteinrichtung (18) zugewandte oder abgewandte Längsseite (30', 30‴) erstreckt. Das Verfahren (200) weist dabei die folgenden Verfahrensschritte auf:
- Anlegen zweier Rollen, die senkrecht zu der Transportrichtung und parallel zueinander angeordnet sind, an die der Transporteinrichtung zugewandte Längsseite der Verpackung und an die der Transporteinrichtung abgewandte Längsseite der Verpackung, um einen Anschlag für den abstehenden Verpackungsabschnitt derart zu bilden, dass der abstehenden Verpackungsabschnitt ausgeklappt wird;
- Halten des abstehenden Verpackungsabschnitts zwischen den zwei Rollen, um den abstehenden Verpackungsabschnitt zu strecken;
- Abtrennen des abstehenden Verpackungsabschnitts; und
- Entnehmen des Objekts aus der Verpackung.

Bei einem solchen Entpackungssystem und Verfahren zum Entpacken wird keine Hebeeinrichtung oder Bewegungseinrichtung benötigt. Stattdessen werden die verpackten Objekte auf der Transporteinrichtung weiter bewegt, insbesondere mit gleichbleibender Geschwindigkeit. Damit stellen dieses Entpackungssystem und das Verfahren zum Entpacken eine besonders platzsparende Lösung dar, da deutlich weniger Komponenten benötigt werden.

Bei diesem Verfahren ist es allerdings zwangsläufig notwendig, dass der abstehende Verpackungsabschnitt an einer stromaufwärtigen Stirnseite der Verpackung angeordnet ist.

Gemäß einem siebten Aspekt der Erfindung wird eine Füllanlage mit einem Entpackungssystem gemäß dem fünften Aspekt der Erfindung oder einer seiner Ausgestaltungen vorgeschlagen.

Die verpackten Objekte müssen vor der Weiterverarbeitung, beispielsweise dem Abfüllen oder Umfüllen in einer Füllstation, entpackt werden. Das beschriebene Entpackungssystem stellt dafür eine einfache und kompakte Lösung bereit, die auch auf engem Bauraum umsetzbar ist.

Die eingangs gestellte Aufgabe wird daher vollkommen gelöst.

In einer Ausgestaltung der Streckvorrichtung kann vorgesehen sein, dass der abstehende Verpackungsabschnitt bezüglich der Transportrichtung an einer der Stirnseiten der Verpackung angeordnet ist, insbesondere wobei der Verpackungsabschnitt bezüglich der Transportrichtung an einer stromabwärtigen Stirnseite angeordnet ist.

Durch die stirnseitige Anordnung des abstehenden Verpackungsabschnitts kann vermieden werden, dass der abstehende Verpackungsabschnitt seitlich über die Breite der Transporteinrichtung hinausragt. Dadurch wird insbesondere vermieden, dass der abstehende Verpackungsabschnitt an Baukomponenten oder Objekten, die seitlich der Transporteinrichtung angeordnet sind, hängen bleibt.

In einer weiteren Ausgestaltung der Streckvorrichtung kann vorgesehen sein, dass der abstehende Verpackungsabschnitt im Wesentlichen parallel zu der Transportrichtung von der Verpackung absteht.

Dadurch wird das Aufnehmen des abstehenden Verpackungsabschnitts zwischen den Seitenrollen der Halteeinrichtung erleichtert.

In einer weiteren Ausgestaltung der Streckvorrichtung kann vorgesehen sein, dass die Bewegungseinrichtung so ausgebildet ist, dass sie die Verpackung an mindestens einer Längsseite hält.

Dazu kann das Objekt beispielsweise mit seiner der Transporteinrichtung zugewandten Längsseite mit der Bewegungseinrichtung in Kontakt sein, insbesondere auf der Bewegungseinrichtung angeordnet sein. Bei ausreichend großem Geweicht des Objekts reicht die Haftreibung aus, um das Objekt mit der Verpackung zum Strecken von der Halteeinrichtung, die den Verpackungsabschnitt hält, wegzubewegen, ohne dass die Verpackung die Haftreibung überwindet und die ausgeübte Zugkraft verringert wird, beispielsweise durch Rutschen auf der Bewegungseinrichtung, oder komplett gestoppt wird, beispielweise wenn das Objekt die Bewegungseinrichtung verlässt, insbesondere wenn das Objekt von der Bewegungseinrichtung herunterfällt. Des Weiteren kann die Bewegungseinrichtung das Objekt an zwei oder mehr Seiten halten, beispielswiese durch eine Klemmkraft, die auf zwei gegenüberliegende Längsseiten ausgeübt wird. Die Klemmkraft ist dabei ausreichend groß zu wählen, um die Verpackung zu strecken.

In einer weiteren Ausgestaltung der Streckvorrichtung kann vorgesehen sein, dass die Bewegungseinrichtung auf der der Verpackung abgewandten Seite der Transporteinrichtung angeordnet ist.

Durch eine Anordnung auf der der Verpackung abgewandten Seite der Transporteinrichtung wird der Platzbedarf der Streckvorrichtung seitlich von der Transporteinrichtung verringert.

In einer weiteren Ausgestaltung der Streckvorrichtung kann vorgesehen sein, dass die Bewegungseinrichtung mindestens eine Klemmeinrichtung oder Saugeinrichtung zum Halten der Verpackung aufweist.

Durch die Klemmeinrichtung oder die Saugeinrichtung wird die Verpackung auf der Bewegungseinrichtung fixiert. Während des Streckens der Verpackung wirken Kräfte, die im Wesentlichen parallel zu der Transportrichtung gerichtet sind. Die Klemmeinrichtung oder die Saugeinrichtung sind insbesondere dafür vorgesehen, dass das Objekt in seiner Position auf der Bewegungseinrichtung fixiert bleibt und nicht durch im Streckvorgang auftretende Zugkraft entgegengesetzt zu der Bewegungsrichtung der Bewegungseinrichtung rutschen kann.

Alternativ kann auch vorgesehen sein, dass die Verpackung rei mechanisch durch Reibung auf der Bewegungseinrichtung gehalten wird, das heißt insbesondere auf Grund der Gewichtskraft des Objekts, die die Verpackung an die Transporteinrichtung drückt.

In einer weiteren Ausgestaltung der Streckvorrichtung kann vorgesehen sein, dass die mindestens zwei Rollen parallel zueinander angeordnet sind.

Der abstehende Verpackungsabschnitt ist zum Strecken zwischen den beiden Rollen anzuordnen. Sind die beiden Rollen parallel angeordnet, wird das Platzieren des abstehenden Verpackungsabschnittes zwischen den beiden Rollen vereinfacht.

In einer weiteren Ausgestaltung der Streckvorrichtung kann vorgesehen sein, dass die mindestens zwei Rollen stromabwärts von der Bewegungseinrichtung angeordnet sind, wobei die Bewegungseinrichtung dazu ausgebildet ist, das Objekt entgegengesetzt zu der Transportrichtung und weg von der Halteeinrichtung zu bewegen.

Die Objekte werden in der Regel sowohl im verpackten als auch im entpackten Zustand auf einer Transporteinrichtung in einer Transportrichtung transportiert. Es ist daher von Vorteil, wenn die Objekte in Transportrichtung aus der Verpackung entnommen werden können. Wird nun der abstehende Verpackungsabschnitt in Transportrichtung gestreckt, insbesondere wobei der Verpackungsabschnitt an einer stromabwärtigen Stirnseite der Verpackung angeordnet ist, sind die nachfolgenden Arbeitsschritte wie das Öffnen der Verpackung erleichtert, da dadurch die Verpackung an der stromabwärtigen Stirnseite geöffnet werden kann, ohne dass die Verpackung und das Objekt auf der Transporteinrichtung gedreht werden müssten.

In einer weiteren Ausgestaltung der Streckvorrichtung kann vorgesehen sein, dass die mindestens zwei Rollen drehbar gelagert sind.

Der abstehende Verpackungsabschnitt wird zum Strecken zwischen den mindestens zwei Rollen angeordnet, damit die mindestens zwei Rollen den abstehenden Verpackungsabschnitt halten können. Zum Anordnen wird der abstehende Verpackungsabschnitt zwischen die mindestens zwei Rollen bewegt. Sind die mindestens zwei Rollen nun drehbar gelagert, können die Rollen in der Bewegungsrichtung des abstehenden Verpackungsabschnitts bei dem Anordnen mitdrehen, um das Anordnen des abstehenden Verpackungsabschnittes zwischen den Rollen zu erleichtern.

In einer weiteren Ausgestaltung der Streckvorrichtung kann vorgesehen sein, dass die mindestens zwei Rollen dazu ausgebildet sind, den abstehenden Verpackungsabschnitt zwischen sich einzuziehen.

Kommt der abstehende Verpackungsabschnitt mit den Rollen in Berührung, sind die Rollen dann derart bewegbar, dass sie den Verpackungsabschnitt in die richtige Position zwischen sich befördern. Dadurch wird insbesondere das Anordnen des abstehenden Verpackungsabschnittes zwischen den Rollen weiter vereinfacht.

In einer weiteren Ausgestaltung der Streckvorrichtung kann vorgesehen sein, dass die Halteeinrichtung eine Rollenrotation-Antriebseinrichtung zum Drehen der mindestens zwei Rollen aufweist.

Die Rollenrotation-Antriebseinrichtung kann die Rollen derart antreiben, dass sie den abstehenden Verpackungsabschnitt zwischen sich einziehen. Dadurch wird insbesondere das Anordnen des abstehenden Verpackungsabschnittes zwischen den Rollen weiter vereinfacht.

In einer weiteren Ausgestaltung der Streckvorrichtung kann vorgesehen sein, dass die Rollenrotation-Antriebseinrichtung dazu ausgebildet ist, die mindestens zwei Rollen in entgegengesetzter Laufrichtung zu drehen.

Durch das entgegengesetzte Drehen der Rollen wird das Einziehen des abstehenden Verpackungsabschnittes zwischen den Rollen vereinfacht. Vorzugsweise weist die Halteeinrichtung genau zwei Rollen auf, wobei die genau zwei Rollen von der Rollenrotation-Antriebseinrichtung in entgegengesetzter Laufrichtung angetrieben werden.

In einer weiteren Ausgestaltung der Streckvorrichtung kann vorgesehen sein, dass die mindestens zwei Rollen relativ zueinander bewegbar sind, insbesondere wobei die zwei Rollen dazu ausgebildet sind, den abstehenden Verpackungsabschnitt zwischen sich einzuklemmen.

Durch die relative Bewegung zueinander wird der Abstand zwischen den Rollen variabel einstellbar. Es ist dabei vorteilhaft, wenn bei dem Einführen des abstehenden Verpackungsabschnittes zwischen die Rollen der relative Abstand der Rollen zueinander groß ist. Sobald der abstehende Verpackungsabschnitt zwischen den Rollen angeordnet ist, kann der relative Abstand der Rollen zueinander derart verkleinert werden, dass der abstehende Verpackungsabschnitt zwischen den Rollen eingeklemmt wird.

In einer weiteren Ausgestaltung der Streckvorrichtung kann vorgesehen sein, dass die Halteeinrichtung eine Rollentranslation-Antriebseinrichtung zum Bewegen der mindestens zwei Rollen aufweist.

Die Rollentranslation-Antriebseinrichtung bewegt die Rollen insbesondere relativ zueinander. Die Rollentranslation-Antriebseinrichtung kann also den relativen Abstand der Rollen zueinander beliebig einstellen.

In einer weiteren Ausgestaltung der Ausklappvorrichtung nach dem ersten Aspekt der Erfindung kann vorgesehen sein, dass die Halteeinrichtung so ausgebildet ist, dass sie die Verpackung an einer der Transporteinrichtung abgewandten Längsseite hält.

Der Verpackungsabschnitt ist zunächst zwischen der Transporteinrichtung und einer der Transporteinrichtung zugewandten Längsseite der Verpackung eingeklappt. Greift nun die Halteeinrichtung an der der Transporteinrichtung abgewandten Längsseite die Verpackung an und zieht die Verpackung in eine von dem Verpackungsabschnitt weg weisende Richtung, so wird auf einfache Weise der Verpackungsabschnitt aufgeklappt. Vorzugsweise ist der Verpackungsabschnitt dabei mit dem Rest der Verpackung an einer stromabwärtigen Stirnseite der Verpackung verbunden. Dadurch steht der Verpackungsabschnitt in einem ausgeklappten Zustand von der stromabwärtigen Stirnseite der Verpackung ab. Vorzugsweise hält die Halteeinrichtung die Verpackung in einem stromabwärtigen Bereich der der Transporteinrichtung abgewandten Längsseite der Verpackung. Zum Ausklappen wird dann die Halteeinrichtung zu einem stromaufwärtigen Bereich der der Transporteinrichtung abgewandten Längsseite bewegt.

In einer weiteren Ausgestaltung der Ausklappvorrichtung nach dem ersten Aspekt der Erfindung kann vorgesehen sein, dass die Halteeinrichtung auf der dem Objekt zugewandten Seite der Transporteinrichtung angeordnet ist.

Durch eine Anordnung der Halteeinrichtung auf der dem Objekt zugewandten Seite der Transporteinrichtung wird der Platzbedarf der Ausklappvorrichtung seitlich von der Transporteinrichtung verringert.

In einer weiteren Ausgestaltung der Ausklappvorrichtung nach dem ersten Aspekt der Erfindung kann vorgesehen sein, dass die Halteeinrichtung mindestens eine Klemmeinrichtung oder Saugeinrichtung zum Halten der Verpackung aufweist.

Durch eine Klemmeinrichtung oder eine Saugeinrichtung kann auf einfache Weise realisiert werden, die Verpackung an einem benachbarten Bereich zu halten. Vorzugsweise weist die Halteeinrichtung dabei eine Saugeinrichtung auf.

In einer weiteren Ausgestaltung der Ausklappvorrichtung nach dem ersten Aspekt der Erfindung kann vorgesehen sein, dass die Halteeinrichtung parallel zu der Transportrichtung bewegbar ist, insbesondere um den Verpackungsabschnitt auszuklappen, insbesondere wobei die Halteeinrichtung-Antriebseinrichtung (68) dazu ausgebildet ist, die Halteeinrichtung parallel, insbesondere entgegengesetzt, zu der Transportrichtung (20) zu bewegen.

Ist der Verpackungsabschnitt an einer der Stirnseiten der Verpackung angeordnet und von dem Verbindungspunkt an der Stirnseite ausgehend zwischen der Transporteinrichtung und der der Transporteinrichtung zugewandten Längsseite eingeklappt, so ist eine Zugkraft in oder entgegen der Transportrichtung, d.h. parallel zu der Transportrichtung, die an der der Transporteinrichtung abgewandten Längsseite angreift, erforderlich, um den Verpackungsabschnitt auszuklappen.

In einer weiteren Ausgestaltung der Ausklappvorrichtung nach dem ersten und dritten Aspekt der Erfindung kann vorgesehen sein, dass die Hebeeinrichtung auf der der Verpackung abgewandten Seite der Transporteinrichtung angeordnet ist.

Dadurch muss die Hebeeinrichtung lediglich so ausgestaltet sein, dass sie das Objekt samt Verpackung an der der Transporteinrichtung zugewandten Längsseite angreift und anhebt. Ein Klemmen, Greifen oder Halten der Verpackung und des Objekts kann von dabei von Vorteil sein, ist aber nicht zwingend erforderlich, wenn die Haftreibung zwischen Verpackung und Hebeeinrichtung groß genug ist. Des Weiteren ist bei einer solchen Anordnung der Hebeeinrichtung auf der der Verpackung abgewandten Seite der Transporteinrichtung der Platzbedarf seitlich der Transporteinrichtung verringert.

In einer weiteren Ausgestaltung der Ausklappvorrichtung nach dem ersten und dritten Aspekt der Erfindung kann vorgesehen sein, dass eine Transportebene der Transporteinrichtung mindestens eine Aussparung aufweist, wobei die Hebeeinrichtung dazu ausgebildet ist, durch die Aussparung hindurchzugreifen, um das Objekt anzuheben.

Dadurch wird auf einfache und kompakte Weise realisiert, wie eine Hebeeinrichtung, die auf der der Verpackung abgewandten Seite der Transportrichtung angeordnet ist, die Verpackung und das Objekt an der der Transporteinrichtung zugewandten Längsseite angreifen kann.

In einer weiteren Ausgestaltung der Ausklappvorrichtung nach dem ersten und dritten Aspekt der Erfindung kann vorgesehen sein, dass die Hebeeinrichtung dazu ausgebildet ist, die Transporteinrichtung, insbesondere eine Transportebene der Transporteinrichtung, zumindest im Auflagebereich der Verpackung auf der Transportebene anzuheben, um das Objekt anzuheben.

Dadurch wird auf einfache Weise realisiert, wie das Objekt durch die Hebeeinrichtung angehoben werden kann.

In einer weiteren Ausgestaltung der Ausklappvorrichtung nach dem ersten und dritten Aspekt der Erfindung kann vorgesehen sein, dass die Hebeeinrichtung so ausgebildet ist, dass sie die Verpackung an mindestens einer Längsseite hält.

Da bei dem Ausklappvorgang die Halteeinrichtung die Verpackung hält und dabei in eine von dem Verpackungsabschnitt weg weisenden Richtung bewegt wird, kann es vorteilhaft sein, dass die Hebeeinrichtung die Verpackung hält, damit sich das Objekt während des Ausklappens nicht auf der Hebeeinrichtung bewegt.

In einer weiteren Ausgestaltung der Ausklappvorrichtung nach dem ersten und dritten Aspekt der Erfindung kann vorgesehen sein, dass die Hebeeinrichtung mindestens eine Klemmeinrichtung oder eine Saugeinrichtung zum Halten der Verpackung aufweist.

Durch die Klemmeinrichtung oder die Saugeinrichtung wird die Verpackung auf der Hebeeinrichtung fixiert. Während des Aufklappens der Verpackung wirken Kräfte, die im Wesentlichen parallel zu der Transportrichtung gerichtet sind. Die Klemmeinrichtung oder die Saugeinrichtung sind insbesondere dafür vorgesehen, dass das Objekt in seiner Position auf der Hebeeinrichtung fixiert bleibt und nicht durch in dem Aufklappvorgang auftretende Zugkräfte in Bewegungsrichtung der Halteeinrichtung rutschen kann.

In einer weiteren Ausgestaltung der Ausklappvorrichtung nach dem dritten Aspekt der Erfindung kann vorgesehen sein, dass die Anschlageinrichtung genau zwei Rollen aufweist, wobei eine erste Rolle der zwei Rollen auf der der Transporteinrichtung zugewandten Längsseite der Verpackung und eine zweite Rolle der zwei Rollen auf der der Transporteinrichtung abgewandten Längsseite der Verpackung angeordnet ist.

Es kann in Entpackungssystemen durchaus vorkommen, dass beim Entpacken mehrerer Objekte nacheinander der abstehende Verpackungsabschnitt je nach Objekt entweder auf die der Transporteinrichtung zugewandte Seite oder auf der Transporteinrichtung abgewandte Seite der Verpackung eingeklappt ist. Durch die Anordnung je einer Rolle auf der der Transporteinrichtung zugewandten Seite und auf der Transporteinrichtung abgewandten Seite der Verpackung ist sichergestellt, dass immer eine Rolle einen Anschlag für den abstehenden und eingeklappten Verpackungsabschnitt bilden kann.

In einer weiteren Ausgestaltung der Ausklappvorrichtung nach dem dritten Aspekt der Erfindung kann vorgesehen sein, dass die Rollen relativ zueinander bewegbar sind.

Dadurch wird erreicht, dass die zwei Rollen zunächst soweit beabstandet werden können, dass die Verpackung zwischen den Rollen hindurchgeführt werden kann. Danach können die Rollen an die Verpackung angelegt werden und die Kontur in Längsrichtung der Verpackung abrollen, um dadurch den eingeklappten Verpackungsabschnitt vollständig auszuklappen und in Längsrichtung auszurichten.

In einer weiteren Ausgestaltung der Ausklappvorrichtung nach dem dritten Aspekt der Erfindung kann vorgesehen sein, dass die Hebeeinrichtung einen Horizontalantrieb aufweist, der dazu ausgebildet ist, die Hebeeinrichtung parallel zu der Transportrichtung, insbesondere entgegengesetzt zu der Transportrichtung, zu bewegen.

Durch die Bewegung der Hebeeinrichtung parallel zu der Transportrichtung werden das Objekt und die Verpackung parallel zu der Transportrichtung bewegt. Liegt der eingeklappte Verpackungsabschnitt an der Rolle an wird er durch eine derartige Bewegung ausgeklappt.

Die Objekte werden in der Regel sowohl im verpackten als auch im entpackten Zustand auf einer Transporteinrichtung in einer Transportrichtung transportiert. Es ist daher von Vorteil, wenn die Objekte in Transportrichtung aus der Verpackung entnommen werden können. Es ist daher vorteilhaft, wenn der Verpackungsabschnitt an einer stromabwärtigen Stirnseite angeordnet ist, durch eine Bewegung der Hebeeinrichtung entgegengesetzt zu der Transportrichtung ausgeklappt wird und damit stromabwärts absteht. Dadurch wird ein Öffnen der Verpackung an einem stromabwärtigen Ende der Verpackung ermöglicht.

In einer weiteren Ausgestaltung des Entpackungssystems nach dem fünften Aspekt der Erfindung oder nach dem dritten Beispiel kann vorgesehen sein, dass die Transporteinrichtung dazu ausgebildet ist, das Objekt von der Ausklappvorrichtung zu der Streckvorrichtung zu transportieren.

Die Ausklappvorrichtung und die Streckvorrichtung sind in der Regel stromabwärts nacheinander angeordnet, aber müssen dabei nicht zwangsläufig direkt aufeinanderfolgend sein. Die beiden Vorrichtungen können dabei also örtlich beabstandet voneinander angeordnet sein. Es kann daher vorteilhaft sein, dass die Transporteinrichtung die Verpackungen mit ausgeklapptem Verpackungsabschnitt zu der Streckvorrichtung transportiert.

In einer weiteren Ausgestaltung des Entpackungssystems nach dem fünften Aspekt der Erfindung oder nach dem dritten Beispiel kann vorgesehen sein, dass das Entpackungssystem erste senkrecht und parallel zu der Transportrichtung bewegbare Trägerhalter aufweist, die die Hebeeinrichtung und die Bewegungseinrichtung ausbilden.

Aufgrund der räumlichen Beschränkungen für das Verpackungssystem und um die Transportwege zwischen einzelnen Vorrichtungen des Entpackungssystems zu minimieren, kann es von Vorteil sein, dass die Ausklappvorrichtung und die Streckvorrichtung so nah wie möglich beieinander angeordnet sind, insbesondere wobei die beiden Vorrichtungen am selben Ort angeordnet sind. Es kann daher vorteilhaft sein, dass ein bewegbarer Trägerhalter sowohl die Hebeeinrichtung der Ausklappvorrichtung als auch die Bewegungseinrichtung der Streckvorrichtung ausbildet. Damit ist es möglich, die Ausklappvorrichtung und die Streckvorrichtung so nah wie möglich beieinander anzuordnen.

In einer weiteren Ausgestaltung des Entpackungssystems nach dem dritten Beispiel kann vorgesehen sein, dass das Entpackungssystem zweite senkrecht und parallel zu der Transportrichtung bewegbare Trägerhalter aufweist, die die Halteeinrichtung und die Anschlageinrichtung ausbilden.

Dadurch wird es ermöglicht, dass die Rollen der Anschlageinrichtung und die Rollen der Halteeinrichtung identisch sind. Dies ist insbesondere dann von Vorteil, wenn die Ausklappvorrichtung und die Streckvorrichtung so nah wie möglich beieinander anzuordnen sind. Es ist dadurch insbesondere möglich die Betriebsschritte des Ausklappens und des Streckens direkt nacheinander auszuführen. Die Rollen können dazu an den beiden Seiten der Verpackung in Anlage gebracht werden, wobei eine der beiden Rollen einen Anschlag für den eingeklappten Verpackungsabschnitt einen Anschlag bildet. Durch eine Relativbewegung des Trägerhalters und dem Objekt kann der Verpackungsabschnitt ausgeklappt werden. Die Rollen können dann den abstehenden Verpackungsabschnitt halten und durch eine weitere Relativbewegung oder durch ein Einziehen zwischen den Rollen strecken.

In einer weiteren Ausgestaltung des Entpackungssystems nach dem fünften Aspekt der Erfindung oder nach dem dritten Beispiel kann vorgesehen sein, dass die Transporteinrichtung vor der Ausklappvorrichtung einen ersten Umlenkabschnitt aufweist, der eine erste Richtungsänderung der Transportrichtung bewirkt, insbesondere wobei die erste Richtungsänderung 90° beträgt.

Aufgrund von räumlichen Beschränkungen in Industriehallen und des beschränkten Raumes für Vorrichtungen, die entlang einer Transporteinrichtung angeordnet werden können, kann es möglich sein, dass die Transporteinrichtung nicht gerade verlaufen kann. Daher weist die Transporteinrichtung vorzugsweise Umlenkabschnitte auf, die eine Richtungsänderung der Transportrichtung bewirken. Die Richtungsänderungen können dabei einen beliebigen Wert annehmen. Um eine möglichst symmetrische Anordnung aller Komponenten zueinander zu erreichen, ist es von Vorteil, dass die Richtungsänderungen im Wesentlichen 90° betragen.

In einer weiteren Ausgestaltung des Entpackungssystems nach dem fünften Aspekt der Erfindung oder nach dem dritten Beispiel kann vorgesehen sein, dass das Entpackungssystem des Weiteren eine Abtrennvorrichtung zum vollständigen Abtrennen des abstehenden und gestreckten Verpackungsabschnittes von der Verpackung aufweist.

Die Abtrennvorrichtung ist stromabwärts von der Streckvorrichtung angeordnet. Dadurch, dass der Verpackungsabschnitt absteht und gestreckt ist, wodurch der Verpackungsabschnitt insbesondere weit von der Verpackung absteht, ist das Abtrennen des Verpackungsabschnitts durch eine Abtrennvorrichtung erleichtert. Die Abtrennvorrichtung kann dabei eine Halteeinrichtung zum Halten des abstehenden und gestreckten Verpackungsabschnittes aufweisen, um den Verpackungsabschnitt während des Abtrennens festzuhalten. Diese Halteeinrichtung ist aber nicht zwingend erforderlich, da der Verpackungsabschnitt durch den Streckprozess weit von der Verpackung absteht. Die Abtrennvorrichtung kann vorzugsweise senkrecht zu der Transportrichtung angeordnet sein.

In einer weiteren Ausgestaltung des Entpackungssystems nach dem fünften Aspekt der Erfindung oder nach dem dritten Beispiel kann vorgesehen sein, dass die Abtrennvorrichtung ein Schneidmesser, einen Laser oder ein thermisches Trennverfahren zum vollständigen Abtrennen des Verpackungsabschnittes aufweist.

Insbesondere bei einem Laser oder einem thermischen Trennverfahren ist ein separates Halten des Verpackungsabschnittes nicht erforderlich. Eine separate Halteeinrichtung kann dann von Vorteil sein, wenn der abgetrennte Verpackungsabschnitt gezielt mittels der Halteeinrichtung entsorgt wird.

In einer weiteren Ausgestaltung des Entpackungssystems nach dem fünften Aspekt der Erfindung oder nach dem dritten Beispiel kann vorgesehen sein, dass die Abtrennvorrichtung eine Entnahmeeinrichtung zum Entnehmen des Objekts aus der Verpackung aufweist.

Die Entnahmeeinrichtung kann dabei mit Haltemitteln, beispielsweise einer Klemmeinrichtung, zum Halten der Verpackung, insbesondere auf einer der geöffneten Seite der Verpackung entgegengesetzten Seite, aufweisen. Die Entnahmeeinrichtung kann des Weiteren eine Greifeinrichtung zum Herausnehmen des Objekts aus der Verpackung aufweisen. Alternativ kann die Verpackung mittels einer Greifeinrichtung von dem Objekt weggezogen werden, um die Verpackung von dem Objekt zu entfernen.

In einer weiteren Ausgestaltung des Entpackungssystems nach dem fünften Aspekt der Erfindung oder nach dem dritten Beispiel kann vorgesehen sein, dass die Abtrennvorrichtung eine Entsorgungseinrichtung aufweist, die dazu ausgebildet ist, den abgetrennten Verpackungsabschnitt und den Rest der Verpackung zu entsorgen.

Die Entsorgungsvorrichtung kann dabei eine oder mehrere Greifer aufweisen, die die Verpackungsteile von der Abtrennvorrichtung weg bewegen. Die Entsorgungseinrichtung kann auch ein Förderband oder eine andere Transporteinrichtung aufweisen, die die Verpackungsreste von der Abtrennvorrichtung weg fördern. Es können dabei Greifer dazu ausgebildet sein, die Verpackungsreste auf das Förderband zu legen. Die Entsorgungseinrichtung könnte alternativ auch mittels einer Saugeinrichtung ausgebildet sein, die die Verpackungsreste einsaugt und so weg von der Abtrennvorrichtung zu transportieren.

In einer weiteren Ausgestaltung des Entpackungssystems nach dem fünften Aspekt der Erfindung oder nach dem dritten Beispiel kann vorgesehen sein, dass die Transporteinrichtung dazu ausgebildet ist, das Objekt von der Streckvorrichtung zu der Abtrennvorrichtung zu transportieren, insbesondere wobei die Transporteinrichtung zwischen der Streckvorrichtung und der Abtrennvorrichtung einen zweiten Umlenkabschnitt aufweist, der eine zweite Richtungsänderung der Transportrichtung bewirkt, insbesondere wobei die zweite Richtungsänderung 90° beträgt.

Aufgrund der räumlichen Anordnung der Vorrichtung kann es von Vorteil sein, die Streckvorrichtung und die Abtrennvorrichtung räumlich getrennt voneinander zu platzieren. Dadurch wird es erforderlich, dass die Objekte samt Verpackung von der Streckvorrichtung zu der Abtrennvorrichtung bewegt werden. Eine Möglichkeit, um das Objekt von der Streckvorrichtung zu der Abtrennvorrichtung zu transportieren, bietet die Transporteinrichtung, die zwischen der Streckvorrichtung und der Abtrennvorrichtung verlaufen kann. In einer vorteilhaften Ausgestaltung können die Abtrennvorrichtung und die Streckvorrichtung bezüglich der Transportrichtung in einem Winkel voneinander angeordnet sein. Dies ist insbesondere dann von Bedeutung, wenn der zur Verfügung stehende Platz in beispielsweise einer Industriehalle, in der das Verpackungssystem angeordnet ist, begrenzt ist. In diesem Fall ist es vorteilhaft, dass die Transporteinrichtung einen Umlenkabschnitt aufweist, in dem die Transportrichtung geändert wird.

In einer weiteren Ausgestaltung des Entpackungssystems nach dem fünften Aspekt der Erfindung oder nach dem dritten Beispiel kann vorgesehen sein, dass die Transporteinrichtung dazu ausgebildet ist, das Objekt von der Abtrennvorrichtung weg zu transportieren, insbesondere wobei die Transporteinrichtung stromaufwärts von, in oder stromabwärts von der Abtrennvorrichtung einen dritten Umlenkabschnitt aufweist, der eine dritte Richtungsänderung der Transportrichtung bewirkt, insbesondere wobei die dritte Richtungsänderung 90° beträgt.

Damit wird eine durchgehende Transporteinrichtung bereitgestellt, die das Objekt zu allen Vorrichtungen hin und von allen Vorrichtungen weg transportiert. Aufgrund von räumlichen Beschränkungen in Industriehallen und des beschränkten Raumes für Vorrichtungen, die entlang einer Transporteinrichtung angeordnet werden können, kann es möglich sein, dass die Transporteinrichtung nicht gerade verlaufen kann. Daher weist die Transporteinrichtung vorzugsweise den dritten Umlenkabschnitt auf, der eine Richtungsänderung der Transportrichtung bewirkt. Die Richtungsänderung kann dabei einen beliebigen Wert annehmen. Um eine möglichst symmetrische Anordnung aller Komponenten zueinander zu erreichen, ist es von Vorteil, dass die Richtungsänderung im Wesentlichen 90° beträgt.

In einer weiteren Ausgestaltung des Entpackungssystems nach dem fünften Aspekt der Erfindung oder nach dem dritten Beispiel kann vorgesehen sein, dass die Transporteinrichtung dazu ausgebildet ist, die entpackten Objekte von der Abtrennvorrichtung in einen Reinraum zu transportieren.

Insbesondere im pharmazeutischen und kosmetischen Bereich, in dem Entpackungssysteme zur Verwendung kommen, werden solche verpackten Objekte in einem nicht sterilen Bereich angeliefert. Das Entpacken erfolgt dann in dem nicht sterilen Bereich. Es ist daher von Vorteil, wenn die Abtrennvorrichtung so nah wie möglich an einem Reinraum angeordnet ist. Es ist daher von Vorteil, wenn die Transporteinrichtung stromabwärts von der Abtrennvorrichtung direkt in einen Reinraum verläuft, ohne dass die Objekte auf eine andere Transporteinrichtung umgeladen, zu einem weiteren Arbeitsschritt zu einer weiteren Vorrichtung in dem nicht sterilen Bereich transportiert, oder über eine große Wegstrecke hinweg transportiert werden müsste.

In einer weiteren Ausgestaltung des Verfahrens zum Strecken kann vorgesehen sein, dass in dem Schritt des Bewegens eine Bewegungseinrichtung die Verpackung an mindestens einer Längsseite hält.

Dazu kann das Objekt beispielsweise mit seiner der Transporteinrichtung zugewandten Längsseite mit der Bewegungseinrichtung in Kontakt sein, insbesondere auf der Bewegungseinrichtung angeordnet sein. Bei ausreichend großem Geweicht des Objekts reicht die Haftreibung aus, um das Objekt mit der Verpackung zum Strecken von der Halteeinrichtung, die den Verpackungsabschnitt hält, wegzubewegen, ohne dass die Verpackung die Haftreibung überwindet und die ausgeübte Zugkraft verringert wird, beispielsweise durch Rutschen auf der Bewegungseinrichtung, oder komplett gestoppt wird, beispielweise wenn das Objekt die Bewegungseinrichtung verlässt, insbesondere wenn das Objekt von der Bewegungseinrichtung herunterfällt. Des Weiteren kann die Bewegungseinrichtung das Objekt an zwei oder mehr Seiten halten, beispielswiese durch eine Klemmkraft, die auf zwei gegenüberliegende Längsseiten ausgeübt wird. Die Klemmkraft ist dabei ausreichend groß zu wählen, um die Verpackung zu strecken.

In einer weiteren Ausgestaltung des Verfahrens zum Strecken kann vorgesehen sein, dass der abstehende Verpackungsabschnitt bezüglich der Transportrichtung an der stromabwärtigen Stirnseite angeordnet ist, wobei in dem Schritt des Bewegens das Objekt entgegengesetzt zu der Transportrichtung und weg von der Halteeinrichtung bewegt wird.

Die Objekte werden in der Regel sowohl in dem verpackten als auch in dem entpackten Zustand auf der Transporteinrichtung in einer Transportrichtung transportiert. Es ist daher von Vorteil, wenn die Objekte in Transportrichtung aus der Verpackung entnommen werden können. Wird nun der abstehende Verpackungsabschnitt in Transportrichtung gestreckt, insbesondere wobei der Verpackungsabschnitt an einer stromabwärtigen Stirnseite der Verpackung angeordnet ist, sind die nachfolgenden Arbeitsschritte wie das Öffnen der Verpackung erleichtert, da dadurch die Verpackung an der stromabwärtigen Stirnseite geöffnet werden kann, ohne dass die Verpackung und das Objekt auf der Transporteinrichtung gedreht werden müssten.

In einer weiteren Ausgestaltung des Verfahrens zum Strecken kann vorgesehen sein, dass in dem Schritt des Haltens die mindestens zwei Rollen den abstehenden Verpackungsabschnitt zwischen sich einziehen.

Kommt der abstehende Verpackungsabschnitt mit den Rollen in Berührung, werden die Rollen derart bewegt, dass sie den Verpackungsabschnitt in die richtige Position zwischen sich befördern. Dadurch wird insbesondere das Anordnen des abstehenden Verpackungsabschnittes zwischen den Rollen weiter vereinfacht.

In einer weiteren Ausgestaltung des Verfahrens zum Strecken kann vorgesehen sein, dass in dem Schritt des Haltens die mindestens zwei Rollen in entgegengesetzter Richtung gedreht werden, wodurch der abstehende Verpackungsabschnitt zwischen den mindestens zwei Rollen eingezogen wird.

Durch das entgegengesetzte Drehen der Rollen wird das Einziehen des abstehenden Verpackungsabschnittes zwischen den Rollen vereinfacht. Vorzugsweise weist die Halteeinrichtung genau zwei Rollen auf, wobei die genau zwei Rollen in entgegengesetzter Laufrichtung angetrieben werden.

In einer weiteren Ausgestaltung des Verfahrens zum Strecken kann vorgesehen sein, dass in dem Schritt des Haltens die mindestens zwei Rollen relativ zueinander bewegt werden, wodurch die mindestens zwei Rollen den abstehenden Verpackungsabschnitt zwischen sich einklemmen.

Durch die relative Bewegung zueinander wird der Abstand zwischen den Rollen variabel einstellbar. Es ist dabei vorteilhaft, wenn bei dem Einführen des abstehenden Verpackungsabschnittes zwischen die Rollen der relative Abstand der Rollen zueinander groß ist. Sobald der abstehende Verpackungsabschnitt zwischen den Rollen angeordnet ist, kann der relative Abstand der Rollen zueinander derart verkleinert werden, dass der abstehende Verpackungsabschnitt zwischen den Rollen eingeklemmt wird.

In einer weiteren Ausgestaltung des Verfahrens zum Ausklappen nach dem zweiten Aspekt der Erfindung kann vorgesehen sein, dass in dem Schritt des Haltens die Halteeinrichtung die Verpackung an einer der Transporteinrichtung abgewandten Längsseite hält.

Der Verpackungsabschnitt ist zunächst zwischen der Transporteinrichtung und einer der Transporteinrichtung zugewandten Längsseite der Verpackung eingeklappt. Greift nun die Halteeinrichtung an der der Transporteinrichtung abgewandten Längsseite die Verpackung an und zieht die Verpackung in eine von dem Verpackungsabschnitt weg weisende Richtung, so wird auf einfache Weise der Verpackungsabschnitt aufgeklappt. Vorzugsweise ist der Verpackungsabschnitt dabei mit dem Rest der Verpackung an einer stromabwärtigen Stirnseite der Verpackung verbunden. Dadurch steht der Verpackungsabschnitt in einem ausgeklappten Zustand von der stromabwärtigen Stirnseite der Verpackung ab. Vorzugsweise hält die Halteeinrichtung die Verpackung in einem stromabwärtigen Bereich der der Transporteinrichtung abgewandten Längsseite der Verpackung. Zum Ausklappen wird dann die Halteeinrichtung zu einem stromaufwärtigen Bereich der der Transporteinrichtung abgewandten Längsseite bewegt.

In einer weiteren Ausgestaltung des Verfahrens zum Ausklappen nach dem zweiten Aspekt der Erfindung kann vorgesehen sein, dass in dem Schritt des Bewegens die Halteeinrichtung parallel, insbesondere entgegengesetzt, zu der Transportrichtung bewegt wird, wodurch der Verpackungsabschnitt ausgeklappt wird.

Ist der Verpackungsabschnitt an einer der Stirnseiten der Verpackung angeordnet und von dem Verbindungspunkt an der Stirnseite ausgehend zwischen der Transporteinrichtung und der der Transporteinrichtung zugewandten Längsseite eingeklappt, so ist eine Zugkraft in oder entgegen der Transportrichtung, d.h. parallel zu der Transportrichtung, vorteilhaft, um den Verpackungsabschnitt auszuklappen.

In einer weiteren Ausgestaltung des Verfahrens zum Ausklappen nach dem zweiten und vierten Aspekt der Erfindung kann vorgesehen sein, dass in dem Schritt des Anhebens die Hebeeinrichtung die Verpackung an mindestens einer Längsseite hält.

Da bei dem Ausklappvorgang die Halteeinrichtung die Verpackung hält und dabei in eine von dem Verpackungsabschnitt weg weisenden Richtung bewegt wird, kann es vorteilhaft sein, dass die Hebeeinrichtung die Verpackung hält, damit sich das Objekt während des Ausklappens nicht auf der Hebeeinrichtung bewegt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen der Erfindung sind in der Zeichnung dargestellt und werden in der nachfolgenden Beschreibung näher erläutert. Es zeigen:
- Fig. 1A: eine isometrische Ansicht einer Ausführungsform einer Streckvorrichtung,
- Fig. 1B: einen vergrößerten Ausschnitt der Ansicht der Streckvorrichtung in Fig. 1A,
- Fig. 2: eine Seitenansicht der Streckvorrichtung in Fig. 1A,
- Fig. 3: eine Draufsicht der Streckvorrichtung in Fig. 1A,
- Fig. 4: eine schematische Darstellung einer Ausführungsform eines Verfahrens zum Strecken einer Verpackung,
- Fig. 5A: eine isometrische Darstellung des Schrittes zum Halten in dem Verfahrens zum Strecken in Fig. 4,
- Fig. 5B: eine isometrische Darstellung des Schrittes zum Halten in dem Verfahrens zum Strecken in Fig. 4,
- Fig. 5C: eine isometrische Darstellung des Schrittes zum Halten in dem Verfahrens zum Strecken in Fig. 4,
- Fig. 5D: eine isometrische Darstellung des Schrittes des Bewegens in dem Verfahren des Streckens in Fig. 4,
- Fig. 6A: eine isometrische Darstellung einer Ausführungsform einer Ausklappvorrichtung,
- Fig. 6B: einen vergrößerten Ausschnitt der Ansicht der Ausklappvorrichtung in Fig. 6A,
- Fig. 7: eine Seitenansicht der Ausklappvorrichtung in Fig. 6A,
- Fig. 8: eine Draufsicht der Ausklappvorrichtung in Fig. 6A,
- Fig. 9: eine schematische Darstellung einer Ausführungsform eines Verfahrens zum Ausklappen,
- Fig. 10A: eine isometrische Darstellung des Schrittes zum Anheben in dem Verfahren zum Ausklappen in Fig. 9,
- Fig. 10B: eine isometrische Darstellung des Schrittes zum Halten in dem Verfahren zum Ausklappen in Fig. 9,
- Fig. 10C: eine isometrische Darstellung des Schrittes zum Bewegen in dem Verfahren zum Ausklappen in Fig. 9,
- Fig. 11: eine Draufsicht einer Ausführungsform eines Entpackungssystems,
- Fig. 12 A: eine schematische Darstellung einer ersten Ausführungsform eines Verfahrens zum Entpacken,
- Fig. 12 B: eine schematische Darstellung einer zweiten Ausführungsform eines Verfahrens zum Entpacken,
- Fig. 13: eine schematische Darstellung einer Ausführungsform einer Füllanlage,
- Fig. 14A: eine isometrische Darstellung einer weiteren Ausklappvorrichtung,
- Fig. 14B: einen vergrößerten Ausschnitt der Ansicht der Ausklappvorrichtung in Fig. 14A,
- Fig. 15: eine Seitenansicht der Ausklappvorrichtung in Fig. 14A,
- Fig. 16: eine Draufsicht der Ausklappvorrichtung in Fig. 14A,
- Fig. 17: eine schematische Darstellung einer Ausführungsform eines weiteren Verfahrens zum Ausklappen,
- Fig. 18A: eine isometrische Darstellung des Schrittes zum Anheben in dem Verfahren zum Ausklappen in Fig. 17,
- Fig. 18B: eine isometrische Darstellung des Schrittes zum Halten in dem Verfahren zum Ausklappen in Fig. 17,
- Fig. 18C: eine isometrische Darstellung des Schrittes zum Bewegen in dem Verfahren zum Ausklappen in Fig. 17.

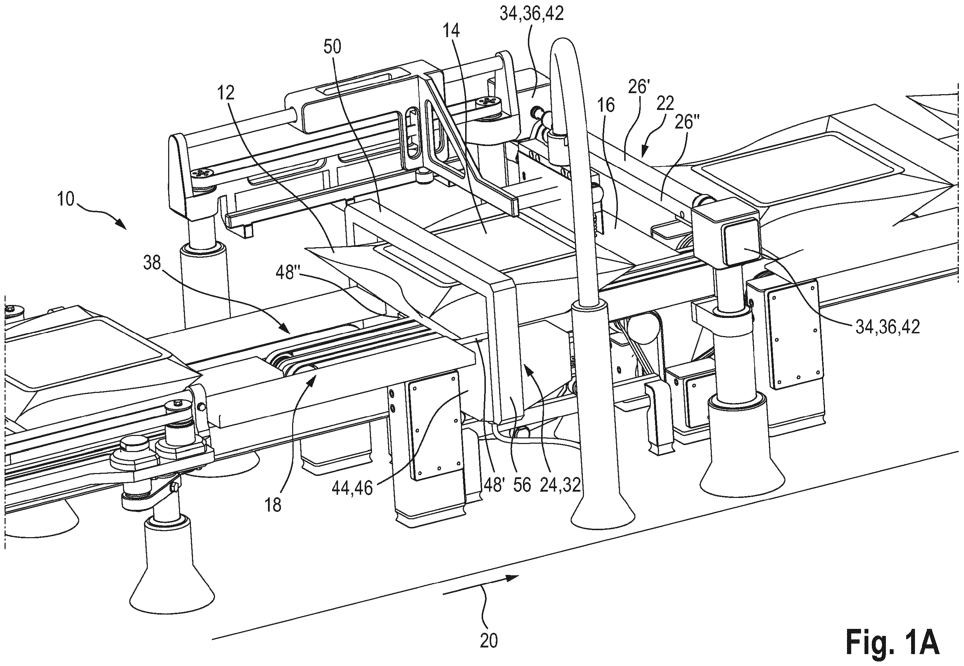

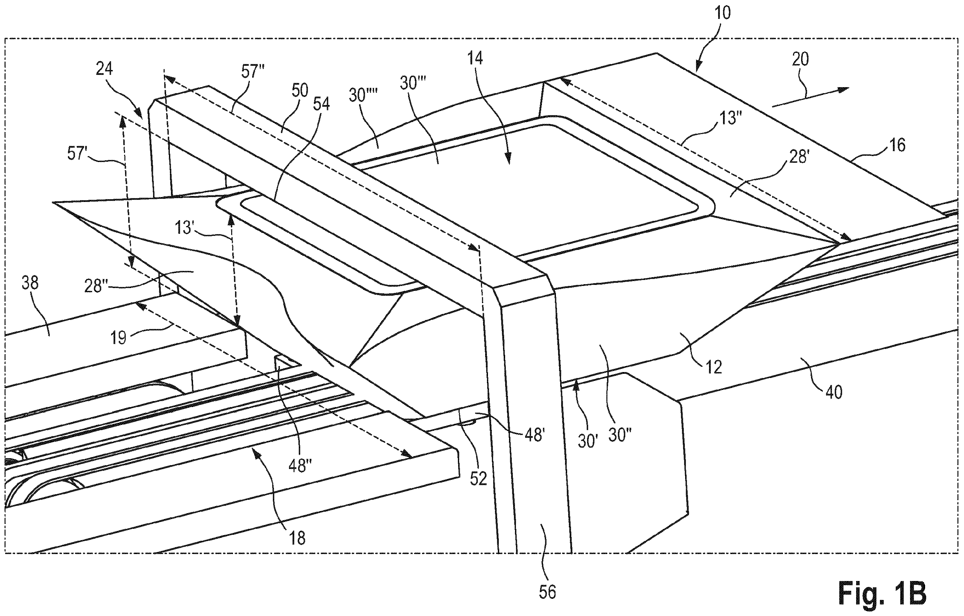

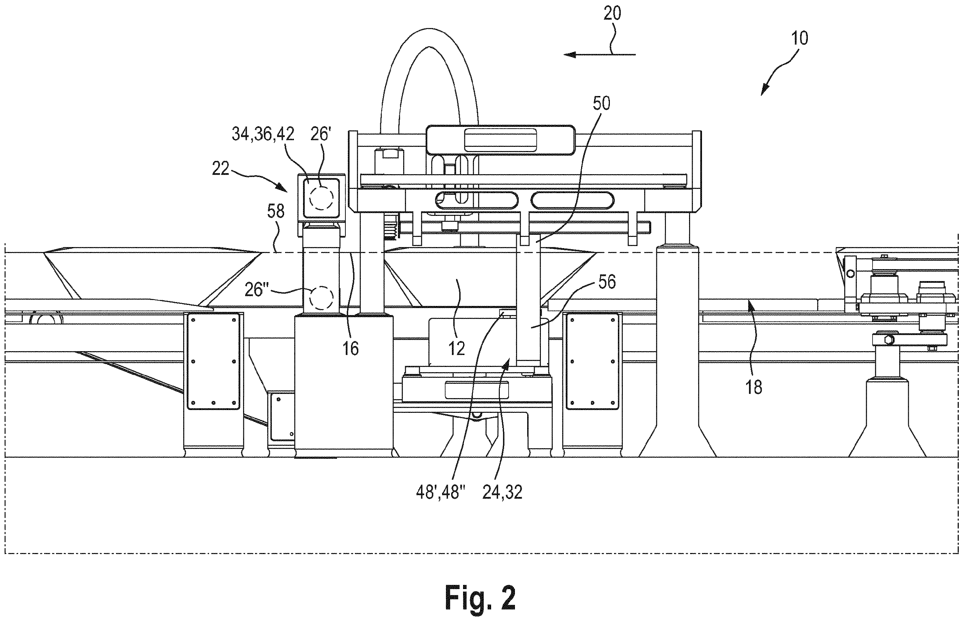

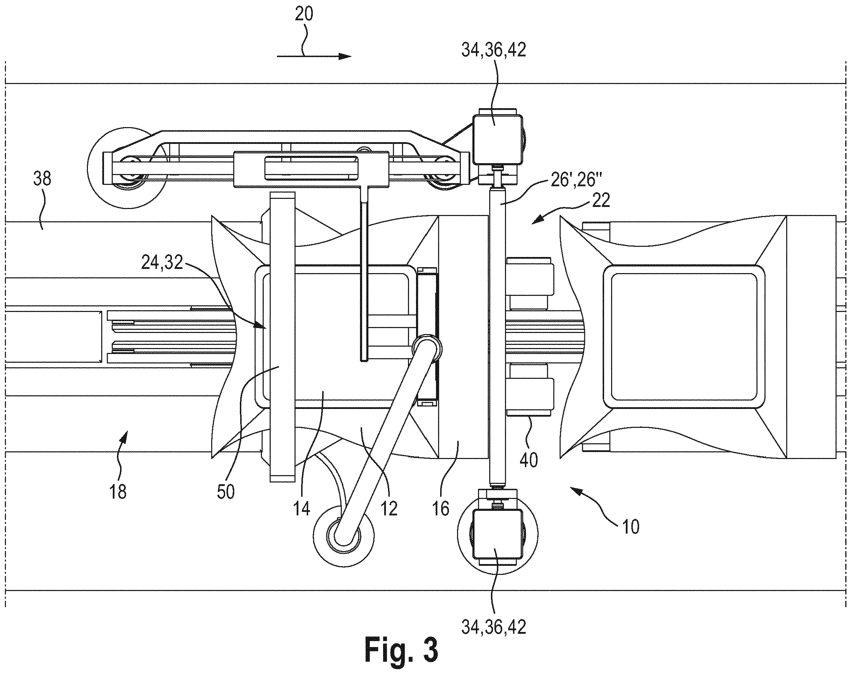

Die Fig. 1A, 1B, 2 und 3 zeigen eine Ausführungsform einer Streckvorrichtung 10. Die Streckvorrichtung 10 ist dazu ausgebildet, eine Verpackung 12 zu strecken. Ein Objekt 14 ist in der Verpackung 12 eingepackt. Die Verpackung 12 weist einen Verpackungsabschnitt 16 auf, der an der Seite der Verpackung 12 angeordnet ist und von der Verpackung 12 absteht. Die Streckvorrichtung 10 weist eine Transporteinrichtung 18, eine Halteeinrichtung 22 und eine Bewegungseinrichtung 24 auf.

Die Transporteinrichtung 18 ist dazu ausgebildet, das Objekt 14 in einer Transportrichtung 20 zu transportieren. Die Verpackung 12 weist bezüglich der Transportrichtung 20 eine stromaufwärtige Stirnseite 28' und eine stromabwärtige Stirnseite 28" auf. Des Weiteren weist die Verpackung 12 bezüglich der Transportrichtung 20 vier Längsseiten 30', 30", 30‴ und 30ʺʺ auf. Eine der Transporteinrichtung (18) zugewandte Längsseite 30' ist dabei der Transporteinrichtung 18 zugewandt und ist zumindest teilweise in Kontakt mit der Transporteinrichtung 18. Die Verpackung 12 liegt demnach mit der der Transporteinrichtung (18) zugewandten Längsseite 30' auf der Transporteinrichtung 18 auf. Eine der Transporteinrichtung (18) abgewandte Längsseite 30‴ ist von der Transporteinrichtung 18 abgewandt. Zwei seitliche Längsseiten 30" und 30"" sind seitlich von der Transporteinrichtung 18 angeordnet und stehen im Wesentlichen senkrecht auf der Transporteinrichtung 18. Der abstehende Verpackungsabschnitt 16 ist an der stromabwärtigen Stirnseite 28" der Verpackung 12 angeordnet. Die Transporteinrichtung 18 weist eine Transportebene 38 auf, auf der das Objekt 14 und die Verpackung 12 transportiert werden.

Die Transporteinrichtung 18 weist des Weiteren Aussparungen 40 an den beiden Rändern der Transportebene 38 auf, sodass die Verpackung 12 und das Objekt 14 lediglich in einem mittleren Bereich auf der Transporteinrichtung 18 und der Transportebene 38 aufliegen.

Die Halteeinrichtung 22 weist zwei senkrecht zu der Transportrichtung 18 angeordnete Rollen 26', 26" auf. Die beiden Rollen 26', 26" sind parallel zueinander angeordnet. Die beiden Rollen 26', 26" sind parallel zu der Transportebene 38 angeordnet. Die Halteeinrichtung 22 weist des Weiteren eine Rollenrotation-Antriebseinrichtung 34 zum Drehen der Rollen 26', 26" und eine Rollentranslation-Antriebseinrichtung 36 zum Bewegen der Rollen der 26', 26" auf. Die Halteeinrichtung 22 weist des Weiteren eine Rollenträgereinrichtung 42 auf, in der die Rollen 26', 26" drehbar und relativ zueinander bewegbar angeordnet sind. Die Rollenträgereinrichtung 42 bildet dabei die Rollenrotation-Antriebseinrichtung 34 und die Rollentranslation-Antriebseinrichtung 26 aus. Die Rollenrotation-Antriebseinrichtung 34 kann vorzugsweise die Rollen 26', 26" in entgegengesetzter Richtung antreiben. Durch das entgegengesetzte Drehen der Rollen 26', 26" kann der abstehende Verpackungsabschnitt zwischen den Rollen eingezogen werden. Die Rollentranslation-Antriebseinrichtung 36 ist dazu ausgebildet, die Rollen relativ zueinander zu bewegen. Diese Relativbewegung erfolgt in diesem Ausführungsbeispiel insbesondere senkrecht zu der Transportebene 38. Dabei kann es insbesondere vorteilhaft sein, wenn der Abstand zwischen den Rollen bei dem Einführen des abstehenden Verpackungsabschnittes groß ist und die Rollen nach dem Einführen des Verpackungsabschnittes aufeinander zu bewegt werden, um den abstehenden Verpackungsabschnitt zwischen sich einzuklemmen. Hierbei ist die Erfindung aber nicht auf zwei Rollen beschränkt. In einer alternativen Ausgestaltung können auch drei, vier, fünf oder mehr Rollen angeordnet sein, um den abstehenden Verpackungsabschnitt zwischen sich zu halten.

Die Bewegungseinrichtung 24 ist dazu ausgebildet, das Objekt 14 mit der Verpackung 12 zu bewegen. Die Bewegungseinrichtung 24 weist dazu einen Vertikalantrieb 44 zum vertikalen Bewegen senkrecht zu der Transportebene 38 und einen Horizontalantrieb 46 zum Bewegen parallel zu der Transportebene 38, insbesondere parallel zu der Transportrichtung 20. In der dargestellten Ausführungsform weist die Bewegungseinrichtung 24 des Weiteren eine Klemmeinrichtung 32 auf, die dazu ausgebildet ist, die Verpackung 12 und das Objekt 14 zwischen sich einzuklemmen. Die Klemmeinrichtung 32 weist dazu Hebeelemente 48', 48" und ein Anschlagelement 50 auf. Die Hebeelemente 48', 48" sind so angeordnet, dass sie bei einer vertikalen Bewegung senkrecht zu der Transportebene 38 durch die beiden Aussparungen 40 der Transportebene 38 hindurchbewegt werden. Die Hebeelemente 48', 48" weisen eine Auflagefläche 52 auf, die in Kontakt mit der der Transporteinrichtung (18) zugewandten Längsseite 30' der Verpackung 12 kommen. Dabei kommt die Auflagefläche 52 insbesondere in einem stromaufwärtigen Bereich der der Transporteinrichtung (18) zugewandten Längsseite 30' in Anlage an die der Transporteinrichtung (18) zugewandte Längsseite 30'. Der Vertikalantrieb 44 ist dazu ausgebildet, die Hebeelemente 48', 48" senkrecht zu der Transportebene 38 zu bewegen. Damit ist das Objekt 14 mit der Verpackung 12 senkrecht zu der Transportebene 38 bewegbar. Das Anschlagelement 50 weist eine Anlagefläche 54 auf, an die die Verpackung 12 mit der der Transporteinrichtung (18) abgewandten Längsseite 30‴ bei dem Klemmen in Anlage kommt. Dabei kommt die Anlagefläche 54 insbesondere in einem stromaufwärtigen Bereich der der Transporteinrichtung (18) abgewandten Längsseite 30‴ in Anlage an die der Transporteinrichtung (18) abgewandte Längsseite 30'". Dadurch werden die Verpackung 12 und das Objekt 14 zwischen den Hebeelementen 48', 48" und dem Anschlagelement 50 gehalten. Die Bewegungseinrichtung 24 weist des Weiteren einen Rahmen 56 auf, der das Anschlagelement 50 beinhaltet und das Anschlagelement 50 mit den restlichen Komponenten der Bewegungseinrichtung 24 verbindet, die größtenteils auf der der Verpackung abgewandten Seite der Transporteinrichtung (18) angeordnet sind. Der Rahmen 56 weist ausgehend von der Transportebene 38 eine Höhe 57' auf, die größer ist als eine Höhe 13' der Verpackung 12. Dadurch kann vermieden werden, dass die Verpackung 12 bei dem Transportieren auf der Transportebene 18 mit dem Anschlagelement 50 in Berührung kommt, insbesondere daran schleift oder hängen bleibt. Ein Kontakt von Verpackung 12 und Anschlagelement 50 kommt erst dann zustande, wenn die Verpackung 12 mit den Hebeelementen 48', 48" vertikal von der Transportebene 38 weg bewegt wird und in Anlage an das Anschlagelement 50 kommt. Der Rahmen 56 weist des Weiteren eine Breite 57" auf, die größer ist als eine Breite 13" der Verpackung 12 und größer ist als eine Breite 19 der Transporteinrichtung 18. Dadurch kann vermieden werden, dass die Verpackung 12 bei dem Transportieren seitlich mit dem Rahmen 56 in Kontakt kommt, insbesondere daran schleift oder hängen bleibt.

Der Horizontalantrieb 46 der Bewegungseinrichtung 24 ist dazu ausgebildet, die Verpackung 12 und das Objekt 14 parallel zu der Transportebene 38, insbesondere parallel zu der Transportrichtung 20, zu bewegen. Der Horizontalantrieb 46 bewegt dabei sowohl die Hebeelemente 48', 48" als auch den Rahmen 56 mit dem Anschlagelement 50 in horizontaler Richtung. Dadurch wird es ermöglicht, dass die Verpackung gleichzeitig durch die Klemmeinrichtung 32 geklemmt wird, während sie parallel zu der Transportebene 38, insbesondere parallel zu der Transportrichtung 20 bewegt wird.

Die Bewegungseinrichtung 24 kann dazu ausgebildet sein, das Objekt 14 und die Verpackung 12 zu den Rollen 26', 26" hin zu bewegen, um den abstehenden Verpackungsabschnitt 16 zwischen den beiden Rollen 26', 26" hindurchzuführen. Zwischen den beiden Rollen 26', 26" liegt eine Mittelebene 58, die parallel zu der Transportebene liegt und die zu den Rollen 26', 26" denselben Abstand aufweist. In einer vorteilhaften Ausgestaltung der Erfindung ist der abstehende Verpackungsabschnitt 16 während des Klemmens in der Klemmeinrichtung 32 der Bewegungseinrichtung 24 so angeordnet, dass er in der Mittelebene 58 liegt. Dadurch wird auf einfache Weise erreicht, dass der abstehende Verpackungsabschnitt 16 durch den Zwischenraum zwischen den beiden Rollen 26', 26" hindurchgeführt werden kann. Ist der abstehende Verpackungsabschnitt 16 nicht in der Mittelebene 58 angeordnet, so können die Rollen 26', 26" mittels der Rollentranslation-Antriebseinrichtung 36 weiter voneinander beabstandet werden, um einen größeren Zwischenraum zwischen den Rollen 26', 26" zu erzeugen, durch den der abstehende Verpackungsabschnitt 16 geführt werden kann. In einer alternativen Ausgestaltung der Erfindung kann vorgesehen kann, dass die Rollen 26', 26" nicht nur relativ zueinander bewegbar sind, sondern auch parallel miteinander senkrecht zu der Transportebene 38 bewegbar sind. Dadurch wird es ermöglicht, dass die Mittelebene 58, die zwischen den Rollen 26', 26" liegt, auf der Höhe des abstehenden Verpackungsabschnittes 16 verschoben werden kann.

Alternativ oder zusätzlich zu der in den Fig. 1A, 1B, 2 und 3 beschriebenen Ausführungsform einer Streckvorrichtung 10 kann vorgesehen sein, dass statt oder zusätzlich zu der Bewegungseinrichtung 24 die Halteeinrichtung 22 parallel zu der Transportrichtung 20 bewegbar ist. Die Halteeinrichtung 22 kann dazu beispielsweise einen Horizontalantrieb aufweisen, der die Halteeinrichtung 22 parallel zu der Transportrichtung 20 bewegen kann. Dadurch werden das Objekt 14 und die Halteeinrichtung 22 relativ voneinander weg bewegt und der Verpackungsabschnitt 16 kann dadurch ebenfalls gestreckt werden.

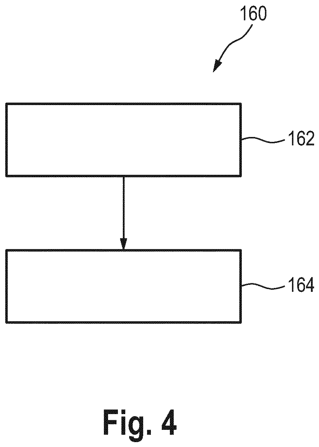

Fig. 4 zeigt eine Ausführungsform eines Verfahrens 160 zum Strecken einer Verpackung 12, insbesondere eines Beutels, für ein Objekt 14, insbesondere ein pharmazeutisches oder kosmetisches Objekt. Die Streckvorrichtung 10, die in den Fig. 1A bis 3 beschrieben ist, ist insbesondere dazu geeignet, das Verfahren 160 zum Strecken auszuführen. Die zu streckende Verpackung 12 weist hierbei einen abstehenden Verpackungsabschnitt 16 auf. Das Objekt 14 wird auf einer Transporteinrichtung 18 in einer Transportrichtung 20 transportiert. Die einzelnen Verfahrensschritte werden im Folgenden genauer beschrieben.

In einem ersten Schritt 162 wird der abstehende Verpackungsabschnitt 16 durch eine Halteeinrichtung 22 gehalten. Die Halteeinrichtung 22 weist zwei senkrecht zu der Transportrichtung 20 angeordnete Rollen 26', 26" auf. Der abstehende Verpackungsabschnitt 16 wird zwischen den zwei Rollen 26', 26" gehalten. Hierbei ist die Erfindung aber nicht auf zwei Rollen beschränkt. In einer alternativen Ausgestaltung können auch drei, vier, fünf oder mehr Rollen angeordnet sein, um den abstehenden Verpackungsabschnitt zwischen sich zu halten.

In einem zweiten Schritt 164 wird das Objekt 14 weg von der Halteeinrichtung 22 und parallel zu der Transporteinrichtung 20 bewegt. Bei dieser Bewegung wird der abstehende Verpackungsabschnitt 16 gestreckt, da er zwischen den Rollen 26', 26" gehalten wird.

Alternativ oder zusätzlich kann in dem zweiten Schritt 164 auch die Halteeinrichtung 22 parallel zu der Transportrichtung 20 und weg von dem Objekt 14 bewegt werden. Bei dieser Bewegung wird der abstehende Verpackungsabschnitt 16 ebenfalls gestreckt, da er zwischen den Rollen 26', 26" gehalten wird.

Vorzugsweise wird in dem ersten Schritt des Bewegens 164 die Verpackung 12 an mindestens einer Längsseite 30', 30", 30'", 30ʺʺ durch eine Bewegungseinrichtung 24 gehalten. Die Bewegungseinrichtung 24 kann insbesondere als eine solche Bewegungseinrichtung ausgebildet sein, wie sie in der Streckvorrichtung 10 in den Fig. 1A bis 3 beschrieben ist.

Vorzugsweise ist der abstehende Verpackungsabschnitt 16 bezüglich der Transportrichtung 20 an der stromabwärtigen Stirnseite 28' angeordnet. Dabei wird in dem zweiten Schritt des Bewegens 164 das Objekt 14 entgegengesetzt zu der Transportrichtung 20 und weg von der Halteeinrichtung 22 bewegt.

Vorzugsweise werden in dem Schritt des Haltens 162 die Rollen 26', 26" in entgegengesetzter Richtung gedreht, wodurch der abstehende Verpackungseinschnitt 16 zwischen den Rollen 26', 26" eingezogen wird.

Vorzugsweise werden in dem Schritt des Haltens 162 die Rollen 26', 26" relativ zueinander bewegt, wodurch die Rollen 26', 26" den abstehenden Verpackungsabschnitt 16 zwischen sich einklemmen.

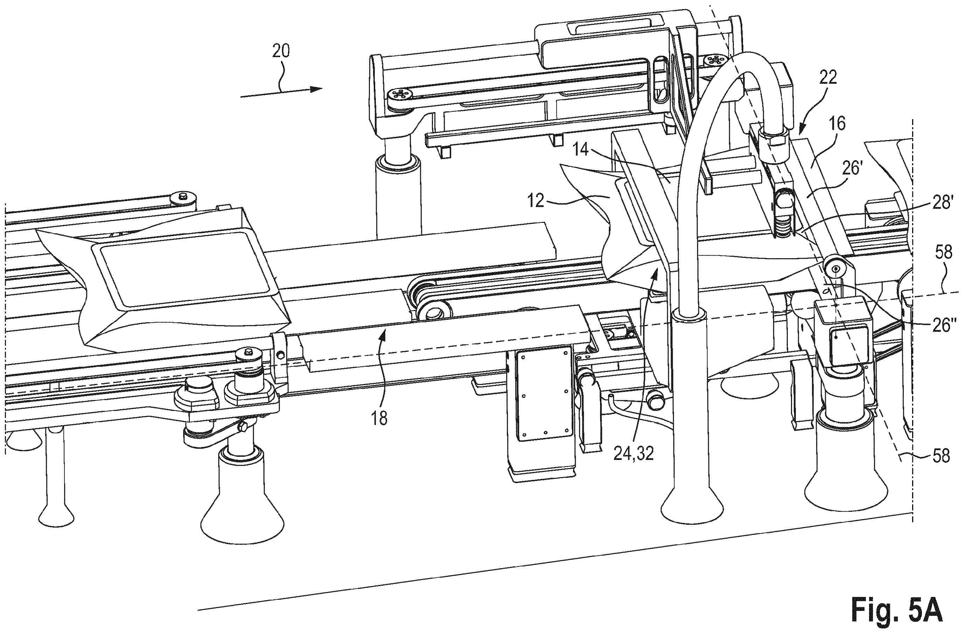

Die Fig. 5a bis 5d zeigen eine isometrische Darstellung der einzelnen Verfahrensschritte des Verfahrens 160 zum Strecken einer Verpackung 12, das in Fig. 4 beschrieben ist.

Fig. 5a zeigt dabei einen ersten Teilschritt des Schrittes 162 des Haltens, wobei ein stromabwärtiger Bereich des abstehenden Verpackungsabschnittes 16 zwischen den Rollen 26', 26" angeordnet wird. Dabei wird der stromabwärtiger Bereich des Verpackungsabschnitts 16 vorzugsweise dadurch zwischen den Rollen 26', 26" angeordnet, dass die Bewegungseinrichtung 24 die Verpackung 12 parallel zu der Transportrichtung 20 zu den Rollen hin bewegt und den abstehenden Verpackungsabschnitt 16 zwischen die Rollen 26', 26" einführt.

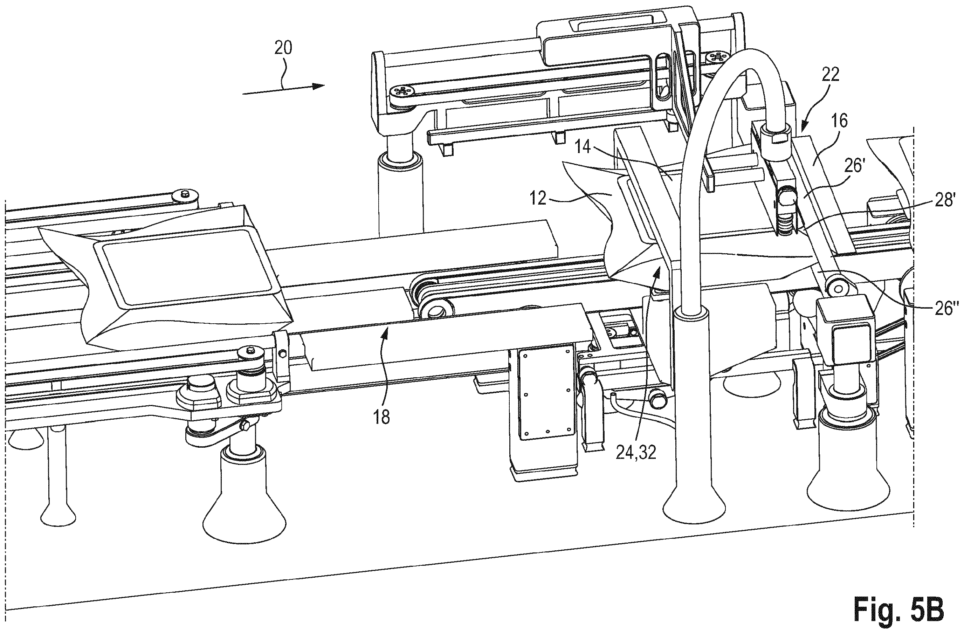

Fig. 5b zeigt einen zweiten Teilschritt des Schrittes 162 des Haltens, in dem der abstehende Verpackungsabschnitt 16 zwischen den Rollen 26', 26" eingezogen wird. Die Rollen 26', 26" werden dabei relativ zueinander aufeinander zu bewegt, bis sie in Kontakt mit dem abstehenden Verpackungsabschnitt 16 sind. Die Rollen 26', 26" werden dann in entgegengesetzter Richtung gedreht, um den abstehenden Verpackungsabschnitt 16 in Transportrichtung 20 zwischen sich einzuziehen.

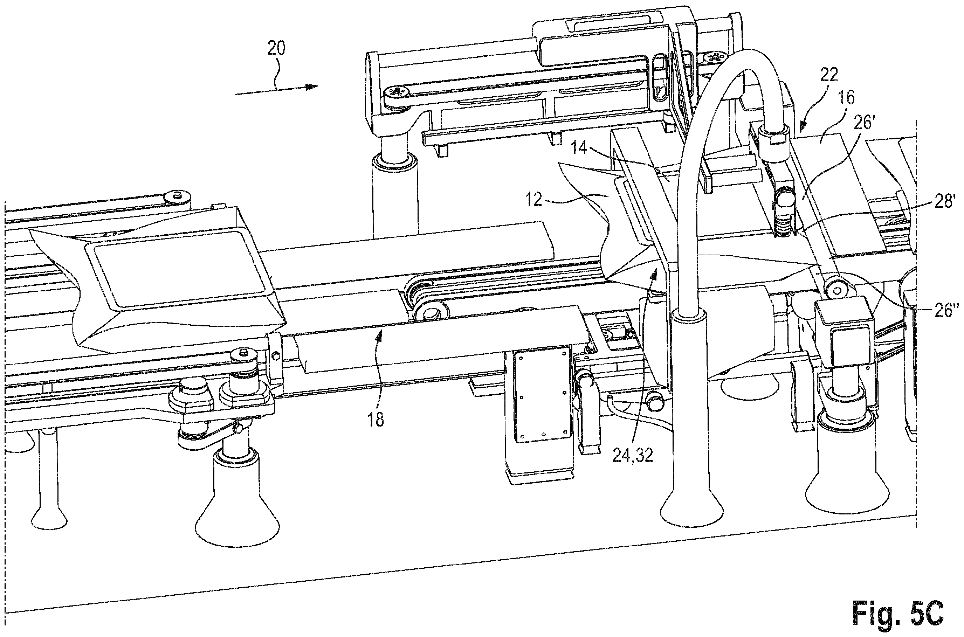

Fig. 5c zeigt eine isometrische Darstellung eines dritten Teilschritts des Schrittes 162 des Haltens, in dem der abstehende Verpackungsabschnitt 16 zwischen den Rollen 26', 26" gehalten wird. Die Rollen 26', 26" können dabei in einer ersten Ausgestaltung zueinander gepresst werden, um den abstehenden Verpackungsabschnitt 16 zwischen sich einzuklemmen. In einer alternativen Ausgestaltung können die Rollen 26', 26" dazu ausgebildet sein, durchgehend entgegengesetzt zu rotieren, um damit eine gleichmäßige und gleichbleibende Zugkraft auf den abstehenden Verpackungsabschnitt 16 auszuüben. Durch diese Zugkraft kann der abstehende Verpackungsabschnitt 16 ebenfalls zwischen den Rollen 26', 26" gehalten werden. In einer weiteren Ausgestaltung kann der Verpackungsabschnitt 16 insbesondere durch gleichbleibendes gleichmäßiges und entgegengesetztes Rotieren der Rollen 26', 26" zueinander und ein Pressen der Rollen 26', 26" aufeinander zwischen den Rollen 26', 26" gehalten werden.

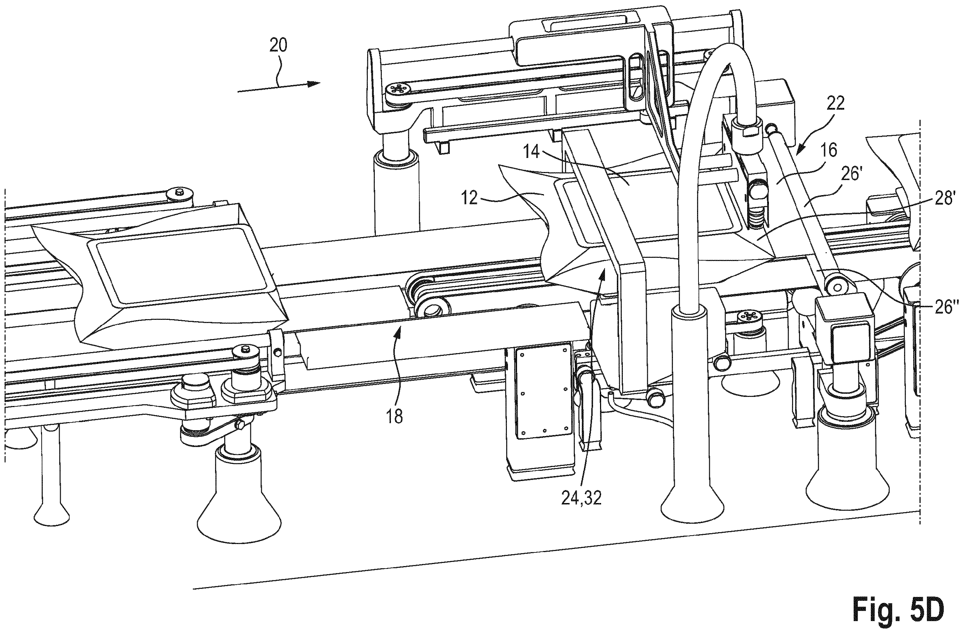

Fig. 5d zeigt eine isometrische Darstellung des Schrittes 164 des Bewegens, in dem die Verpackung 12 und das Objekt 14 von den Rollen 26', 26" durch die Bewegungseinrichtung 24 weg bewegt wird, wodurch der abstehende Verpackungsabschnitt 16 und ein Teilbereich der stromabwärtigen Stirnseite 28" der Verpackung 12 gestreckt werden.

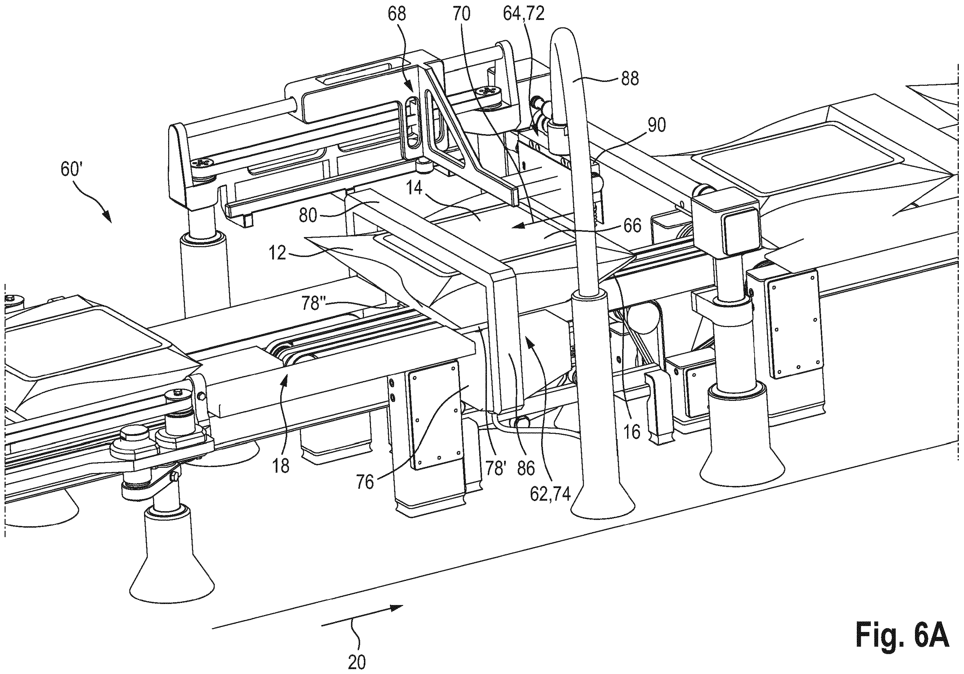

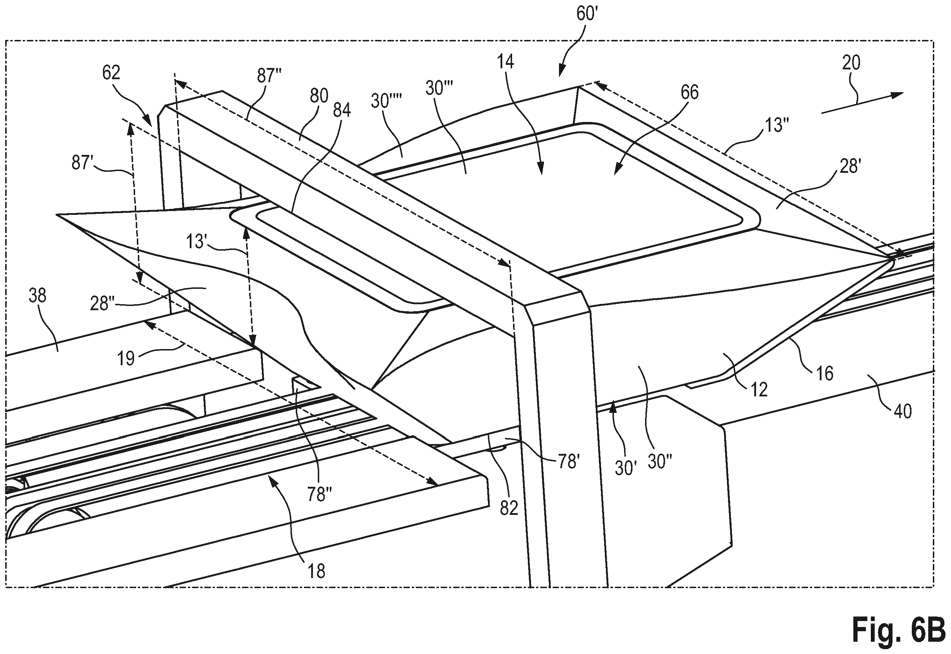

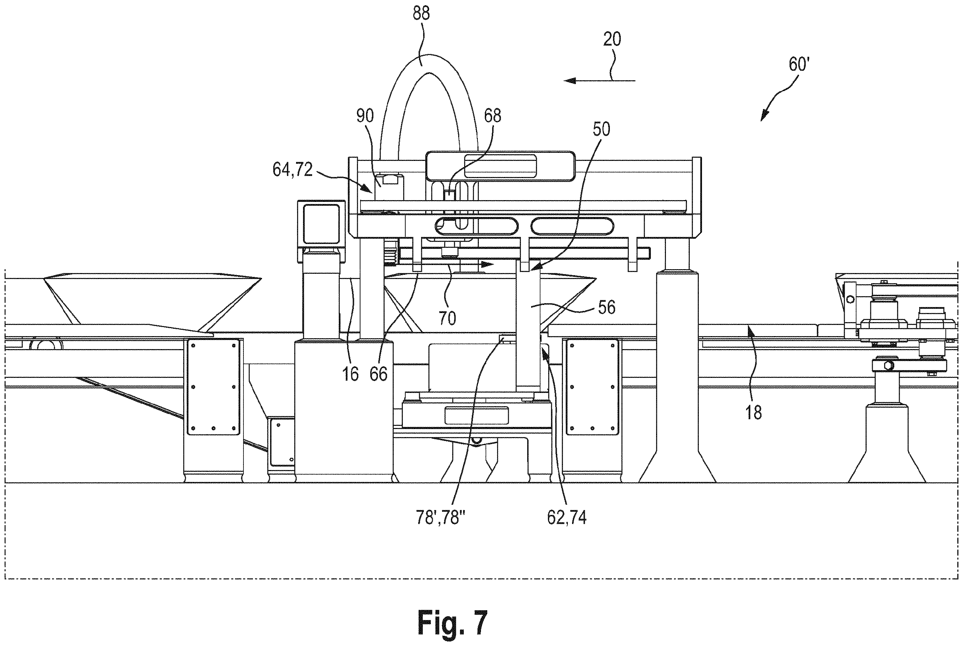

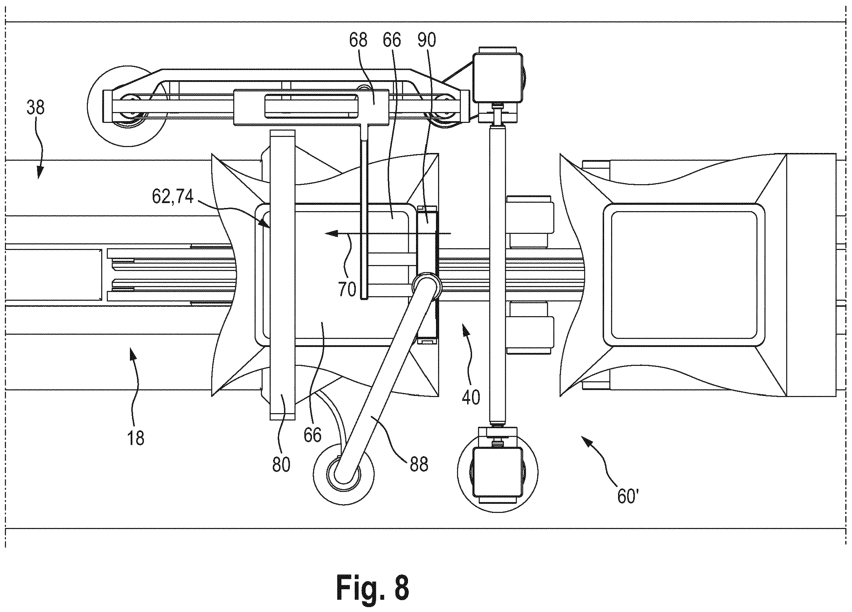

Die Fig. 6A, 6B, 7 und 8 zeigen eine Ausführungsform einer Ausklappvorrichtung 60'. Die Ausklappvorrichtung 60' ist dazu ausgebildet, einen eingeklappten Verpackungsabschnitt 16 einer Verpackung 12 auszuklappen. Ein Objekt 14 ist in der Verpackung 12 eingepackt. Die Ausklappvorrichtung 60' weist eine Transporteinrichtung 18, eine Hebeeinrichtung 62, eine Halteeinrichtung 64 und eine Halteeinrichtung-Antriebseinrichtung 68 auf.

Die Transporteinrichtung 18 ist dazu ausgebildet, das Objekt 14 in einer Transportrichtung 20 zu transportieren. Die Verpackung 12 weist bezüglich der Transportrichtung 20 eine stromaufwärtige Stirnseite 28' und eine stromabwärtige Stirnseite 28" auf. Des Weiteren weist die Verpackung 12 bezüglich der Transportrichtung 20 vier Längsseiten 30', 30", 30‴ und 30ʺʺ auf. Eine der Transporteinrichtung (18) zugewandte Längsseite 30' ist dabei der Transporteinrichtung zugewandt und ist zumindest teilweise in Kontakt mit der Transporteinrichtung 18. Die Verpackung 12 liegt demnach mit der der Transporteinrichtung (18) zugewandten Längsseite 30' auf der Transporteinrichtung 18 auf. Eine obere Längsseite 30‴ ist von der Transporteinrichtung 18 abgewandt. Zwei seitliche Längsseiten 30" und 30ʺʺ sind seitlich von der Transporteinrichtung 18 angeordnet und stehen im Wesentlichen senkrecht auf der Transporteinrichtung 18. Der Verpackungsabschnitt 16 ist mit dem Rest der Verpackung an der stromabwärtigen Stirnseite 28" der Verpackung 12 verbunden. Der Verpackungsabschnitt 16 erstreckt sich zunächst entlang der stromabwärtigen Stirnseite 28" in Richtung der der Transporteinrichtung (18) zugewandten Längsseite 30' der Verpackung 12 und weiter teilweise entlang der der Transporteinrichtung (18) zugewandten Längsseite 30' der Verpackung 12. Der Verpackungsabschnitt 16 ist somit teilweise zwischen der der Transporteinrichtung (18) zugewandten Längsseite 30' der Verpackung 12 und der Transporteinrichtung 18 angeordnet. Somit ist der Verpackungsabschnitt 16 zunächst zwischen der Transporteinrichtung 18 und der der Transporteinrichtung (18) zugewandten Längsseite 30' der Verpackung 12 eingeklappt. Die Transporteinrichtung 18 weist eine Transportebene 38 auf, auf der das Objekt 14 und die Verpackung 12 transportiert werden.

Die Transporteinrichtung 38 weist des Weiteren Aussparungen 40 an den beiden Rändern der Transportebene 38 auf, sodass die Verpackung 12 und das Objekt 14 lediglich in einem mittleren Bereich auf der Transporteinrichtung 18 und der Transportebene 38 aufliegen.

Die Hebeeinrichtung 62 ist dazu ausgebildet, das Objekt 14 mit der Verpackung 12 anzuheben. Die Hebeeinrichtung 62 weist dazu einen Vertikalantrieb 76 zum vertikalen Bewegen des Objekts senkrecht zu der Transportebene 38 auf. In der dargestellten Ausführungsform weist die Hebeeinrichtung 62 des Weiteren eine Klemmeinrichtung 74 auf, die dazu ausgebildet ist, die Verpackung 12 und das Objekt 14 zwischen sich einzuklemmen. Die Klemmeinrichtung 74 weist dazu Hebeelemente 78', 78" und ein Anschlagelement 80 auf. Die Hebeelemente 78', 78" sind so angeordnet, dass sie bei einer vertikalen Bewegung senkrecht zu der Transportebene 78 durch die beiden Aussparungen 40 der Transportebene 38 hindurchbewegt werden. Die Hebeelemente 78', 78" weisen eine Auflagefläche 82 auf, die in Kontakt mit der der Transporteinrichtung (18) zugewandten Längsseite 30' der Verpackung 12 kommen. Dabei kommt die Auflagefläche 82 insbesondere in einem stromaufwärtigen Bereich der der Transporteinrichtung (18) zugewandten Längsseite 30' in Anlage an die der Transporteinrichtung (18) zugewandte Längsseite 30'. Der Vertikalantrieb 76 ist dazu ausgebildet, die Hebeelemente 78', 78" senkrecht zu der Transportebene 38 zu bewegen. Damit ist das Objekt 14 mit der Verpackung 12 senkrecht zu der Transportebene 38 bewegbar. Das Anschlagelement 80 weist eine Anlagefläche 84 auf, an die die Verpackung 12 mit der der Transporteinrichtung (18) abgewandten Längsseite 30‴ bei dem Klemmen in Anlage kommt. Dabei kommt die Anlagefläche 84 insbesondere in einem stromaufwärtigen Bereich der der Transporteinrichtung (18) abgewandten Längsseite 30‴ in Anlage an die der Transporteinrichtung (18) abgewandte Längsseite 30'". Dadurch werden die Verpackung 12 und das Objekt 14 zwischen den Hebeelementen 78', 78" und dem Anschlagelement 80 gehalten. Die Hebeeinrichtung 62 weist des Weiteren einen Rahmen 86 auf, der das Anschlagelement 80 beinhaltet und das Anschlagelement 80 mit den restlichen Komponenten der Hebeeinrichtung 62 verbindet, die größtenteils auf der der Verpackung (12) abgewandten Seite der Transporteinrichtung 18 angeordnet sind. Der Rahmen 86 weist ausgehend von der Transportebene 38 eine Höhe 87' auf, die größer ist als eine Höhe 13' der Verpackung 12. Dadurch kann vermieden werden, dass die Verpackung 12 bei dem Transportieren auf der Transportebene 38 mit dem Anschlagelement 80 in Berührung kommt, insbesondere daran schleift oder hängen bleibt. Ein Kontakt von Verpackung 12 und Anschlagelement 80 kann erst dann erfolgen, wenn die Verpackung 12 mit den Hebeelementen 78', 78" vertikal von der Transportebene 38 weg bewegt wird und in Anlage an das Anschlagelement 80 kommt. Der Rahmen 86 weist des Weiteren eine Breite 87" auf, die größer ist als eine Breite 13" der Verpackung 12 und größer ist als eine Breite 19 der Transporteinrichtung 18. Dadurch kann vermieden werden, dass die Verpackung 12 bei dem Transportieren seitlich mit dem Rahmen 86 in Kontakt kommt, insbesondere daran schleift oder hängen bleibt.

Die Halteeinrichtung 64 weist eine Saugeinrichtung 72 auf, die einen dem Verpackungsabschnitt 16 benachbarten Bereich 66 der Verpackung 12 ansaugt und hält. In der dargestellten Ausführungsform entspricht der benachbarte Bereich 66 einem stromabwärtigen Bereich der der Transporteinrichtung (18) abgewandten Längsseite 30'". Die Saugeinrichtung 72 weist des Weiteren einen Saugkopf 90, einen Schlauch 88 und eine nicht dargestellte Einrichtung zum Generieren eines Unterdrucks auf. Der Saugkopf 90 ist in Anlage mit dem benachbarten Bereich 66, um diesen anzusaugen. Der Schlauch 88 verbindet den Saugkopf 90 mit der nicht dargestellten Einrichtung zum Generieren eines Unterdrucks. Die Einrichtung zum Generieren eines Unterdrucks kann beispielsweise eine Vakuumpumpe sein.

Die Halteeinrichtung-Antriebseinrichtung 68 ist dazu ausgebildet, die Saugeinrichtung 72 parallel zu der Transportrichtung 20 zu bewegen. Dabei kann die Halteeinrichtung-Antriebseinrichtung 68 die Saugeinrichtung entgegengesetzt zu der Transportrichtung bewegen, wenn die Saugeinrichtung 72 den benachbarten Bereich 66 der Verpackung 12 ansaugt und hält. Dadurch wird der eingeklappte Verpackungsabschnitt 16 ausgeklappt. Die Halteeinrichtung-Antriebseinrichtung 68 kann des weiteren dazu ausgebildet sein, die Saugeinrichtung 72 mittels einer Schwenkbewegung oder Hubbewegung zu bewegen.

Alternativ zu der in den Fig. 6A, 6B, 7 und 8 beschriebenen Ausführungsform einer Ausklappvorrichtung 60' kann vorgesehen sein, dass der zunächst eingeklappte Verpackungsabschnitt 16 statt auf die der Transporteinrichtung 18 zugewandte Seite der Verpackung 12 auf die der Transporteinrichtung 18 abgewandte Längsseite 30‴ der Verpackung 12 eingeklappt ist. Dementsprechend ist die Halteeinrichtung 62 auch auf der der Transporteinrichtung 18 zugewandten Längsseite 30' der Verpackung 12 angeordnet und greift an der der Transporteinrichtung 18 zugewandten Längsseite 30' der Verpackung 12 an, wobei die der Transporteinrichtung 18 zugewandte Längsseite 30' ein benachbarter Bereich 66 des Verpackungsabschnitts 16 ist. Mit einer solchen Anordnung kann der eingeklappte Verpackungsabschnitt ebenfalls ausgeklappt werden.

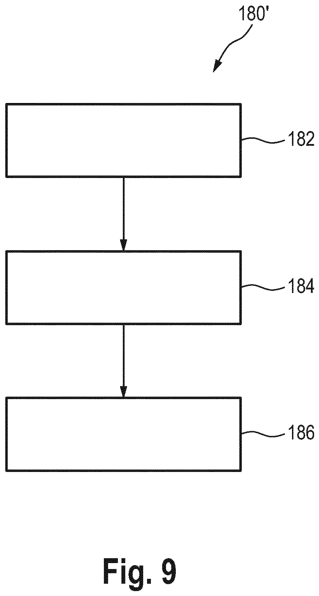

Fig. 9 zeigt eine Ausführungsform eines Verfahrens 180' zum Ausklappen eines Verpackungsteils 16 einer Verpackung 12, insbesondere eines Beutels, für ein Objekt 14, insbesondere ein pharmazeutisches oder kosmetisches Objekt. Die Ausklappvorrichtung 60', die in Fig. 6A bis 8 beschrieben ist, ist insbesondere dazu geeignet, das Verfahren 180' zum Ausklappen auszuführen. Das Objekt 14 wird dabei auf einer Transporteinrichtung 18 in einer Transportrichtung 20 transportiert. Der Verpackungsabschnitt 16 ist zunächst zwischen der Transporteinrichtung 18 und der Verpackung 12, insbesondere einer der Transporteinrichtung (18) zugewandten Längsseite 30' der Verpackung 12, eingeklappt. Die einzelnen Verfahrensschritte werden im Folgenden genauer beschrieben.

In einem ersten Schritt 182 wird das Objekt 14 von der Transporteinrichtung 18 durch eine Hebeeinrichtung 62 angehoben. Die Hebeeinrichtung 62 kann dabei auf der der Transporteinrichtung (18) abgewandten Seite der Verpackung ein Anschlagelement 80 aufweisen, gegen das die Verpackung 12 und das Objekt 14 bei dem Anheben 182 des Objekts 14 gedrückt wird. Die Hebeeinrichtung 62 ist dadurch insbesondere ausgebildet, um die Verpackung 12 und das Objekt 14 anzuheben und zu halten.

Vorzugsweise hält in dem Schritt des Anhebens 182 die Hebeeinrichtung 62 die Verpackung 12 an mindestens einer Seitenfläche 30', 30", 30''', 30"".

Alternativ oder zusätzlich kann in dem ersten Schritt 182 auch die Hebeeinrichtung 62 die Transporteinrichtung 18, insbesondere die Transportebene 38 der Transporteinrichtung 18, zumindest in dem Auflagebereich der Verpackung 12 auf der Transportebene 38 anheben.

In einem zweiten Schritt 184 wird ein dem Verpackungsabschnitt 16 benachbarter Bereich 66 der Verpackung 12 durch eine Halteeinrichtung 64 gehalten. Der benachbarte Bereich 66 entspricht dabei insbesondere einem stromabwärtigen Bereich der der Transporteinrichtung (18) abgewandten Längsseite 30'". Die Halteeinrichtung 64 kann vorzugsweise eine Saugeinrichtung 72 aufweisen, die den benachbarten Bereich 66 ansaugt und hält.

Vorzugsweise hält in dem Schritt des Haltens 184 die Halteeinrichtung 64 die Verpackung 12 an der der Transporteinrichtung (18) abgewandten Längsseite 30'".

In einem dritten Schritt 186 wird die Halteeinrichtung 64 in eine von dem Verpackungsabschnitt 16 weg weisende Richtung 70 bewegt. Bei dieser Bewegung wird auf den eingeklappten Verpackungsabschnitt 16 eine Zugkraft ausgeübt, die den eingeklappten Verpackungsabschnitt 16 aus seiner eingeklappten Position zwischen der Transporteinrichtung 18 und der Verpackung 12 herauszieht und damit ausklappt.

Vorzugsweise wird in dem Schritt des Bewegens 186 die Haltevorrichtung 64 parallel zu der Transportrichtung 20 bewegt, wodurch der Verpackungsabschnitt 16 ausgeklappt wird.

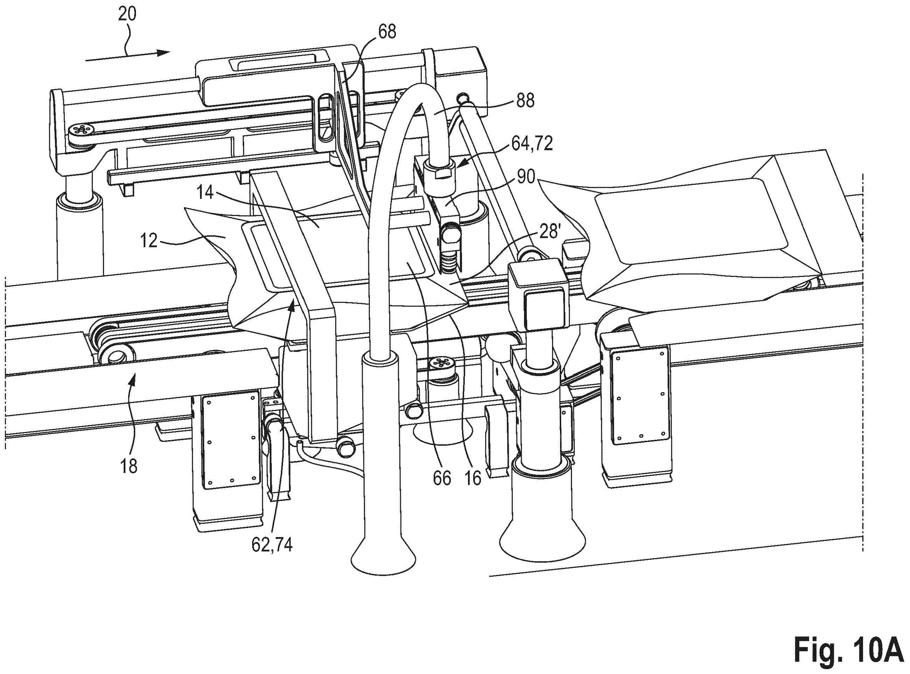

Die Fig. 10a bis 10c zeigen eine isometrische Darstellung der einzelnen Verfahrensschritte des Verfahrens 180' zum Ausklappen des Verpackungsabschnittes 16, das in Fig. 9 beschrieben ist.

Fig. 10a zeigt den Schritt des Anhebens 182, in dem die Hebeeinrichtung 62 auf der der Transporteinrichtung (18) zugewandten Seite des Objekts 14 angeordnet ist und durch eine Bewegung senkrecht zu der Transportebene 38 dazu ausgebildet ist, das Objekt 14 und die Verpackung 12 anzuheben. In einer vorteilhaften Ausgestaltung wird dabei die der Transporteinrichtung (18) abgewandten Längsseite 30‴ gegen ein Anschlagelement 80 gedrückt. Das Anschlagelement 80 kommt dabei mit einem stromaufwärtigen Bereich der der Transporteinrichtung (18) abgewandten Längsseite 30‴ in Kontakt. Dadurch, dass die Hebeeinrichtung 64 das Objekt 14 und die Verpackung 12 gegen das Anschlagelement 80 drückt, wird das Objekt 14 und die Verpackung 12 dadurch geklemmt und gehalten.

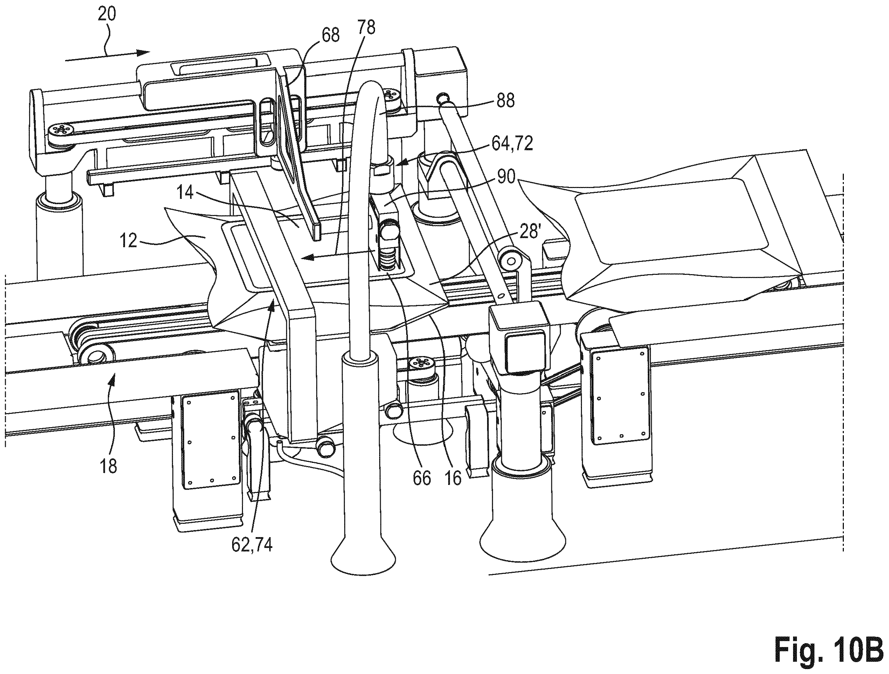

Fig. 10b zeigt eine isometrische Darstellung des Schrittes des Haltens 184, in dem eine Saugeinrichtung 72 einen stromabwärtigen Bereich der der Transporteinrichtung (18) abgewandten Längsseite 30‴ ansaugt. Der eingeklappte Verpackungsabschnitt ist an der stromabwärtigen Stirnseite 28" mit der Verpackung 12 verbunden. Damit entspricht der stromabwärtigen Bereich der der Transporteinrichtung (18) abgewandten Längsseite 30‴ einem dem Verpackungsabschnitt 16 benachbarten Bereich 66.

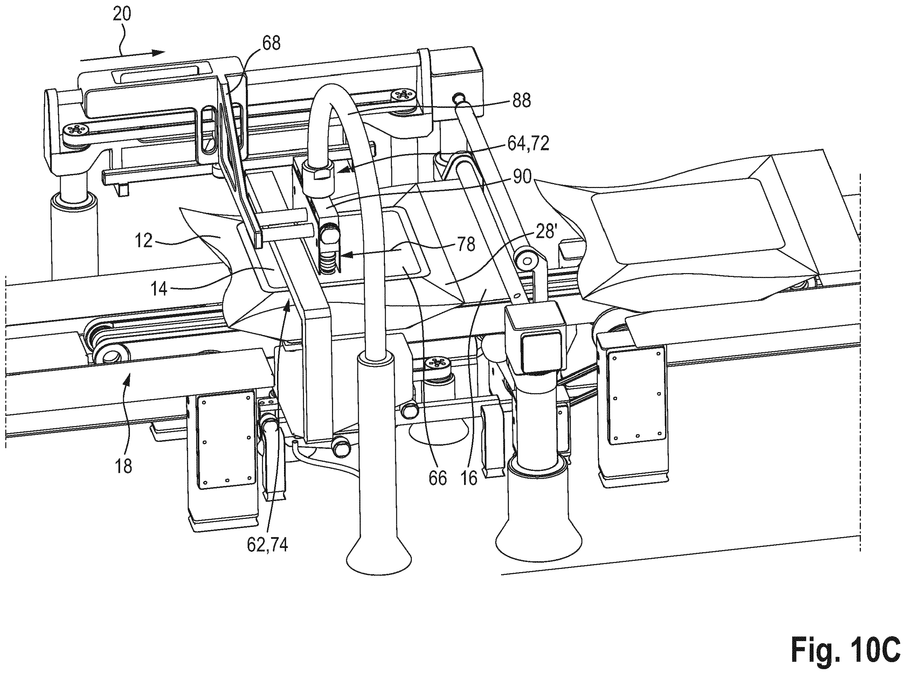

Fig. 10c zeigt eine isometrische Darstellung des Schrittes des Bewegens 186, in dem die Halteeinrichtung mittels einer Halteeinrichtung-Antriebseinrichtung entgegengesetzt zu der Transportrichtung 20 und weg von dem Verpackungsabschnitt 16 bewegt wird. Die Saugeinrichtung 72 wird dabei insbesondere zu dem Anschlagelement 80 der Hebeeinrichtung 62 hin bewegt. Durch diese Bewegung wird der eingeklappte Verpackungsabschnitt 16 aus einer eingeklappten Position zwischen der Transporteinrichtung 18 und der der Transporteinrichtung (18) zugewandten Längsseite 30' herausgezogen und aufgeklappt.

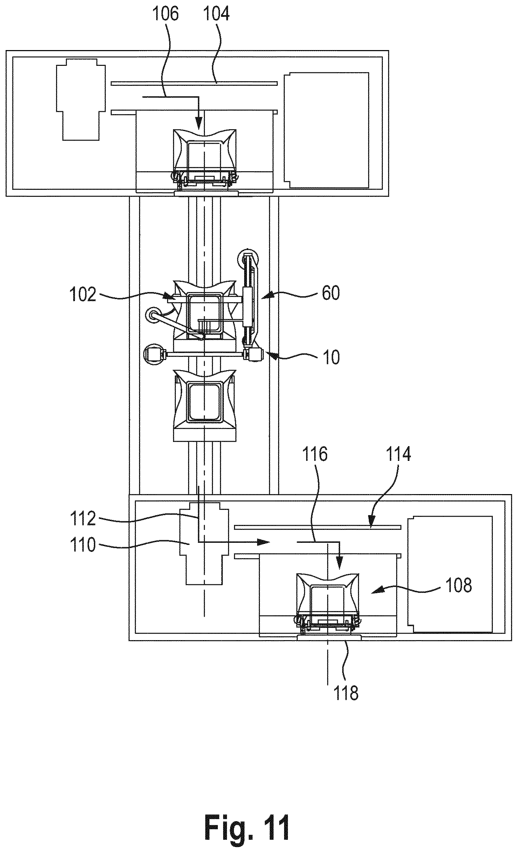

Fig. 11 zeigt eine Ausführungsform eines Entpackungssystems 100. Das Entpackungssystem 100 weist eine Transporteinrichtung 18, eine Ausklappvorrichtung 60, eine Streckvorrichtung 10, und eine Abtrennvorrichtung 108 auf.

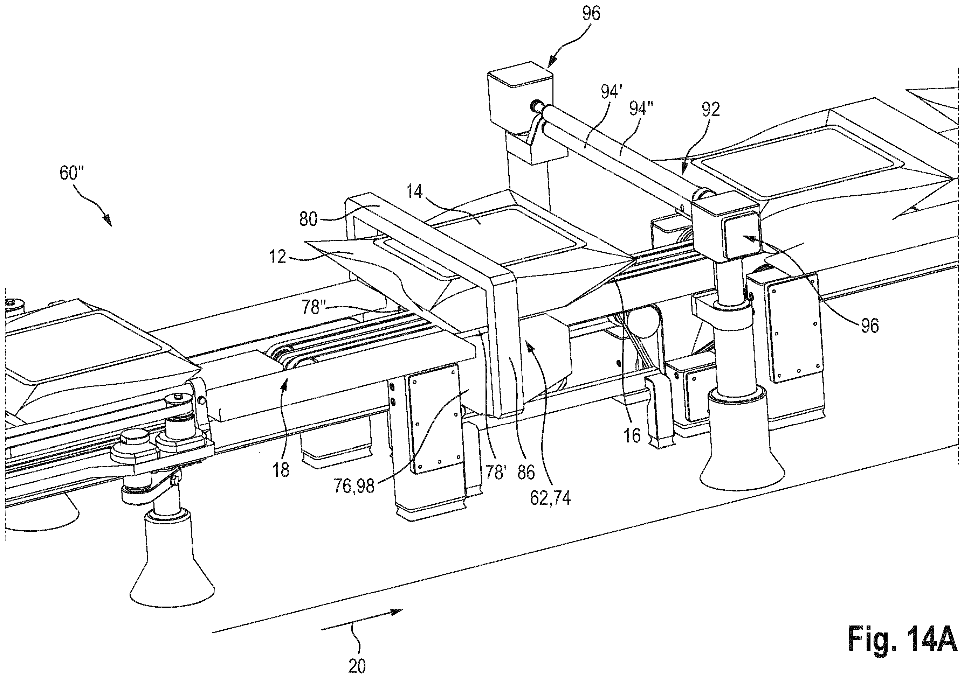

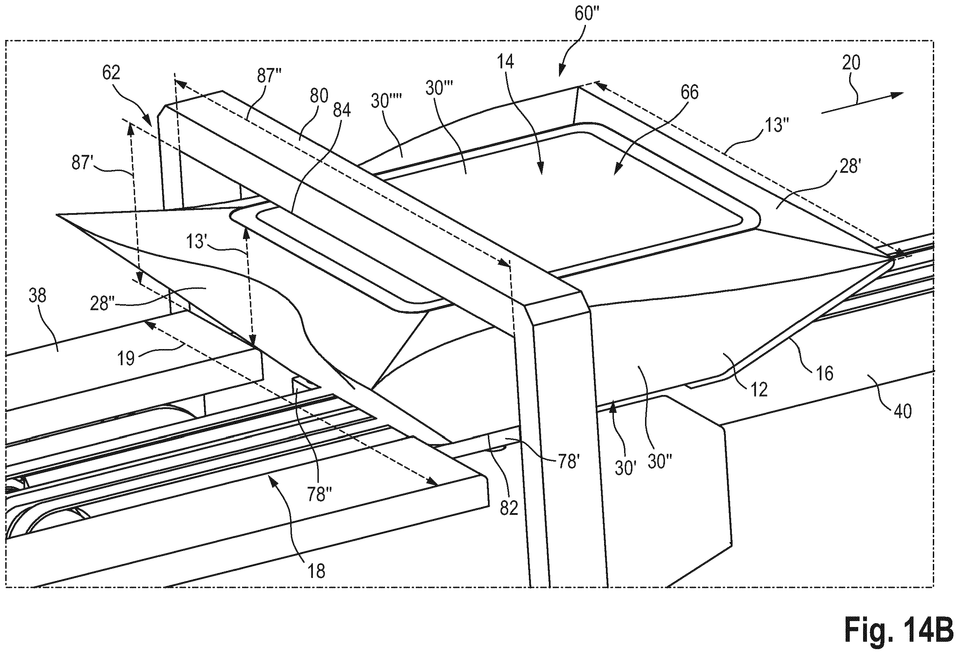

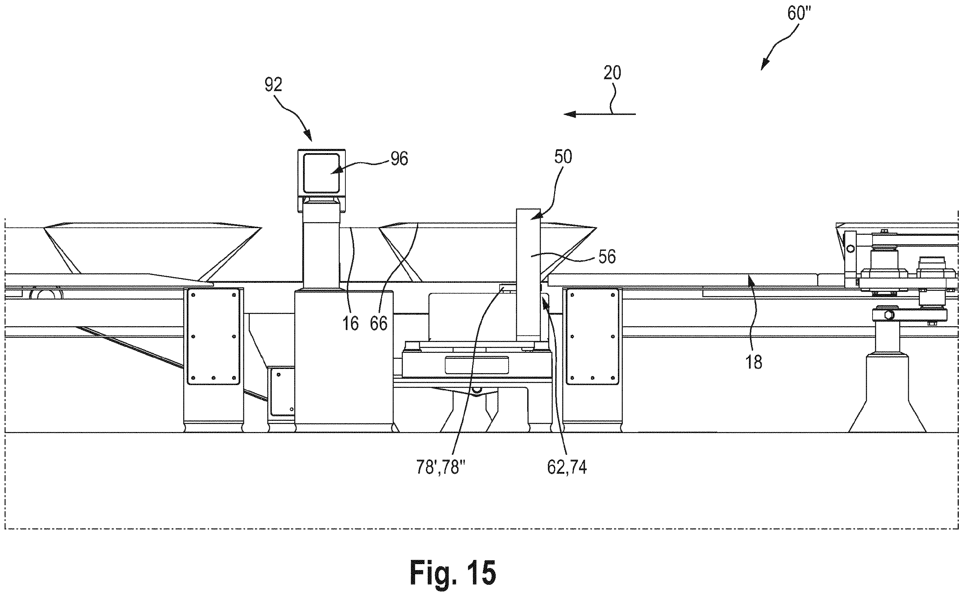

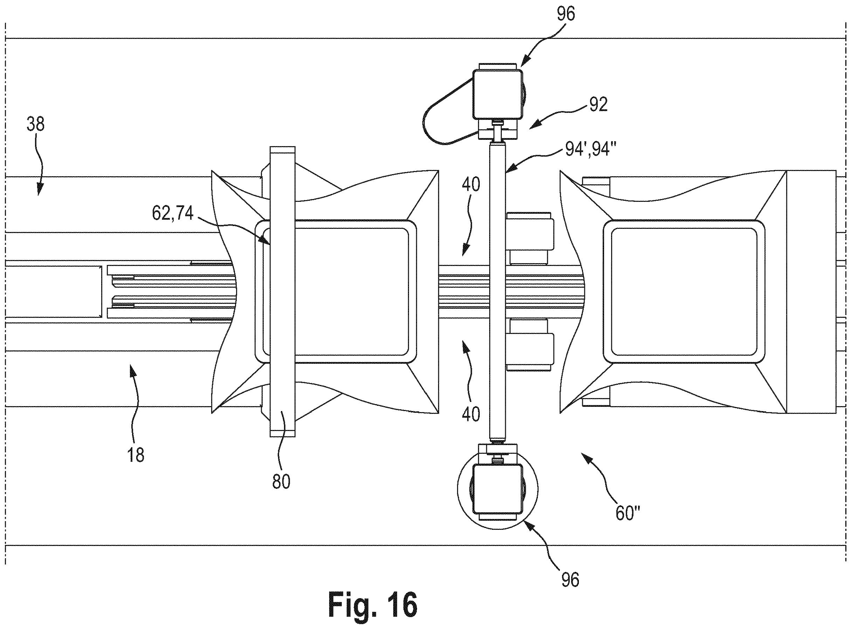

Die Ausklappvorrichtung 60 kann hierbei entweder durch die in den Fig. 6A, 6B, 7, 8 beschriebene Ausführungsform einer Ausklappvorrichtung 60' oder durch die in den Fig. 14A, 14B, 15, 16 beschriebene Ausführungsform einer Ausklappvorrichtung 60" gebildet sein.

Die Transporteinrichtung 18 weist eine Transportebene 38 auf, auf der ein Objekt 14, insbesondere ein pharmazeutisches oder kosmetisches Objekt, transportiert wird. Das Objekt ist in einer Verpackung, insbesondere einem Beutel, eingepackt. Die Verpackung 12 weist einen Verpackungsabschnitt 16 auf, der zunächst zwischen der Transporteinrichtung 18 und der Verpackung 12 eingeklappt ist. Das Objekt 14 wird auf der Transporteinrichtung 18 in einer Transportrichtung 20 transportiert. Die Transporteinrichtung 18 ist dazu ausgebildet, das eingepackte Objekt 14 zu der Ausklappvorrichtung 60 hin, von der Streckvorrichtung 10 zu der Abtrennvorrichtung 108, und von der Abtrennvorrichtung 108 weg zu transportieren. Dabei sind die Ausklappvorrichtung 60 und die Streckvorrichtung 10 unmittelbar beieinander angeordnet. Das Entpackungssystem 100 kann dabei insbesondere einen oder mehrere erste bewegbare Trägerhalter 102 aufweisen, die die Hebeeinrichtung 64 der Ausklappvorrichtung 60 und die Bewegungseinrichtung 24 der Streckvorrichtung 10 ausbilden. Das Entpackungssystem 100 kann des Weiteren insbesondere einen oder mehrere zweite bewegbare Trägerhalter 103 aufweisen, die die Anschlageinrichtung 92 der Ausklappvorrichtung 60" und die Halteeinrichtung 22 der Streckvorrichtung 10 ausbilden. Die ersten und zweiten Trägerhalter 102, 103 können insbesondere senkrecht und/oder parallel zu der Transportrichtung bewegbar sein.

In einer alternativen Ausführungsform kann auch vorgesehen sein, dass die Streckvorrichtung 10 und die Ausklappvorrichtung 60 voneinander beabstandet angeordnet sind und die Transporteinrichtung 18 dazu ausgebildet ist, das Objekt 14 von der Ausklappvorrichtung 60 zu der Streckvorrichtung 10 zu transportieren.

Die Abtrennvorrichtung 108 weist ein Schneidmesser, eine Entnahmevorrichtung und eine Entsorgungseinrichtung auf. Das Schneidmesser ist so angeordnet, dass es senkrecht zu der Transportrichtung bewegbar ist, um den abstehenden Verpackungsabschnitt 16 abzuschneiden und somit die Verpackung 12 zu öffnen. In einer alternativen Ausgestaltung der Erfindung kann statt dem Schneidmesser auch ein Laser, ein Greifmesser oder ein thermisches Trennverfahren, wie beispielsweise ein heißer Draht oder Heißluft, verwendet werden, um den abstehenden Verpackungsabschnitt 16 von der Verpackung 12 abzutrennen. Die Entnahmeeinrichtung ist dazu ausgebildet, das Objekt 14 aus der Verpackung 12 zu entnehmen, das heißt also die Entnahmeeinrichtung ist dazu ausgebildet, das Objekt 14 und die Verpackung 12 voneinander zu trennen. In dem Stand der Technik sind verschiedene Verfahren zum Entnehmen eines Objektes aus einer geöffneten Verpackung bekannt. Beispielsweise kann hierzu eine Halteeinrichtung die Verpackung halten und eine Greifeinrichtung das Objekt aus der Verpackung herausnehmen. Alternativ kann das Objekt mit einer Halteeinrichtung festgehalten werden, während eine Greifeinrichtung die Verpackung hält und von dem Objekt 14 herunterzieht.

Die Entsorgungseinrichtung ist dazu ausgebildet, den abgetrennten Verpackungsabschnitt 16 und den Rest der Verpackung 12 zu entsorgen. Die beiden getrennten Verpackungsteile der Verpackung 12 können dabei getrennt voneinander oder gemeinsam entsorgt werden. Die Entsorgungseinrichtung kann hierzu beispielsweise eine weitere Transporteinrichtung, beispielsweise ein Förderband, aufweisen, auf das die Verpackungsreste gelegt werden und von dem die Verpackungsreste von der Abtrennvorrichtung 108 weg transportiert werden.

Die Transporteinrichtung kann dazu ausgebildet sein, das entpackte Objekt 14 von der Abtrennvorrichtung 108 in einen Reinraum 124 zu transportieren.

Aufgrund der speziellen räumlichen Anforderungen, die auf beispielsweise Limitierungen durch und den unterschiedlichen Platzbedarf in Industriehallen zurückgehen, kann es von Vorteil sein, wenn die Transporteinrichtung 18 nicht linear aufgebaut ist sondern zwischen den einzelnen Vorrichtungen, der Ausklappvorrichtung 60, der Streckvorrichtung 10 und/oder der Abtrennvorrichtung 108 sowie stromaufwärts von der Ausklappvorrichtung 60 und stromabwärts von der Abtrennvorrichtung 108, Umlenkabschnitte aufweist, die eine Richtungsänderung der Transportrichtung 20 bewirken.

Die Transporteinrichtung 18 kann dabei insbesondere stromaufwärts von der Aufklappvorrichtung 60 einen ersten Umlenkabschnitt 104 aufweisen, der eine erste Richtungsänderung 106 der Transportrichtung 20 bewirkt, insbesondere wobei die erste Richtungsänderung 106 90° beträgt.

Die Transporteinrichtung 18 kann zwischen der Streckvorrichtung 10 und der Abtrennvorrichtung 108 einen zweiten Umlenkabschnitt 110 aufweisen, der eine zweite Richtungsänderung 112 der Transportrichtung 20 bewirkt, insbesondere wobei die zweite Richtungsänderung 112 90° beträgt.

Die Transporteinrichtung 18 kann stromaufwärts von der, in der oder stromabwärts von der Abtrennvorrichtung 108 einen dritten Umlenkabschnitt 114 aufweisen, der eine dritte Richtungsänderung 116 der Transportrichtung 20 bewirkt, insbesondere wobei die dritte Richtungsänderung 116 90° beträgt.

In einer alternativen Ausgestaltung des Entpackungssystems kann vorgesehen sein, dass das Entpackungssystem eine Ausklappvorrichtung 60", wie in den Fig. 14A bis 18C beschrieben, eine Streckvorrichtung 10, wie in den Fig. 1A bis 5D beschrieben, und eine Abtrennvorrichtung 108, die identisch zu der Abtrennvorrichtung 108 des in Fig. 11 beschriebenen Entpackungssystems 100 ist, aufweist.

Allerdings weist die Ausklappvorrichtung 60" keine Hebeeinrichtung und die Streckvorrichtung 10 keine Bewegungseinrichtung auf. Die Verpackung wird stattdessen durchgehend auf der Transporteinrichtung 18 stromabwärts in der Transportrichtung 20 transportiert.

Das Entpackungssystem weist einen Trägerhalter 103 auf, der die Anschlageinrichtung 92 der Aufklappvorrichtung 60" und die Halteeinrichtung 24 der Streckvorrichtung 10 ausbildet. Damit entspricht die Rolle 94' der Anschlageinrichtung 92 der Rolle 26" der Haltevorrichtung 24und die Rolle 94" der Anschlageinrichtung 92 der Rolle 26" der Haltevorrichtung 24.

Eine solche Anordnung eines Entpackungssystems erfordert, dass der Verpackungsabschnitt 16 auf der stromaufwärts gelegenen Stirnseite der Verpackung 12 angeordnet ist und sich von dort auf eine der Längsseiten erstreckt, die der Transporteinrichtung entweder zugewandt oder abgewandt sind. Des Weiteren sind die Rollen 26', 26" bzw. 94', 94" relativ zueinander bewegbar ausgebildet, zum einen um die Rollen soweit voneinander zu beabstanden, dass die Verpackung 12 zwischen den Rollen hindurchtransportiert werden kann und dass eine der Rollen einen Anschlag für den eingeklappten Verpackungsabschnitt bilden kann, und zum anderen um den Verpackungsabschnitt 16 zwischen sich zu klemmen und zu halten.

Im Folgenden wird die Funktionsweise des alternativen Entpackungssystems beschrieben.

Das Objekt 14 wird auf der Transporteinrichtung 18 stromabwärts in Transportrichtung 20 transportiert. Die Rollen 26', 26" bzw. 94', 94" werden soweit voneinander beabstandet, dass die Verpackung 12 zwischen den Rollen 26', 26" bzw. 94', 94" hindurchgeführt werden kann. Die Rollen 26', 26" bzw. 94', 94" werden in Anlage an die der Transporteinrichtung 18 zugewandte und abgewandte Längsseite 30', 30" gebracht. Eine der Rollen bildet dadurch einen Anschlag für den eingeklappten Verpackungsabschnitt 16. Die Transporteinrichtung 18 transportiert das Objekt 12 weiter, wodurch der Verpackungsabschnitt 16 an eine der Rollen, die den Anschlag bildet, gedrückt wird. Dadurch wird der Verpackungsabschnitt 16 ausgeklappt. Die Rollen werden dann relativ zueinander bewegt um den Verpackungsabschnitt 16 zu klemmen und zu halten, wodurch der Verpackungsabschnitt 16 gestreckt wird.

Vorzugsweise weist das alternative Entpackungssystem eine Klemmvorrichtung auf, die sowohl parallel als auch senkrecht zu der Transportrichtung bewegbar ausgebildet ist. Die Klemmeinrichtung ist stromabwärts nach dem Trägerhalter 103 angeordnet, der die Anschlageinrichtung 92 und die Halteeinrichtung 24 ausbildet. Die Klemmvorrichtung klemmt die Verpackung 12 und das Objekt 14 zwischen sich ein, nach dem dieses die Rollen teilweise passiert hat. Damit das Objekt 14 und die Verpackung 12 dadurch nur kurz oder gar nicht gestoppt werden, bewegt sich die Klemmvorrrichtung nach dem Klemmen stromabwärts in Transportrichtung 20 mit dem Objekt mit einer Geschwindigkeit mit, die der Fördergeschwindigkeit der Transporteinrichtung 18 entspricht. Dadurch wird das Ausklappen und Strecken verbessert.

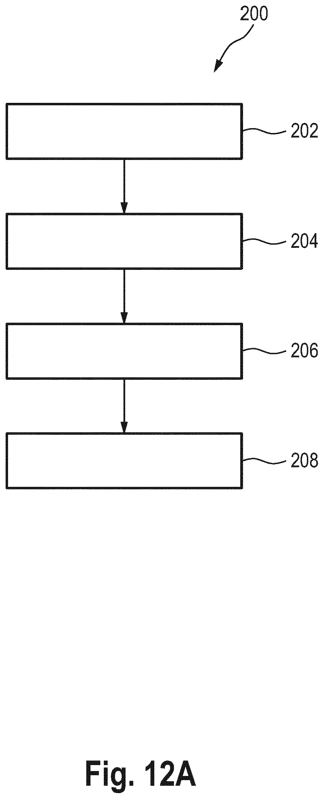

Fig. 12 A zeigt eine erste Ausführungsform eines Verfahrens 200' zum Entpacken eines Objekts 14, insbesondere eines pharmazeutischen oder kosmetischen Objekts, aus einer Verpackung 12, insbesondere eines Beutels. Das Objekt 14 wird auf einer Transporteinrichtung 18 in einer Transportrichtung 20 transportiert. Ein Verpackungsabschnitt 16 der Verpackung 12 ist zunächst zwischen der Transporteinrichtung 18 und der Verpackung 12 eingeklappt.

In einem Schritt 202 wird der Verpackungsabschnitt 16 mittels des Verfahrens 180, das in den Fig. 9 und 10a bis 10c beschrieben ist, ausgeklappt.

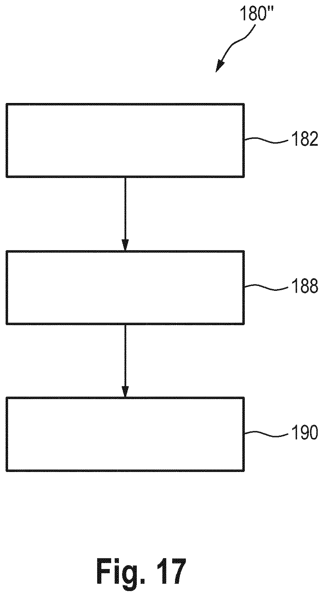

Das Verfahren 180 kann hierbei entweder durch die in der Fig. 9 beschriebene Ausführungsform eines Verfahrens zum Ausklappen 180' oder durch die in der Fig. 17 beschriebene Ausführungsform eines Verfahrens zum Ausklappen 180" ausgeführt werden.

In einem weiteren Schritt 204 wird der abstehende Verpackungsabschnitt 16 mittels des Verfahrens 160, das in den Fig. 4 und 5a bis 5d beschrieben ist, gestreckt.

In einem weiteren Schritt 206 wird der abstehende Verpackungsabschnitt 16 abgetrennt.

In einem weiteren Schritt 208 wird das Objekt 14 aus der geöffneten Verpackung 12 entnommen.

Vorzugsweise werden die einzelnen Schritte 202 bis 208 des Verfahrens 200' zum Entpacken nacheinander ausgeführt.

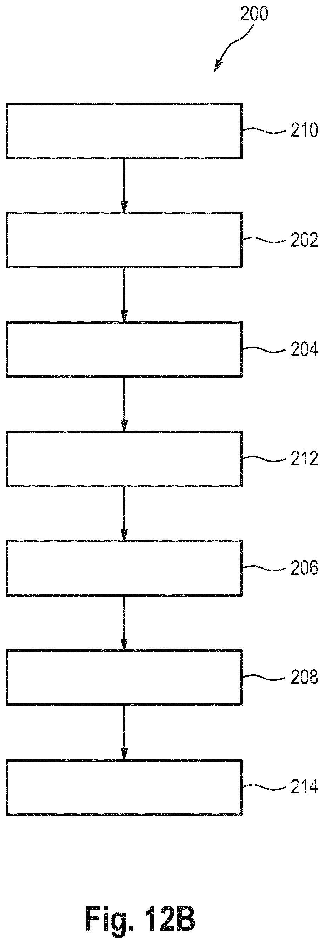

Fig. 12 B zeigt eine zweite Ausführungsform eines Verfahrens 200" zum Entpacken eines Objekts 14, insbesondere eines pharmazeutischen oder kosmetischen Objekts, aus einer Verpackung 12, insbesondere eines Beutels. Das Objekt 14 wird auf einer Transporteinrichtung 18 in einer Transportrichtung 20 transportiert. Ein Verpackungsabschnitt 16 der Verpackung 12 ist zunächst zwischen der Transporteinrichtung 18 und der Verpackung 12 eingeklappt. Die einzelnen Verfahrensschritte werden im Folgenden genauer beschrieben.

In einem Schritt 210 wird das Objekt 14 auf der Transporteinrichtung 18 antransportiert.

Vorzugsweise wird das Objekt 14 in dem Schritt 210 des Antransportieren in einem ersten Umlenkabschnitt 104 umgelenkt, wobei die Transportrichtung 20 geändert wird, insbesondere wobei diese Richtungsänderung 90° beträgt.

In einem weiteren Schritt 202 wird der Verpackungsabschnitt 16 mittels des Verfahrens 180, das in den Fig. 9 und 10a bis 10c beschrieben ist, ausgeklappt.

Das Verfahren 180 kann hierbei entweder durch die in der Fig. 9 beschriebene Ausführungsform eines Verfahrens zum Ausklappen 180' oder durch die in der Fig. 17 beschriebene Ausführungsform eines Verfahrens zum Ausklappen 180" ausgeführt werden.

In einem weiteren Schritt 204 wird der abstehende Verpackungsabschnitt 16 mittels des Verfahrens 160, das in den Fig. 4 und 5a bis 5d beschrieben ist, gestreckt.

In einem weiteren Schritt 212 wird das Objekt 14 auf der Transporteinrichtung 18 weitertransportiert.

Vorzugsweise wird das Objekt 14 in dem Schritt 212 des Weitertransportierens in einem zweiten Umlenkabschnitt 110 umgelenkt, wobei die Transportrichtung 20 geändert wird, insbesondere wobei diese Richtungsänderung 90° beträgt.

In einem weiteren Schritt 206 wird der abstehende Verpackungsabschnitt 16 abgetrennt.

In einem weiteren Schritt 208 wird das Objekt 14 aus der geöffneten Verpackung 12 entnommen.

In einem weiteren Schritt 214 wird das Objekt 14 auf der Transporteinrichtung 18 abtransportiert.

Vorzugsweise wird das Objekt 14 in dem Schritt 214 des Abtransportierens oder in dem Schritt 212 des Weitertransportierens in einem dritten Umlenkabschnitt 114 der Transporteinrichtung 18 umgelenkt, wobei die Transportrichtung 20 geändert wird, insbesondere wobei diese Richtungsänderung 90° beträgt.

Vorzugsweise wird in dem Schritt 214 des Abtransportierens das Objekt 14 in einen Reinraum 124 transportiert.

Vorzugsweise werden die einzelnen Schritte 210, 202, 204, 212, 206, 208 und 214 des Verfahrens 200" zum Entpacken nacheinander ausgeführt.

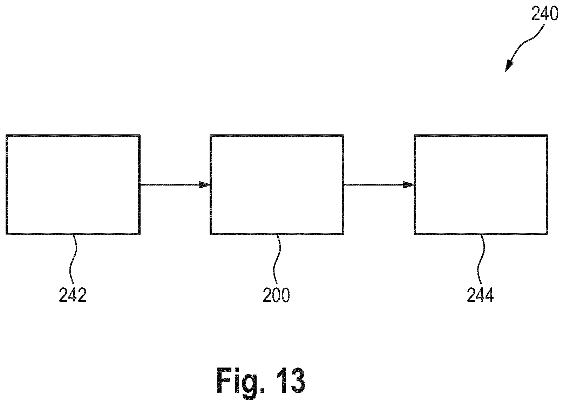

Fig. 13 zeigt eine schematische Darstellung einer Füllanlage 140. Allgemein sind Füllanlagen dazu ausgebildet, ein Flüssigkeit aufbewahrendes Objekt zu entpacken, die Flüssigkeit in Behälter abzufüllen bzw. umzufüllen und die Behälter anschließend zu verpacken. Die Füllanlagen weisen dazu meist eine Entpackungsvorrichtung, eine Abfüllvorrichtung und eine Einpackvorrichtung auf.

Die in Fig. 13 beschriebene Füllanlage 140 weist vorgelagerte Module 142, ein Entpackungssystem 100 und nachgelagerte Module 144 auf. Das Entpackungssystem 100 kann dabei dem in Fig. 11 beschriebenen Entpackungssystem 100 entsprechen.

Die vorgelagerten Module 142 können mindestens eines der folgenden Module enthalten:
- eine Zuführvorrichtung zum Zuführen des verpackten Objekts 14, und
- eine Positioniervorrichtung zum Positionieren des verpackten Objekts 14 auf der Transporteinrichtung 18, wobei die Objekt 14 so positioniert wird, dass der Verpackungsabschnitt 16 bezüglich der Transportrichtung 20 an einer Stirnseite 28', 28" der Verpackung 12 angeordnet ist und zwischen der der Verpackung 12 und der Transporteinrichtung 18 eingeklappt ist.

Die nachgelagerten Module 144 können mindestens eines der folgenden Module enthalten:
- eine Öffnungsvorrichtung zum Öffnen der entpackten Objekte 14, wobei die Objekte 14 insbesondere eine Schutzfolie oder einen Deckel an ihrer der Transporteinrichtung (18) abgewandten Seite aufweisen können, wobei die Öffnungsvorrichtung dazu ausgebildet ist, die Schutzfolie abzuziehen oder den Deckel zu öffnen,
- eine Füllstation zum Abfüllen/Umfüllen einer Flüssigkeit, die in dem entpackten Objekt 14 enthalten ist, in Behälter, insbesondere Vials, Spritzen, usw.,
- eine Verschließvorrichtung zum Verschließen der befüllten Behälter, insbesondere mit einem Deckel,
- eine Einpackvorrichtung zum Einpacken der befüllten Behälter, und
- eine Abführvorrichtung zum Abtransportieren der befüllten Behälter.

Die Fig. 14A, 14B, 15 und 16 zeigen eine Ausführungsform einer Ausklappvorrichtung 60". Die Ausklappvorrichtung 60" ist dazu ausgebildet, einen eingeklappten Verpackungsabschnitt 16 einer Verpackung 12 auszuklappen. Ein Objekt 14 ist in der Verpackung 12 eingepackt. Die Ausklappvorrichtung 60" weist eine Transporteinrichtung 18, eine Hebeeinrichtung 62 und eine Anschlageinrichtung 92 auf.

Die Transporteinrichtung 18 ist dazu ausgebildet, das Objekt 14 in einer Transportrichtung 20 zu transportieren. Die Verpackung 12 weist bezüglich der Transportrichtung 20 eine stromaufwärtige Stirnseite 28' und eine stromabwärtige Stirnseite 28" auf. Des Weiteren weist die Verpackung 12 bezüglich der Transportrichtung 20 vier Längsseiten 30', 30", 30‴ und 30ʺʺ auf. Eine der Transporteinrichtung 18 zugewandte Längsseite 30' ist dabei der Transporteinrichtung zugewandt und ist zumindest teilweise in Kontakt mit der Transporteinrichtung 18. Die Verpackung 12 liegt demnach mit der der Transporteinrichtung 18 zugewandten Längsseite 30' auf der Transporteinrichtung 18 auf. Eine obere Längsseite 30‴ ist von der Transporteinrichtung 18 abgewandt. Zwei seitliche Längsseiten 30" und 30ʺʺ sind seitlich von der Transporteinrichtung 18 angeordnet und stehen im Wesentlichen senkrecht auf der Transporteinrichtung 18.

Der Verpackungsabschnitt 16 ist mit dem Rest der Verpackung 12 an der stromabwärtigen Stirnseite 28" der Verpackung 12 verbunden. Der Verpackungsabschnitt 16 erstreckt sich zunächst entlang der stromabwärtigen Stirnseite 28" in Richtung der der Transporteinrichtung 18 zugewandten Längsseite 30' der Verpackung 12 und weiter teilweise entlang der der Transporteinrichtung 18 zugewandten Längsseite 30' der Verpackung 12. Der Verpackungsabschnitt 16 ist somit teilweise zwischen der der Transporteinrichtung 18 zugewandten Längsseite 30' der Verpackung 12 und der Transporteinrichtung 18 angeordnet. Somit ist der Verpackungsabschnitt 16 zunächst zwischen der Transporteinrichtung 18 und der der Transporteinrichtung 18 zugewandten Längsseite 30' der Verpackung 12 eingeklappt.

Alternativ kann sich der Verpackungsabschnitt 16 zunächst entlang der stromabwärtigen Stirnseite 28" in Richtung der der Transporteinrichtung 18 abgewandten Längsseite 30‴ der Verpackung 12 und weiter teilweise entlang der der Transporteinrichtung 18 abgewandten Längsseite 30‴ der Verpackung 12 erstrecken. Der Verpackungsabschnitt 16 ist somit auf die der Transporteinrichtung 18 abgewandte Längsseite 30‴ der Verpackung 12 eingeklappt.

Die Transporteinrichtung 18 weist eine Transportebene 38 auf, auf der das Objekt 14 und die Verpackung 12 transportiert werden. Die Transporteinrichtung 18 weist des Weiteren Aussparungen 40 an den beiden Rändern der Transportebene 38 auf, sodass die Verpackung 12 und das Objekt 14 lediglich in einem mittleren Bereich auf der Transporteinrichtung 18 und der Transportebene 38 aufliegen.

Die Hebeeinrichtung 62 ist dazu ausgebildet, das Objekt 14 mit der Verpackung 12 anzuheben. Die Hebeeinrichtung 62 weist dazu einen Vertikalantrieb 76 zum vertikalen Bewegen des Objekts senkrecht zu der Transportebene 38 auf. In der dargestellten Ausführungsform weist die Hebeeinrichtung 62 des Weiteren eine Klemmeinrichtung 74 auf, die dazu ausgebildet ist, die Verpackung 12 und das Objekt 14 zwischen sich einzuklemmen. Die Klemmeinrichtung 74 weist dazu Hebeelemente 78', 78" und ein Anschlagelement 80 auf. Die Hebeelemente 78', 78" sind so angeordnet, dass sie bei einer vertikalen Bewegung senkrecht zu der Transportebene 78 durch die beiden Aussparungen 40 der Transportebene 38 hindurchbewegt werden. Die Hebeelemente 78', 78" weisen eine Auflagefläche 82 auf, die in Kontakt mit der der Transporteinrichtung 18 zugewandten Längsseite 30' der Verpackung 12 kommen. Dabei kommt die Auflagefläche 82 insbesondere in einem stromaufwärtigen Bereich der der Transporteinrichtung 18 zugewandten Längsseite 30' in Anlage an die der Transporteinrichtung 18 zugewandte Längsseite 30'. Der Vertikalantrieb 76 ist dazu ausgebildet, die Hebeelemente 78', 78" senkrecht zu der Transportebene 38 zu bewegen. Damit ist das Objekt 14 mit der Verpackung 12 senkrecht zu der Transportebene 38 bewegbar. Das Anschlagelement 80 weist eine Anlagefläche 84 auf, an die die Verpackung 12 mit der der Transporteinrichtung 18 abgewandten Längsseite 30‴ bei dem Klemmen in Anlage kommt. Dabei kommt die Anlagefläche 84 insbesondere in einem stromaufwärtigen Bereich der der Transporteinrichtung 18 abgewandten Längsseite 30‴ in Anlage an die der Transporteinrichtung 18 abgewandte Längsseite 30'". Dadurch werden die Verpackung 12 und das Objekt 14 zwischen den Hebeelementen 78', 78" und dem Anschlagelement 80 gehalten. Die Hebeeinrichtung 62 weist des Weiteren einen Rahmen 86 auf, der das Anschlagelement 80 beinhaltet und das Anschlagelement 80 mit den restlichen Komponenten der Hebeeinrichtung 62 verbindet, die größtenteils auf der der Verpackung 12 abgewandten Seite der Transporteinrichtung 18 angeordnet sind. Der Rahmen 86 weist ausgehend von der Transportebene 38 eine Höhe 87' auf, die größer ist als eine Höhe 13' der Verpackung 12. Dadurch kann vermieden werden, dass die Verpackung 12 bei dem Transportieren auf der Transportebene 38 mit dem Anschlagelement 80 in Berührung kommt, insbesondere daran schleift oder hängen bleibt. Ein Kontakt von Verpackung 12 und Anschlagelement 80 kann erst dann erfolgen, wenn die Verpackung 12 mit den Hebeelementen 78', 78" vertikal von der Transportebene 38 weg bewegt wird und in Anlage an das Anschlagelement 80 kommt. Der Rahmen 86 weist des Weiteren eine Breite 87" auf, die größer ist als eine Breite 13" der Verpackung 12 und größer ist als eine Breite 19 der Transporteinrichtung 18. Dadurch kann vermieden werden, dass die Verpackung 12 bei dem Transportieren seitlich mit dem Rahmen 86 in Kontakt kommt, insbesondere daran schleift oder hängen bleibt.

Die Anschlageinrichtung 92 ist dazu ausgebildet, einen Anschlag für den Verpackungsabschnitt 16 zu bilden. Die Anschlageinrichtung 92 weist dazu zwei Rollen 94', 94" auf, wobei eine erste Rolle 94' der Rollen 94', 94" auf der der Transporteinrichtung 18 zugewandten Längsseite 30' der Verpackung 12 und eine zweite Rolle 94" der Rollen 94', 94" auf der der Transporteinrichtung 18 abgewandten Längsseite 30‴ der Verpackung 12 angeordnet ist. Je nach dem auf welcher der Längsseiten der Verpackungsabschnitt angeordnet ist, bildet entweder die erste oder die zweite Rolle 94', 94" einen Anschlag für den eingeklappten Verpackungsabschnitt 16. Die Anschlageinrichtung 92 weist des weiteren eine Rollentranslation-Antriebseinrichtung 96 auf, die die Rollen 94', 94" relativ zueinander und senkrecht zu der Transportrichtung 20 bewegen kann.

Alternativ kann die Anschlageinrichtung 92 nur eine Rolle 94 aufweisen. Die Rolle 94 ist auf der Längsseite 30', 30‴ angeordnet, auf der der Verpackungsabschnitt 16 eingeklappt ist.

Fig. 17 zeigt eine weitere Ausführungsform eines Verfahrens 180" zum Ausklappen eines Verpackungsteils 16 einer Verpackung 12, insbesondere eines Beutels, für ein Objekt 14, insbesondere ein pharmazeutisches oder kosmetisches Objekt. Die Ausklappvorrichtung 60', die in Fig. 14A bis 16 beschrieben ist, ist insbesondere dazu geeignet, das Verfahren 180" zum Ausklappen auszuführen. Das Objekt 14 wird dabei auf einer Transporteinrichtung 18 in einer Transportrichtung 20 transportiert.

Der Verpackungsabschnitt 16 kann zunächst zwischen der Transporteinrichtung 18 und der Verpackung 12, insbesondere einer der Transporteinrichtung 18 zugewandten Längsseite 30' der Verpackung 12, eingeklappt sein. Alternativ kann der Verpackungsabschnitt 16 zunächst auch auf die der Transporteinrichtung 18 abgewandte Längsseite 30‴ der Verpackung 12 eingeklappt sein Die einzelnen Verfahrensschritte werden im Folgenden genauer beschrieben.

In einem ersten Schritt 182 wird das Objekt 14 von der Transporteinrichtung 18 durch eine Hebeeinrichtung 62 angehoben. Die Hebeeinrichtung 62 kann dabei auf der der Transporteinrichtung 18 abgewandten Seite der Verpackung ein Anschlagelement 80 aufweisen, gegen das die Verpackung 12 und das Objekt 14 bei dem Anheben 182 des Objekts 14 gedrückt wird. Die Hebeeinrichtung 62 ist dadurch insbesondere ausgebildet, um die Verpackung 12 und das Objekt 14 anzuheben und zu halten.

Vorzugsweise hält in dem Schritt des Anhebens 182 die Hebeeinrichtung 62 die Verpackung 12 an mindestens einer Seitenfläche 30', 30", 30'", 30"".

Alternativ oder zusätzlich kann in dem ersten Schritt 182 auch die Hebeeinrichtung 62 die Transporteinrichtung 18, insbesondere die Transportebene 38 der Transporteinrichtung 18, zumindest in dem Auflagebereich der Verpackung 12 auf der Transportebene 38 anheben.

In einem zweiten Schritt 188 werden die Hebeeinrichtung 62 und die Anschlageinrichtung 92 parallel zu der Transportrichtung 20 derart relativ zueinander bewegt, dass die Verpackung 12 zumindest abschnittsweise an der Anschlageinrichtung 92 angeordnet wird, wobei eine Rolle 94 der Anschlageinrichtung 92 an einer Längsseite 30', 30‴ der Verpackung 12 angeordnet wird, um einen Anschlag für den Verpackungsabschnitts 16 zu bilden.

Vorzugsweise wird die Rolle 94 vor dem Schritt des Bewegens 188 so angeordnet, dass die Verpackung 12 die Rolle 94 zumindest teilweise passieren kann.

Vorzugsweise wird die Rolle 94 vor dem Schritt des Bewegens 188 so angeordnet, dass die Rolle 94 nach dem relativen Bewegen 188 an der Längsseite der Verpackung 12 anliegt, an der der Verpackungsabschnitt 16 eingeklappt ist und einen Anschlag für den eingeklappten Verpackungsabschnitt 16 bildet.

Alternativ kann die Rolle auch so angeordnet werden, dass die Rolle 94 nach dem relativen Bewegen 188 auf der Seite der Verpackung 12 angeordnet ist, an der der Verpackungsabschnitt 16 eingeklappt ist und nicht mit der Verpackung 12 in Kontakt ist. Die Anschlageinrichtung 92 kann eine Antriebseinrichtung aufweisen, die die Rolle 94 senkrecht zu der Transportrichtung 20 bewegt und die Rolle 94 in Kontakt mit der Verpackung befördert und dann einen Anschlag für den eingeklappten Verpackungsabschnitt 16 bildet.

Zusätzlich oder alternativ kann die Anschlageinrichtung 92 zwei Rollen 94', 94" aufweisen, wobei eine erste Rolle 94' der Rollen 94', 94" auf der der Transporteinrichtung 18 zugewandten Längsseite 30' der Verpackung 12 und eine zweite Rolle 94" der Rollen 94', 94" auf der der Transporteinrichtung 18 abgewandten Längsseite 30‴ der Verpackung 12 angeordnet ist.

In diesem Fall werden die Rollen 94', 94" vor dem Schritt des Bewegens 188 so angeordnet, dass der Abstand zwischen den Rollen 94', 94" so groß ist, dass die Verpackung 12 durch die Rollen 94', 94" relativ hindurchbewegt werden kann. Die Rolle der Rollen 94', 94" die auf der Längsseite angeordnet ist, auf die der Verpackungsabschnitt 16 eingeklappt ist, wird so angeordnet, dass sie einen Anschlag für den Verpackungsabschnitt 16 bildet

In einem dritten Schritt 190 werden die Hebeeinrichtung 62 und die Anschlageinrichtung 92 parallel zu der Transportrichtung 20 derart relativ zueinander bewegt, dass der eingeklappte Verpackungsabschnitt 16 ausgeklappt wird. Der eingeklappte Verpackungsteil 16 wird dabei mittels der Rolle entlang der Längsseite, auf der der Verpackungsabschnitt angeordnet ist, geschoben und dadurch ausgeklappt.

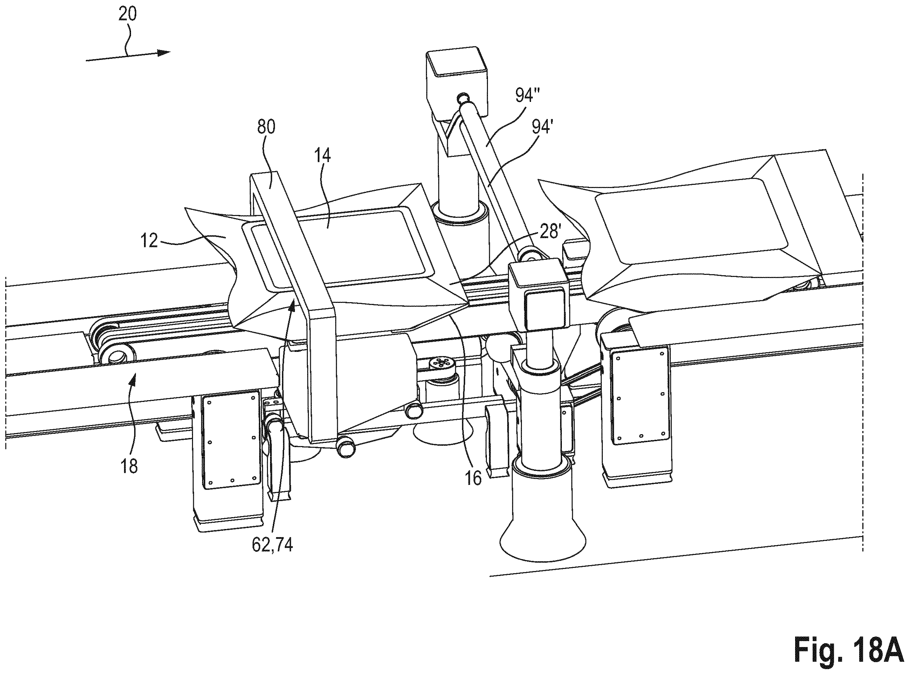

Die Fig. 18A bis 18C zeigen eine isometrische Darstellung der einzelnen Verfahrensschritte des Verfahrens 180" zum Ausklappen des Verpackungsabschnittes 16, das in Fig. 17 beschrieben ist.

Fig. 18A zeigt den Schritt des Anhebens 182, in dem die Hebeeinrichtung 62 auf der der Transporteinrichtung 18 zugewandten Seite des Objekts 14 angeordnet ist und durch eine Bewegung senkrecht zu der Transportebene 38 dazu ausgebildet ist, das Objekt 14 und die Verpackung 12 anzuheben. In einer vorteilhaften Ausgestaltung wird dabei die der Transporteinrichtung 18 abgewandten Längsseite 30‴ gegen ein Anschlagelement 80 gedrückt. Das Anschlagelement 80 kommt dabei mit einem stromaufwärtigen Bereich der der Transporteinrichtung 18 abgewandten Längsseite 30‴ in Kontakt. Dadurch, dass die Hebeeinrichtung 64 das Objekt 14 und die Verpackung 12 gegen das Anschlagelement 80 drückt, wird das Objekt 14 und die Verpackung 12 dadurch geklemmt und gehalten.

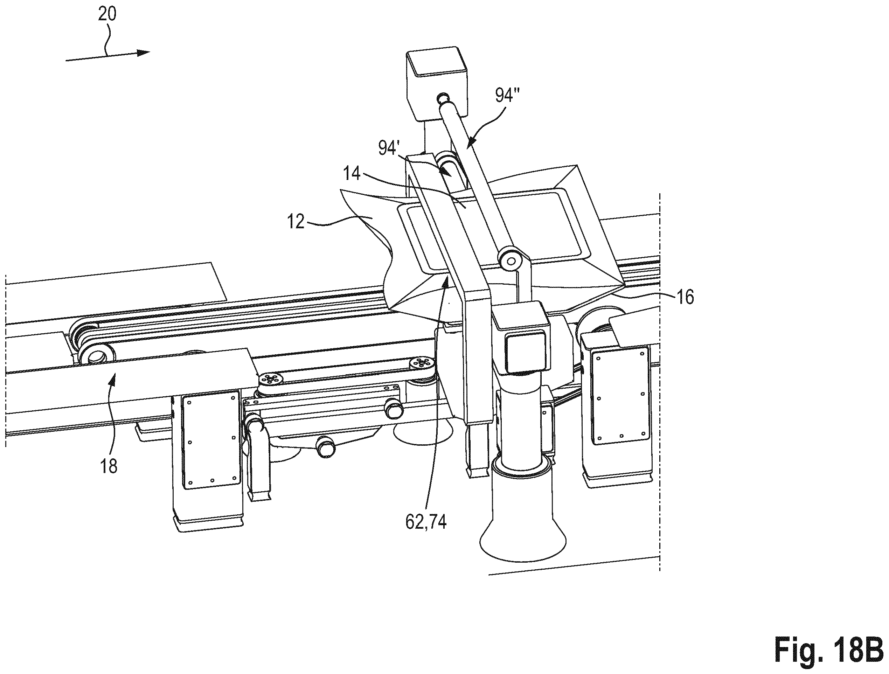

Fig. 18B zeigt eine isometrische Darstellung des Schrittes des ersten relativen Bewegens 188, in dem das Objekt 14 und die Verpackung 12 zwischen den Rollen 94', 94" soweit hindurchbewegt wird, bis die Rollen 94', 94" stromaufwärts von dem Verpackungsabschnitt 16 angeordnet sind. Das Objekt wird dabei mittels der Hebeeinrichtung stromabwärts in Transportrichtung 20 bewegt. Vor diesem Schritt werden die Rollen 94', 94" soweit voneinander beabstandet, dass die Verpackung 12 zwischen den Rollen 94', 94" hindurchgeführt werden kann. Nach dem Schritt des relativen Bewegens 188 sind die Rollen 94', 94"stromabwärts von dem Verpackungsabschnitt 16 in Anlage an der Verpackung 12, wobei die erste Rolle 94' an der der Transporteinrichtung zugewandten Längsseite 30' und die zweite Rolle 94" an der der Transporteinrichtung abgewandten Längsseite 30‴ anliegen. Die Rolle 94' bildet einen Anschlag für den Verpackungsabschnitt 16.

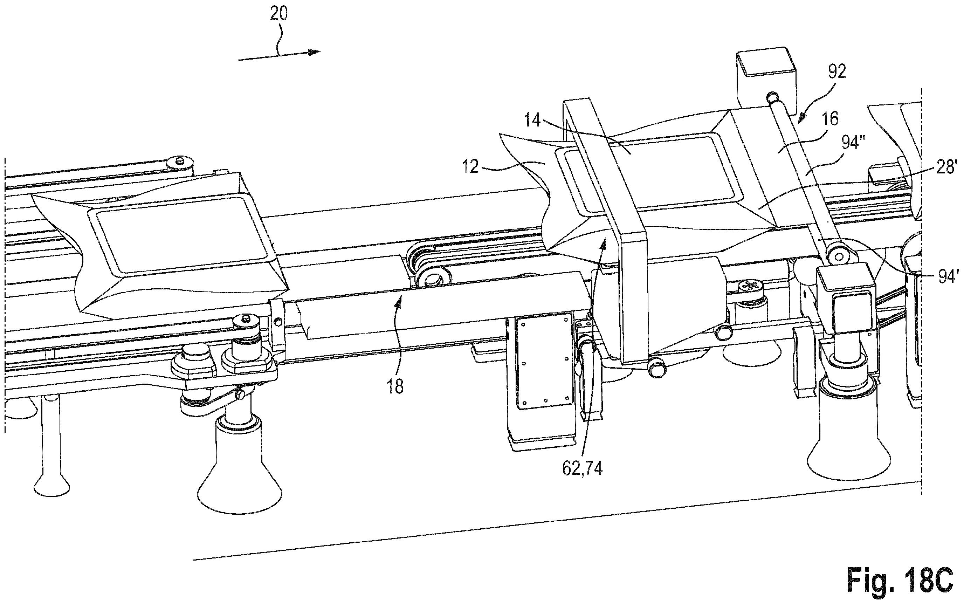

Fig. 18C zeigt eine isometrische Darstellung des Schrittes des zweiten relativen Bewegens 190, in dem das Objekt 14 und die Verpackung 12 so parallel zu der Transportrichtung 20 bewegt werden, dass der Verpackungsabschnitt 16 gegen die Rolle 94" bewegt wird, an der Rolle 94" in Anlage kommt und durch das weiterbewegen des Objekts 14 und der Verpackung 12 in diese Richtung ausgeklappt wird. Das Objekt wird dazu, im Beispiel der Figur 18C, mittels der Hebeeinrichtung stromaufwärts entgegengesetzt zu der Transportrichtung 20 bewegt. Nach dem Aufklappen können optional die Rollen 94', 94" so relativ zueinander bewegt werden, dass sie den ausgeklappten Verpackungsabschnitt klemmen. Dann kann der Verpackungsabschnitt 16 analog zu den Ausführungsformen der Streckvorrichtung 10 und dem Verfahren 160 zum Strecken aus den Figuren 1A bis 5D gestreckt werden. Insbesondere kann vorgesehen sein, dass die Anschlageinrichtung 92 der Aufklappvorrichtung 60" identisch zu der Halteeinrichtung 24 der Streckvorrichtung 10 ist und die Rollen 94', 94" identisch zu den Rollen 26", 26' sind.

## Patentansprüche

1. Ausklappvorrichtung (60') zum Ausklappen eines eingeklappten Verpackungsabschnitts (16) einer Verpackung (12), insbesondere eines Beutels, für ein Objekt (14), insbesondere ein pharmazeutisches oder kosmetisches Objekt, wobei die Ausklappvorrichtung (60') eine Transporteinrichtung (18) zum Transportieren des Objekts (14) in einer Transportrichtung (20) aufweist, wobei der eingeklappte Verpackungsabschnitt (16) an einer Stirnseite (28', 28") der Verpackung (12) angeordnet ist und sich auf eine der Transporteinrichtung (18) zugewandte oder abgewandte Längsseite (30', 30‴) erstreckt, **dadurch gekennzeichnet, dass** die Ausklappvorrichtung (60') des Weiteren eine Hebeeinrichtung (62) zum Anheben des Objekts (14), eine Halteeinrichtung (64) zum Halten eines dem Verpackungsabschnitt (16) benachbarten Bereichs (66) der Verpackung (12), und eine Halteeinrichtung-Antriebseinrichtung (68) zum Bewegen der Halteeinrichtung (64) in eine von dem Verpackungsabschnitt (16) weg weisende Richtung (70) aufweist, wobei die Halteeinrichtung (64) parallel zu der Transportrichtung (20) bewegbar ist, um den Verpackungsabschnitt (16) auszuklappen, wobei die Halteeinrichtung-Antriebseinrichtung (68) dazu ausgebildet ist, die Halteeinrichtung (62) parallel zu der Transportrichtung (20) zu bewegen.

2. Ausklappvorrichtung (60') nach Anspruch 1, **dadurch gekennzeichnet, dass** die Halteeinrichtung (64) so ausgebildet ist, dass sie die Verpackung (12) an einer der Transporteinrichtung (18) abgewandten oder zugewandten Längsseite (30‴) hält.

3. Ausklappvorrichtung (60') nach Anspruch 1 oder 2, **dadurch gekennzeichnet, dass** die Halteeinrichtung (64) mindestens eine Klemmeinrichtung oder Saugeinrichtung (72) zum Halten der Verpackung (12) aufweist.

4. Ausklappvorrichtung (60') nach einem der Ansprüche 1 bis 3, **dadurch gekennzeichnet, dass** die Halteeinrichtung-Antriebseinrichtung (68) dazu ausgebildet ist, die Halteeinrichtung (62) entgegengesetzt zu der Transportrichtung (20) zu bewegen.

5. Ausklappvorrichtung (60') nach einem der Ansprüche 1 bis 4, **dadurch gekennzeichnet, dass** die Hebeeinrichtung (62) auf der der Verpackung (12) abgewandten Seite der Transporteinrichtung (18) angeordnet ist.

6. Ausklappvorrichtung (60") zum Ausklappen eines eingeklappten Verpackungsabschnitts (16) einer Verpackung (12), insbesondere eines Beutels, für ein Objekt (14), insbesondere ein pharmazeutisches oder kosmetisches Objekt, wobei die Ausklappvorrichtung (60") eine Transporteinrichtung (18) zum Transportieren des Objekts (14) in einer Transportrichtung (20) aufweist, wobei der eingeklappte Verpackungsabschnitt (16) an einer Stirnseite (28', 28") der Verpackung (12) angeordnet ist und sich auf eine der Transporteinrichtung (18) zugewandte oder abgewandte Längsseite (30', 30‴) erstreckt, **dadurch gekennzeichnet, dass** die Ausklappvorrichtung (60") des Weiteren eine Hebeeinrichtung (62) zum Anheben des Objekts (14) und eine Anschlageinrichtung (92) aufweist, wobei die Anschlageinrichtung (92) mindestens eine senkrecht zu der Transportrichtung (20) angeordnete Rolle (94) aufweist, die auf der der Transporteinrichtung (18) abgewandten oder zugewandten Längsseite (30', 30‴) der Verpackung (12) angeordnet ist und einen Anschlag für den eingeklappten Verpackungsabschnitt (16) bildet, und wobei die Hebeeinrichtung (62) und/oder die Anschlageinrichtung (92) parallel zu der Transportrichtung (20) bewegbar ausgebildet sind, um das Objekt (14) und die Anschlageinrichtung (92) relativ zueinander zu bewegen.

7. Ausklappvorrichtung (60") nach Anspruch 6, **dadurch gekennzeichnet, dass** die Anschlagseinrichtung genau zwei Rollen (94', 94") aufweist, wobei eine erste Rolle (94') der zwei Rollen (94', 94") auf der der Transporteinrichtung (18) zugewandten Längsseite (30') der Verpackung (12) und eine zweite Rolle (94") der zwei Rollen (94', 94") auf der der Transporteinrichtung (18) abgewandten Längsseite (30‴) der Verpackung (12) angeordnet ist.

8. Ausklappvorrichtung (60") nach Anspruch 6 oder 7, **dadurch gekennzeichnet, dass** die Hebeeinrichtung (62) einen Horizontalantrieb (98) aufweist, der dazu ausgebildet ist, die Hebeeinrichtung (62) parallel zu der Transportrichtung (20), insbesondere entgegengesetzt zu der Transportrichtung (20), zu bewegen.

9. Entpackungssystem (100) mit einer Ausklappvorrichtung (60) nach einem der Ansprüche 1 bis 8 und einer Streckvorrichtung (10) zum Strecken einer Verpackung (12), insbesondere eines Beutels, für ein Objekt (14), insbesondere ein pharmazeutisches oder kosmetisches Objekt, wobei die Verpackung (12) einen abstehenden Verpackungsabschnitt (16) aufweist, wobei die Streckvorrichtung (10) eine Transporteinrichtung (18) zum Transportieren des Objekts (14) in einer Transportrichtung (20), eine Halteeinrichtung (22) zum Halten des abstehenden Verpackungsabschnitts (16), und eine Bewegungseinrichtung (24) zum Bewegen des Objektes (14) aufweist, **dadurch gekennzeichnet, dass** die Halteeinrichtung (22) mindestens zwei senkrecht zu der Transportrichtung (18) angeordnete Rollen (26', 26") aufweist, die dazu ausgebildet sind, den abstehenden Verpackungsabschnitt (16) zwischen sich zu halten, und wobei die Bewegungseinrichtung (24) und/oder die Halteeinrichtung (22) parallel zu der Transportrichtung (20) bewegbar ausgebildet sind, um das Objekt (14) und die Halteeinrichtung (22) voneinander weg zu bewegen.

10. Füllanlage (140) mit einem Entpackungssystem (100) nach Anspruch 9.

11. Verfahren (180') zum Ausklappen eines eingeklappten Verpackungsabschnitts (16) einer Verpackung (12), insbesondere eines Beutels, für ein Objekt (14), insbesondere ein pharmazeutisches oder kosmetisches Objekt, wobei das Objekt (14) auf einer Transporteinrichtung (18) in einer Transportrichtung (20) transportiert wird, wobei der eingeklappte Verpackungsabschnitt (16) an einer Stirnseite (28', 28") der Verpackung (12) angeordnet ist und sich auf eine der Transporteinrichtung (18) zugewandte oder abgewandte Längsseite (30', 30‴) erstreckt, **dadurch gekennzeichnet, dass** das Verfahren (180') die folgenden Verfahrensschritte aufweist:
- Anheben (182) des Objekts (14) durch eine Hebeeinrichtung (62);
- Halten (184) eines dem Verpackungsabschnitt (16) benachbarten Bereichs (66) der Verpackung (12) durch eine Halteeinrichtung (64); und
- Bewegen (186) der Halteeinrichtung (64) in eine von dem Verpackungsabschnitt (16) weg weisende Richtung (70), wobei die Halteeinrichtung (64) parallel zu der Transportrichtung (20) bewegt wird, wodurch der Verpackungsabschnitt (16) ausgeklappt wird.

12. Verfahren (180") zum Ausklappen eines eingeklappten Verpackungsabschnitts (16) einer Verpackung (12), insbesondere eines Beutels, für ein Objekt (14), insbesondere ein pharmazeutisches oder kosmetisches Objekt, wobei das Objekt (14) auf einer Transporteinrichtung (18) in einer Transportrichtung (20) transportiert wird, wobei der eingeklappte Verpackungsabschnitt (16) an einer Stirnseite (28', 28") der Verpackung (12) angeordnet ist und sich auf eine der Transporteinrichtung (18) zugewandte oder abgewandte Längsseite (30', 30‴) erstreckt, **dadurch gekennzeichnet, dass** das Verfahren (180") die folgenden Verfahrensschritte aufweist:
- Anheben (182) des Objekts (14) durch eine Hebeeinrichtung (62);
- erstes relatives Bewegen (188) der Hebeeinrichtung (62) und einer Anschlageinrichtung (92) parallel zu der Transportrichtung (20) derart zueinander, dass die Verpackung (12) zumindest abschnittsweise an der Anschlageinrichtung (92) angeordnet wird, wobei eine Rolle (94) der Anschlageinrichtung (92) an die der Transporteinrichtung (18) abgewandte oder zugewandte Längsseite (30', 30‴) der Verpackung (12) angeordnet wird, um einen Anschlag für den Verpackungsabschnitts (16) zu bilden; und
- zweites Relatives Bewegen (190) der Hebeeinrichtung (62) und der Anschlageinrichtung (92) parallel zu der Transportrichtung (20) derart zueinander, dass der eingeklappte Verpackungsabschnitt (16) ausgeklappt wird.

13. Verfahren (200', 200") zum Entpacken eines Objekts (14), insbesondere eines pharmazeutischen oder kosmetischen Objekts, aus einer Verpackung (12), insbesondere einem Beutel, wobei das Objekt (14) auf einer Transporteinrichtung (18) in einer Transportrichtung (20) transportiert wird, **dadurch gekennzeichnet, dass** das Verfahren (200) die folgenden Verfahrensschritte aufweist:
- Ausklappen (202) eines eingeklappten Verpackungsabschnitts (16) der Verpackung (12) mittels des Verfahrens nach Anspruch 11 oder 12;
- Strecken (204) des abstehenden Verpackungsabschnitts (16) mittels der Schritte des Haltens (162) des abstehenden Verpackungsabschnitts (16) durch eine Halteeinrichtung (22), wobei die Halteeinrichtung (22) mindestens zwei senkrecht zu der Transportrichtung (20) angeordnete Rollen (26', 26") aufweist, wobei der abstehende Verpackungsabschnitt (16) zwischen den mindestens zwei Rollen (26', 26") gehalten wird, und des Bewegens (164) des Objekts (14) und/oder der Halteeinrichtung (22) parallel zu der Transportrichtung (20), um das Objekt (14) und die Halteeinrichtung;
- Vollständiges Abtrennen (206) des abstehenden Verpackungsabschnitts (16); und
- Entnehmen (208) des Objekts (14) aus der Verpackung (12).

## Claims

1. Folding-out device (60') for folding outwards a folded packaging portion (16) of an item of packaging (12), in particular a pouch, for an object (14), in particular a pharmaceutical or cosmetic object, wherein the folding-out device (60') has a transportation installation (18) for transporting the object (14) in a transportation direction (20), wherein the folded packaging portion (16) is arranged on an end side (28', 28") of the packaging (12) and extends onto a longitudinal side (30', 30‴) facing to or facing away from the transport device (18), **characterized in that** the folding-out device (60') further includes a lifting installation (62) for raising the object (14), a holding installation (64) for holding a region (66) of the item of packaging (12) that is adjacent to the packaging portion (16), and a holding-installation drive installation (68) for moving the holding installation (64) in a direction (70) that points away from the packaging portion (16), wherein the holding installation (64) is movable parallel with the transportation direction (20) in order for the packaging portion (16) to be folded outwards, wherein the holding-installation drive installation (68) is configured for moving the holding installation (62) parallel with the transportation direction (20).

2. Folding-out device (60') according to Claim 1, **characterized in that** the holding installation (64) is configured such that the latter holds the item of packaging (12) on a longitudinal side (30‴) that faces away from or faces the transportation installation (18).

3. Folding-out device (60') according to Claim 1 to 2, **characterized in that** the holding installation (64) has at least one clamping installation or suction installation (72) for holding the item of packaging (12).

4. Folding-out device (60') according to one of Claims 1 to 3, **characterized in that** the holding-installation drive installation (68) is configured for moving the holding installation (62) counter to the transportation direction (20).

5. Folding-out device (60') according to one of Claims 1 to 4, **characterized in that** the lifting installation (62) is disposed on that side of the transportation installation (18) that faces away from the item of packaging (12).

6. Folding-out device (60") for folding outwards a packaging portion (16) of an item of packaging (12), in particular a pouch, for an object (14), in particular a pharmaceutical or cosmetic object, wherein the folding-out device (60") has a transportation installation (18) for transporting the object (14) in a transportation direction (20), wherein the folded packaging portion (16) is arranged on an end side (28', 28") of the packaging (12) and extends onto a longitudinal side (30', 30‴) facing to or facing away from the transport device (18), and (30', 30‴), **characterized in that** the folding-out device (60") further has a lifting installation (62) for raising the object (14), and a detent installation (92), wherein the detent installation (92) has at least one roller (94) which is disposed so as to be perpendicular to the transportation direction (20) and which is disposed on that side of the item of packaging (12) that faces away from or faces the transportation installation (18) and forms a detent for the folded-in packaging portion (16), and wherein the lifting installation (62) and/or the detent installation (92) are configured so as to be movable parallel with the transportation direction (20) in order for the object (14) and the detent installation (92) to be moved relative to one another.

7. Folding-out device (60") according to Claim 6, **characterized in that** the detent installation has exactly two rollers (94', 94"), wherein a first roller (94') of the two rollers (94', 94") is disposed on the longitudinal side (30') of the item of packaging (12) that faces the transportation installation (18), and a second roller (94") of the two rollers (94', 94") is disposed on the longitudinal side (30‴) of the item of packaging (12) that faces away from the transportation installation (18).

8. Folding-out device (60") according to Claim 6 or 7, **characterized in that** the lifting installation (62) has a horizontal drive (98) which is configured for moving the lifting installation (62) parallel with the transportation direction (20), in particular counter to the transportation direction (20).

9. Unpacking system (100) having a folding-out device (60) according to one of Claims 1 to 8 and a stretching device (10) for stretching an item of packaging (12), in particular a pouch, for an object (14), in particular a pharmaceutical or cosmetic object, wherein the item of packaging (12) has a projecting packaging portion (16), wherein the stretching device (10) has a transportation installation (18) for transporting the object (14) in a transportation direction (20), a holding installation (22) for holding the projecting packaging portion (16), and a motion installation (24) for moving the object (14), **characterized in that** the holding installation (22) has at least two rollers (26', 26") which are disposed so as to be perpendicular to the transportation direction (18) and which are configured for holding the projecting packaging portion (16) therebetween, and wherein the motion installation (24) and/or the holding installation (22) are/is configured so as to be movable parallel with the transportation direction (20) in order for the object (14) and the holding installation (22) to be moved away from one another.

10. Filling system (140) having an unpacking system (100) according to Claim 9.

11. Method (180') for folding outwards a packaging portion (16) of an item of packaging (12), in particular a pouch, for an object (14), in particular a pharmaceutical or cosmetic object, wherein the object (14) on a transportation installation (18) is transported in a transportation direction (20), wherein the folded packaging portion (16) is arranged on an end side (28', 28") of the packaging (12) and extends onto a longitudinal side (30', 30‴) facing to or facing away from the transport device (18), **characterized in that** the method (180') comprises the following method steps:
- Raising (182) the object (14) by a lifting installation (62);
- Holding (184) a region (66) of the item of packaging (12) that is adjacent to the packaging portion (16) by a holding installation (64); and
- Moving (186) the holding installation (64) in a direction (70) that points away from the packaging portion (16), wherein the holding installation (64) is movable parallel with the transportation direction (20) in order for the packaging portion (16) to be folded outwards.

12. Method (180") for folding outwards a packaging portion (16) of an item of packaging (12), in particular a pouch, for an object (14), in particular a pharmaceutical or cosmetic object, wherein the object (14) on a transportation installation (18) is transported in a transportation direction (20), wherein the folded packaging portion (16) is arranged on an end side (28', 28") of the packaging (12) and extends onto a longitudinal side (30', 30‴) facing to or facing away from the transport device (18), **characterized in that** the method (180") comprises the following method steps:
- Raising (182) the object (14) by a lifting installation (62);
- first relative Moving (188) of the lifting installation (62) and a detent installation (92) parallel with the transportation direction (20) in such a manner to each other that the item of packaging (16) at least in portions is disposed on the detent installation (92), wherein a roller (94) of the detent installation (92) is disposed on a longitudinal side (30', 30", 30"', 30"") of the item of packaging (12) in order for a detent for the packaging portion (16) to be formed; and
- second relative Moving (190) of the lifting installation (62) relative to the detent installation (92) parallel with the transportation direction (20) in such a manner that the folded-in packaging portion (16) is folded outwards.

13. Method (200', 200") for unpacking an object (14), in particular a pharmaceutical or cosmetic object, from an item of packaging (12), in particular a pouch, wherein the object (14) on a transportation installation (18) is transported in a transportation direction (20), **characterized in that** the method (200) comprises the following method steps:
- Folding outwards (202) the packaging portion (16) by means of the method according to Claim 11 or 12;
- Stretching (204) the projecting packaging portion (16) by means of the steps of holding (162) the projecting packaging portion (16) by a holding installation (22), wherein the holding installation (22) has at least two rollers (26', 26") which are disposed so as to be perpendicular to the transportation direction (20), wherein the projecting packaging portion (16) is held between the at least two rollers (26', 26"); and moving (164) the object (14) and/or the holding installation (22) parallel with the transportation direction (20) in order for the object (14) and the holding installation (22);
- Completely severing (206) the projecting packaging portion (16); and
- Retrieving (208) the object (14) from the item of packaging (12).

## Revendications

1. Dispositif de dépliage (60') pour déplier une partie d'emballage (16) repliée d'un emballage (12), en particulier d'un sachet, pour un objet (14), en particulier un objet pharmaceutique ou cosmétique, le dispositif de dépliage (60') présentant un dispositif de transport (18) pour transporter l'objet (14) dans une direction de transport (20), la partie d'emballage (16) repliée étant disposée sur un côté frontal (28', 28") de l'emballage (12) et s'étendant sur un côté longitudinal (30', 30‴) tourné vers ou à l'opposé du dispositif de transport (18), **caractérisé en ce que** le dispositif de dépliage (60') comprend en outre un moyen de levage (62) pour soulever l'objet (14), un moyen de retenue (64) pour retenir une zone (66) de l'emballage (12) adjacente à la partie d'emballage (16), et un moyen (68) d'entraînement de moyen de retenue pour déplacer le moyen de retenue (64) dans une direction (70) s'éloignant de la partie d'emballage (16), le moyen de maintien (64) étant mobile parallèlement à la direction de transport (20) de façon à déplier la partie d'emballage (16), le moyen d'entraînement de moyen de maintien (68) étant adapté pour déplacer le moyen de maintien (62) parallèlement à la direction de transport (20).

2. Dispositif de dépliage (60') selon la revendication 1, **caractérisé en ce que** le dispositif de maintien (64) est conçu de manière à maintenir l'emballage (12) sur un côté longitudinal (30‴) opposé ou tourné vers le dispositif de transport (18).

3. Dispositif de dépliage (60') selon la revendication 1 ou la revendication 2, **caractérisé en ce que** le dispositif de maintien (64) présente au moins un dispositif de serrage ou un dispositif d'aspiration (72) pour maintenir l'emballage (12).

4. Dispositif de dépliage (60') selon l'une des revendications 1 à 3, **caractérisé en ce que** le moyen (68) d'entraînement du moyen de retenue est configuré pour déplacer le dispositif de maintien (62) en sens inverse de la direction de transport (20).

5. Dispositif de dépliage (60') selon l'une des revendications 1 à 4, **caractérisé en ce que** le dispositif de levage (62) est disposé sur le côté du dispositif de transport (18) opposé à l'emballage (12).

6. Dispositif de dépliage (60") pour déplier une partie d'emballage (16) repliée d'un emballage (12), notamment d'un sachet, pour un objet (14), notamment un objet pharmaceutique ou cosmétique, le dispositif de dépliage (60") présentant un dispositif de transport (18) pour transporter l'objet (14) dans une direction de transport (20), la partie d'emballage (16) repliée étant disposée sur un côté frontal (28', 28") de l'emballage (12) et s'étendant sur un côté longitudinal (30', 30‴) tourné vers ou à l'opposé du dispositif de transport (18), **caractérisé en ce que** le dispositif de dépliage (60") comporte en outre un dispositif de levage (62) pour soulever l'objet (14) et un dispositif de butée (92), le dispositif de butée (92) comportant au moins un rouleau (94) disposé perpendiculairement à la direction de transport (20), qui est placé sur le côté longitudinal (30', 30‴), à l'opposé du dispositif de transport (18) ou tourné vers celui-ci, de l'emballage (12) et forme une butée pour la partie d'emballage (16) repliée, et dans lequel le dispositif de levage (62) et/ou le dispositif de butée (92) sont conçus de manière mobile parallèlement à la direction de transport (20), afin de déplacer l'objet (14) et le dispositif de butée (92) l'un par rapport à l'autre.

7. Dispositif de dépliage (60") selon la revendication 6, **caractérisé en ce que** le dispositif de butée présente exactement deux rouleaux (94', 94"), un premier rouleau (94') des deux rouleaux (94', 94") étant disposé sur le côté longitudinal (30') de l'emballage (12) tourné vers le dispositif de transport (18) et un deuxième rouleau (94") des deux rouleaux (94', 94") étant disposé sur le côté longitudinal (30'") de l'emballage (12) opposé au dispositif de transport (18).

8. Dispositif de dépliage (60") selon la revendication 6 ou 7, **caractérisé en ce que** le dispositif de levage (62) présente un entraînement horizontal (98) qui est conçu pour déplacer le dispositif de levage (62) parallèlement à la direction de transport (20), en particulier en sens inverse de la direction de transport (20).

9. Système de déconditionnement (100) comprenant un dispositif de dépliage (60) selon l'une des revendications 1 à 8 et un dispositif d'étirage (10) pour étirer un emballage (12), en particulier un sachet, pour un objet (14), en particulier un objet pharmaceutique ou cosmétique, l'emballage (12) présentant une partie d'emballage (16) en saillie, le dispositif d'étirage (10) comprenant un dispositif de transport (18) pour transporter l'objet (14) dans une direction de transport (20), un dispositif de maintien (22) pour maintenir la partie d'emballage (16) en saillie, et un dispositif de déplacement (24) pour déplacer l'objet (14), **caractérisé en ce que** le dispositif de maintien (22) comprend au moins deux rouleaux (26', 26") disposés perpendiculairement à la direction de transport (18), qui sont conçus pour maintenir entre eux la partie d'emballage (16) en saillie, et le dispositif de déplacement (24) et/ou le dispositif de maintien (22) étant conçus de manière mobile parallèlement à la direction de transport (20), afin d'éloigner l'objet (14) et le dispositif de maintien (22) l'un de l'autre.

10. Installation de remplissage (140) avec un système de déconditionnement (100) selon la revendication 9.

11. Procédé (180') pour déplier une partie d'emballage (16) repliée d'un emballage (12), en particulier d'un sachet, pour un objet (14), en particulier un objet pharmaceutique ou cosmétique, l'objet (14) étant transporté sur un dispositif de transport (18) dans une direction de transport (20), la partie d'emballage (16) repliée étant disposée sur un côté frontal (28', 28") de l'emballage (12) et s'étendant sur un côté longitudinal (30', 30'") tourné vers le dispositif de transport (18) ou opposé à celui-ci, **caractérisé en ce que** le procédé (180') présente les étapes de procédé suivantes :
- soulever (182) l'objet (14) par un dispositif de levage (62) ;
- maintenir (184) une zone (66) de l'emballage (12) adjacente à la partie d'emballage (16) par un dispositif de maintien (64) ; et
- déplacer (186) le moyen de maintien (64) dans une direction (70) s'éloignant de la partie d'emballage (16), le moyen de maintien (64) étant déplacé parallèlement à la direction de transport (20), dépliant ainsi la partie d'emballage (16).

12. Procédé (180") pour déplier une partie d'emballage (16) repliée d'un emballage (12), en particulier d'un sachet, pour un objet (14), en particulier un objet pharmaceutique ou cosmétique, l'objet (14) étant transporté sur un dispositif de transport (18) dans une direction de transport (20), la partie d'emballage (16) repliée étant disposée sur un côté frontal (28', 28") de l'emballage (12) et s'étendant sur un côté longitudinal (30', 30'") tourné vers ou à l'opposé du dispositif de transport (18), **caractérisé en ce que** le procédé (180") présente les étapes de procédé suivantes :
- soulever (182) l'objet (14) par un dispositif de levage (62) ;
- premier déplacement relatif (188) du dispositif de levage (62) et d'un dispositif de butée (92) parallèlement à la direction de transport (20) l'un par rapport à l'autre de telle sorte que l'emballage (12) soit disposé au moins par sections sur le dispositif de butée (92), un rouleau (94) du dispositif de butée (92) étant disposé sur le côté longitudinal (30', 30‴) de l'emballage (12) opposé ou tourné vers le dispositif de transport (18) afin de former une butée pour la partie d'emballage (16) ; et
- deuxième déplacement relatif (190) du dispositif de levage (62) et du dispositif de butée (92) parallèlement à la direction de transport (20) l'un par rapport à l'autre, de telle sorte que la partie d'emballage (16) repliée soit dépliée.

13. Procédé (200', 200") pour déballer un objet (14), en particulier un objet pharmaceutique ou cosmétique, d'un emballage (12), en particulier d'un sachet, l'objet (14) étant transporté sur un dispositif de transport (18) dans une direction de transport (20), **caractérisé en ce que** le procédé (200) présente les étapes de procédé suivantes :
- déplier (202) une partie d'emballage (16) repliée de l'emballage (12) au moyen du procédé selon la revendication 11 ou 12 ;
- étirer (204) la partie d'emballage (16) en saillie au moyen de l'étape consistant à maintenir (162) la partie d'emballage (16) en saillie par un dispositif de maintien (22), le dispositif de maintien (22) comprenant au moins deux rouleaux (26', 26") disposés perpendiculairement à la direction de transport (20), la partie d'emballage (16) en saillie étant maintenue entre les au moins deux rouleaux (26', 26"), et le déplacement (164) de l'objet (14) et/ou du dispositif de maintien (22) parallèlement à la direction de transport (20), autour de l'objet (14) et du dispositif de maintien ;
- séparer complètement (206) la partie d'emballage (16) en saillie ; et
- retirer (208) l'objet (14) de l'emballage (12).
